# EUROPEAN PATENT APPLICATION

(11) **EP 3 897 053 A1**
(43) Date of publication of application: **20.10.2021**
(21) Application number: 19908299.1
(22) Date of filing: 20.12.2019
(51) Int. Cl.: H04W 72/04

(54) **METHOD FOR TRANSMITTING UPLINK INFORMATION, AND COMMUNICATION DEVICE**

(30) Priority: 11.01.2019 CN 201910028377
(71) Applicant: Huawei Technologies Co., Ltd., Longgang Shenzhen, Guangdong 518129 (CN)
(72) Inventor: LI, Yuan, Shenzhen, Guangdong 518129 (CN)
(74) Representative: Isarpatent
(86) International application number: PCT/CN2019/126921
(87) International publication number: WO 2020/143428

(57) **Abstract**

This application provides an uplink information transmission method and a communications apparatus. The method includes: determining a first time-frequency resource and a second time-frequency resource on an uplink channel, where the first time-frequency resource is used to send first uplink information, the second time-frequency resource is used to send second uplink information, the first uplink information includes first uplink data information corresponding to a first priority and/or first uplink control information corresponding to the first priority, the second uplink information includes second uplink data information corresponding to a second priority and/or second uplink control information corresponding to the second priority, and the first uplink information and the second uplink information are separately encoded; and sending information on the first time-frequency resource and the second time-frequency resource. In embodiments of this application, a terminal device separately encodes the first uplink information and the second uplink information, and sends the information by using different resources, so that two services with different priorities can be better balanced.

## Description

This application claims priority to Chinese Patent Application No. 201910028377.0, filed with the China National Intellectual Property Administration on January 11, 2019 and entitled "UPLINK INFORMATION TRANSMISSION METHOD AND COMMUNICATIONS APPARATUS", which is incorporated herein by reference in its entirety.

### TECHNICAL FIELD

This application relates to the communications field, and in particular, to an uplink information transmission method and a communications apparatus.

### BACKGROUND

In the future, in requirements of new services based on wireless communications, compared with a conventional mobile broadband (mobile broadband, MBB) service such as video transmission, augmented reality (augmented reality, AR)/virtual reality (virtual reality, VR), the Internet of Vehicles, telemedicine, industrial control, power transmission communications, and the like have higher requirements on a transmission latency and transmission reliability. To better support these low-latency and high-reliability service types, an ultra-reliable low-latency communication (ultra-reliability low-latency communication, URLLC) feature is introduced in new radio (new radio, NR).

A same terminal device may support both a URLLC service and an enhanced mobile broadband (enhanced mobile broadband, eMBB) service, and the two services may be dynamically switched. A network device may indicate, by using downlink control information (downlink control information, DCI), a service type corresponding to a physical downlink shared channel (Physical Downlink Shared Channel, PDSCH) or a physical uplink shared channel (Physical Uplink Shared Channel, PUSCH), or may configure, by using control signaling or dynamically indicate, by using DCI, a channel state information (Channel state information, CSI) resource corresponding to the URLLC service or the eMBB service. Due to dynamic switching between the two services, uplink information (uplink data channels or uplink control information) corresponding to the two services may collide in time domain, for example, uplink control information (Uplink control information, UCI) for eMBB (for example, hybrid automatic repeat request-acknowledgment (Hybrid Automatic Repeat request-Acknowledgment, HARQ-ACK) information and/or CSI and/or scheduling request (Scheduling Request, SR) information corresponding to the eMBB) and UCI for URLLC (for example, HARQ-ACK information and/or CSI and/or SR information corresponding to the URLLC) collide, or UCI for eMBB and a PUSCH corresponding to the URLLC service collide, or UCI for URLLC and a PUSCH corresponding to the eMBB service collide.

When two types of uplink information collide, how to send uplink information becomes an urgent problem to be resolved.

### SUMMARY

This application provides an uplink information transmission method and a communications apparatus, so that two types of information can be sent when the two types of uplink information collide.

According to a first aspect, an uplink information transmission method is provided. The method includes:
determining a first time-frequency resource and a second time-frequency resource on an uplink channel, where the first time-frequency resource is used to send first uplink information, the second time-frequency resource is used to send second uplink information, the first uplink information includes first uplink data information corresponding to a first priority and/or first uplink control information corresponding to the first priority, the second uplink information includes second uplink data information corresponding to a second priority and/or second uplink control information corresponding to the second priority, and the first uplink information and the second uplink information are separately encoded; and
sending information on the first time-frequency resource and the second time-frequency resource.

In this embodiment of this application, a terminal device separately encodes control information or data information corresponding to services with different priorities, and determines priorities of two services to enable a priority of control/service information corresponding to a low-priority service to be lower than a priority of control/service information corresponding to a high-priority service, or enable a time-frequency domain position of control/service information corresponding to a low-priority service to be later than a time-frequency domain position of control/service information corresponding to a high-priority service, to better balance two services with different priorities.

It should be understood that when determining the first time-frequency resource and the second time-frequency resource, the terminal device or a network device may determine the two time-frequency resources together, or may separately determine the two resources. For example, the terminal device or the network device may first determine one time-frequency resource, and then determine the other time-frequency resource. This embodiment of this application is not limited thereto.

It should be understood that, in this embodiment of this application, the first time-frequency resource and the second time-frequency resource may not overlap. In other words, there is no identical resource element RE. The two time-frequency resources may alternatively overlap. In other words, there is at least one identical RE. The at least one identical RE is referred to as a first overlapping time-frequency resource or a second overlapping time-frequency resource. For example, when the second uplink information is punctured by using the first uplink information or the first uplink information is punctured by using the second uplink information, a punctured resource may be referred to as the first overlapping time-frequency resource or the second overlapping time-frequency resource.

Further, there may alternatively be an inclusion relationship between the first time-frequency resource and the second time-frequency resource. For example, the first time-frequency resource includes the second time-frequency resource, or the second time-frequency resource includes the first time-frequency resource. This embodiment of this application is not limited thereto.

When the first time domain resource and the second time domain resource do not overlap, the first time-frequency resource is earlier than the second time-frequency resource in time domain, and/or the first time-frequency resource is lower than the second time domain resource in frequency domain; or
a time interval between a time-domain symbol corresponding to the first time-frequency resource and a demodulation reference signal DMRS symbol of the uplink channel is less than a time interval between a time-domain symbol corresponding to the second time-frequency resource and the DMRS symbol, and/or the first time-frequency resource is lower than the second time-frequency resource in frequency domain.

It should be understood that, in this embodiment of this application, the first priority may correspond to the high-priority service, and the second priority may correspond to the low-priority service. In this embodiment of this application, a solution of how to send uplink information when a first-priority service collides with a second-priority service is mainly described.

For example, the first priority corresponds to a URLLC service, and the second priority corresponds to an eMBB service. For another example, the first uplink data information is data information corresponding to the URLLC service, and the first uplink control information is uplink control information corresponding to the URLLC service. The second uplink control information is uplink control information corresponding to the eMBB service, and the second uplink data information is uplink data information corresponding to the eMBB service.

The first uplink information or the second uplink information in this embodiment of this application may be information before encoding, which is also referred to as information element information or system information (systematic bits). The terminal device may send a part or all of information obtained after the first uplink information or the second uplink information is encoded. In this case, even if the terminal device does not send all the information obtained after the uplink information is encoded, for example, after the information obtained after the uplink information is encoded is mapped to the time-frequency resource, the information obtained after the uplink information is encoded is punctured by using other uplink information on a part of the time-frequency resource, the terminal device actually sends only a part of the information obtained after the uplink information is encoded. However, considering that the network device receives the part of the information obtained after the uplink information is encoded, the network device may still (for example, through decoding) recovers all information that is before the uplink information is encoded (in other words, the network device may potentially obtain, by using the part of the information obtained after the uplink information is encoded, all the information that is before the uplink information is encoded). Therefore, in this case, it may still be considered that the time-frequency resource carries all the uplink information.

Optionally, the first uplink information or the second uplink information in this embodiment of this application may alternatively be encoded information.

Optionally, in this embodiment of this application, that a time-frequency resource carries a part of the uplink information may be understood as that the part of the uplink information is mapped to the time-frequency resource, and the other part of the uplink information is mapped to another time-frequency resource of the uplink channel or mapped to another uplink channel, or the other part of information is not mapped. This embodiment of this application is not limited thereto.

For a piece of uplink information (for example, the first uplink data information, the first uplink control information, the second uplink data information, the second uplink control information, or third uplink control information), that the uplink information is separately encoded uplink information means that the terminal device generates encoded information (for example, CRC bits and/or encoded bits) based on system information bits of the uplink information, to form an encoded information sequence. Further, that the uplink information is separately encoded uplink information means that the terminal device does not generate encoded information based on system information bits other than the uplink information.

It should be understood that, in this embodiment of this application, that the first uplink information and the second uplink information are separately encoded means that the terminal device separately encodes the first uplink information and the second uplink information. After encoding and modulation are completed on the first uplink information and the second uplink information, the first uplink information and the second uplink information are mapped to the uplink channel. Specifically, encoded information (for example, parity bits) corresponding to the first uplink information is determined by using system information bits corresponding to the first uplink information, and is unrelated to system information bits (systematic bits) of the second uplink information, and encoded information (for example, CRC bits or encoded bits parity bits) corresponding to the second uplink information is determined by using the system information bits (systematic bits) corresponding to the second uplink information, and is unrelated to the system information bits of the first uplink information.

Further, all information included in a piece of uplink information (for example, the first uplink data information, the first uplink control information, the second uplink control information, the second uplink data information, or the third uplink control information) is jointly encoded information.

The foregoing joint encoding means that encoded information corresponding to the piece of uplink information is generated by using all system information bits included in the piece of uplink information. If the piece of uplink information includes a plurality of types of information, the terminal device jointly encodes the plurality of types of information included in the piece of uplink information, and a CRC and/or encoded information corresponding to the piece of uplink information is jointly generated by using the plurality of types of information. For example, if the piece of uplink information includes HARQ-ACK information and SR information, the piece of uplink information is information obtained by jointly encoding the two types of information.

In other words, in this embodiment of this application, different uplink information may be separately encoded, and all information in same uplink information is jointly encoded.

With reference to the first aspect, in an implementation of the first aspect, the first uplink data information includes data information that is scheduled or configured to be sent by the terminal device by using first downlink control information, where that the first uplink data information corresponds to the first priority is indicated by meeting one or more of the following conditions: a first bit field in the first downlink control information indicates or configures that the first uplink data information corresponds to the first priority, the first downlink control information is located in first search space, the first downlink control information is located in a first physical downlink control channel PDCCH occasion set, the first downlink control information corresponds to a first downlink control information format DCI format, and the first downlink control information corresponds to a first radio network temporary identifier RNTI; or
the first uplink control information includes uplink control information that is configured or triggered to be sent by the terminal device by using second downlink control information, where that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

With reference to the first aspect, in an implementation of the first aspect, the second uplink control information includes uplink control information that is configured or triggered to be sent by the terminal device by using third downlink control information, where that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI; or
the second uplink data information includes data information that is scheduled or configured to be sent by the terminal device by using fourth downlink control information, where that the second uplink data information corresponds to the second priority is indicated by meeting one or more of the following conditions: a fourth bit field in the fourth downlink control information indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

With reference to the first aspect, in an implementation of the first aspect, the first uplink control information includes one or more of the following information: hybrid automatic repeat request-acknowledgment HARQ-ACK information corresponding to the first priority, channel state information CSI corresponding to the first priority, and scheduling request SR information corresponding to the first priority; and
the second uplink control information includes one or more of the following information: HARQ-ACK information corresponding to the second priority, CSI corresponding to the second priority, and SR information corresponding to the second priority.

With reference to the first aspect, in an implementation of the first aspect, the first time-frequency resource is earlier than the second time-frequency resource in time domain, and/or the first time-frequency resource is lower than the second time domain resource in frequency domain; or
a time interval between a time-domain symbol corresponding to the first time-frequency resource and a demodulation reference signal DMRS symbol of the uplink channel is less than a time interval between a time-domain symbol corresponding to the second time-frequency resource and the DMRS symbol, and/or the first time-frequency resource is lower than the second time-frequency resource in frequency domain.

With reference to the first aspect, in an implementation of the first aspect, the first uplink information includes the first uplink control information corresponding to the first priority, the second uplink information includes the second uplink control information corresponding to the second priority, and the method further includes:
determining a third time-frequency resource on the uplink channel, where the third time-frequency resource is used by the terminal device to send third uplink information, the third uplink information includes third uplink control information corresponding to the first priority, the third uplink control information and the first uplink control information are separately encoded, and the third uplink control information and the second uplink control information are separately encoded, and
sending information on the third time-frequency resource, where
the second time domain resource is earlier than the third time-frequency resource in time domain, and/or the second time-frequency resource is lower than the third time domain resource in frequency domain; or
a time interval between the time-domain symbol corresponding to the second time-frequency resource and the demodulation reference signal DMRS symbol of the uplink channel is less than a time interval between a time-domain symbol corresponding to the third time-frequency resource and the DMRS symbol, and/or the second time-frequency resource is lower than the third time-frequency resource in frequency domain.

With reference to the first aspect, in an implementation of the first aspect, before the sending information on the first time-frequency resource and the second time-frequency resource, the method further includes:
respectively mapping the first uplink information and the second uplink information to the first time-frequency resource and the second time-frequency resource in a rate matching manner, where
the sending information on the first time-frequency resource and the second time-frequency resource includes:
   sending the first uplink information on the first time-frequency resource, and sending the second uplink information on the second time-frequency resource.

Therefore, in this embodiment of this application, the first uplink information and the second uplink information are sent in the rate matching manner, and the first uplink information and the second uplink information are separately encoded. For example, the first uplink information is encoded by using an encoding scheme with a low compression rate, and the second uplink information is encoded by using an encoding scheme with a high compression rate, to ensure that resource overheads occupied by services with different priorities can be balanced when the high-priority service and the low-priority service are simultaneously transmitted.

With reference to the first aspect, in an implementation of the first aspect, before the sending information on the first time-frequency resource and the second time-frequency resource, the method further includes:
mapping the second uplink information to the second time-frequency resource;
mapping the first uplink information to the first time-frequency resource; and
discarding information that is in the second uplink information and that has been mapped to a first overlapping time-frequency resource, where the first overlapping time-frequency resource is an overlapping time-frequency resource of the first time-frequency resource and the second time-frequency resource, and
the sending information on the first time-frequency resource and the second time-frequency resource includes:
   sending the first uplink information on the first time-frequency resource, and sending the second uplink information on a first non-overlapping time-frequency resource, where the first non-overlapping time-frequency resource is a time-frequency resource other than the first overlapping time-frequency resource in the second time-frequency resource.

Therefore, in this embodiment of this application, the first uplink control information is mapped by puncturing the second uplink data information, so that transmission of first uplink information of the high-priority service can be ensured.

With reference to the first aspect, in an implementation of the first aspect, before the sending information on the first time-frequency resource and the second time-frequency resource, the method further includes:
mapping the first uplink information to the first time-frequency resource;
mapping the second uplink information to the second time-frequency resource; and
discarding information that is in the first uplink information and that has been mapped to a second overlapping time-frequency resource, where the second overlapping time-frequency resource is an overlapping time-frequency resource of the first time-frequency resource and the second time-frequency resource, and
the sending information on the first time-frequency resource and the second time-frequency resource includes:
   sending the first uplink information on a second non-overlapping time-frequency resource, and sending the second uplink information on the second time-frequency resource, where the second non-overlapping time-frequency resource is a time-frequency resource other than the second overlapping time-frequency resource in the first time-frequency resource.

Therefore, in this embodiment of this application, the second uplink control information is mapped by puncturing the first uplink data information, so that transmission of control information with a low priority can be implemented when transmission of the first uplink data information with a high priority is ensured.

With reference to the first aspect, in an implementation of the first aspect, the first time-frequency resource is a reserved resource corresponding to the first uplink information, and the first time-frequency resource and the second time-frequency resource do not overlap.

When the first uplink information is sent on the uplink channel, before the sending information on the first time-frequency resource and the second time-frequency resource, the method further includes:
mapping the second uplink information to the second time-frequency resource, and mapping the first uplink information to the first time-frequency resource, where
the sending information on the first time-frequency resource and the second time-frequency resource includes:
   sending the first uplink information on the first time-frequency resource, and sending the second uplink information on the second time-frequency resource.

Alternatively, when the first uplink information is not sent on the uplink channel, before the sending information on the first time-frequency resource and the second time-frequency resource, the method further includes:
mapping the second uplink information to the second time-frequency resource, and mapping fourth uplink information to the first time-frequency resource, where the fourth uplink information is different from the first uplink information, and
the sending information on the first time-frequency resource and the second time-frequency resource includes:
   sending the fourth uplink information on the first time-frequency resource, and sending the second uplink information on the second time-frequency resource.

With reference to the first aspect, in an implementation of the first aspect, the first time-frequency resource is predefined, or preconfigured by the network device.

In this embodiment of this application, a the first time-frequency resourcefirst time-frequency resource is reserved, so that the first time-frequency resource is avoided when the second uplink information is mapped, thereby ensuring that transmission of the first uplink informationthe first uplink information is not affected by the second uplink informationthe second uplink information, and ensuring reliability of the the first uplink information.

With reference to the first aspect, in an implementation of the first aspect, the second time-frequency resource is a reserved resource corresponding to the second uplink information, and the first time-frequency resource and the second time-frequency resource do not overlap.

When the second uplink information is sent on the uplink channel, before the sending information on the first time-frequency resource and the second time-frequency resource, the method further includes:
mapping the first uplink information to the first time-frequency resource, and mapping the second uplink information to the second time-frequency resource, where
the sending information on the first time-frequency resource and the second time-frequency resource includes:
   sending the first uplink information on the first time-frequency resource, and sending the second uplink information on the second time-frequency resource.

Alternatively, when the second uplink information is not sent on the uplink channel, before the sending information on the first time-frequency resource and the second time-frequency resource, the method further includes:
mapping the first uplink information to the first time-frequency resource, and mapping fifth uplink information to the second time-frequency resource, where the fifth uplink information is different from the second uplink information, and
the sending information on the first time-frequency resource and the second time-frequency resource includes:
   sending the first uplink information on the first time-frequency resource, and sending the fifth uplink information on the second time-frequency resource.

With reference to the first aspect, in an implementation of the first aspect, the second time-frequency resource is predefined, or preconfigured by the network device.

In this embodiment of this application, a second time-frequency resource is reserved, so that the second time-frequency resource is avoided when the first uplink information is mapped, thereby ensuring that transmission of the the second uplink information is not affected by the the first uplink information, and ensuring reliability of the the second uplink information.

According to a second aspect, an uplink information transmission method is provided. The method includes: determining a first time-frequency resource and a second time-frequency resource on an uplink channel, where the first time-frequency resource is used to carry first uplink information, the second time-frequency resource is used to carry second uplink information, the first uplink information includes first uplink data information corresponding to a first priority and/or first uplink control information corresponding to the first priority, the second uplink information includes second uplink data information corresponding to a second priority and/or second uplink control information corresponding to the second priority, and the first uplink information and the second uplink information are separately encoded; and
receiving information from the terminal device on the first time-frequency resource and the second time-frequency resource.

That the first time-frequency resource is used to carry first uplink information may also be understood as that the first time-frequency resource is used by the terminal device to send the first uplink information. That the second time-frequency resource is used to carry second uplink information may also be understood as that the second time-frequency resource is used by the terminal device to send the second uplink information.

In this embodiment of this application, control information or data information corresponding to services with different priorities is separately encoded, and priorities of two services are determined to enable a priority of control/service information corresponding to a low-priority service to be lower than a priority of control/service information corresponding to a high-priority service, or enable a time-frequency domain position of control/service information corresponding to a low-priority service to be later than a time-frequency domain position of control/service information corresponding to a high-priority service, to better balance two services with different priorities.

It should be understood that the second aspect may be performed by a network device, and specific content of the second aspect corresponds to the content of the first aspect that may be performed by the terminal device. For corresponding features of the second aspect and beneficial effects achieved by the second aspect, refer to the descriptions in the first aspect. To avoid repetition, detailed descriptions are appropriately omitted herein.

With reference to the second aspect, in an implementation of the second aspect, the first uplink data information includes data information that is scheduled or configured to be sent by the terminal device by using first downlink control information, where that the first uplink data information corresponds to the first priority is indicated by meeting one or more of the following conditions: a first bit field in the first downlink control informaition indicates or configures that the first uplink data information corresponds to the first priority, the first downlink control information is located in first search space, the first downlink control information is located in a first physical downlink control channel PDCCH occasion set, the first downlink control information corresponds to a first downlink control information format DCI format, and the first downlink control information corresponds to a first radio network temporary identifier RNTI; or
the first uplink control information includes uplink control information that is configured or triggered to be sent by the terminal device by using second downlink control information, where that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

With reference to the second aspect, in an implementation of the second aspect, the second uplink control information includes uplink control information that is configured or triggered to be sent by the terminal device by using third downlink control information, where that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI; or
the second uplink data information includes data information that is scheduled or configured to be sent by the terminal device by using fourth downlink control information, where that the second uplink data information corresponds to the second priority is indicated by meeting one or more of the following conditions: a fourth bit field in the fourth downlink control informaition indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

With reference to the second aspect, in an implementation of the second aspect, the first uplink control information includes one or more of the following information: hybrid automatic repeat request-acknowledgment HARQ-ACK information corresponding to the first priority, channel state information CSI corresponding to the first priority, and scheduling request SR information corresponding to the first priority; and
the second uplink control information includes one or more of the following information: HARQ-ACK information corresponding to the second priority, CSI corresponding to the second priority, and SR information corresponding to the second priority.

With reference to the second aspect, in an implementation of the second aspect, the first time-frequency resource is earlier than the second time-frequency resource in time domain, and/or the first time-frequency resource is lower than the second time domain resource in frequency domain; or
a time interval between a time-domain symbol corresponding to the first time-frequency resource and a demodulation reference signal DMRS symbol of the uplink channel is less than a time interval between a time-domain symbol corresponding to the second time-frequency resource and the DMRS symbol, and/or the first time-frequency resource is lower than the second time-frequency resource in frequency domain.

With reference to the second aspect, in an implementation of the second aspect, the first uplink information includes the first uplink control information corresponding to the first priority, the second uplink information includes the second uplink control information corresponding to the second priority, and the method further includes:
determining a third time-frequency resource on the uplink channel, where the third time-frequency resource is used by the terminal device to send third uplink information, the third uplink information includes third uplink control information corresponding to the first priority, the third uplink control information and the first uplink control information are separately encoded, and the third uplink control information and the second uplink control information are separately encoded, and
receiving information from the terminal device on the third time-frequency resource, where
the second time domain resource is earlier than the third time-frequency resource in time domain, and/or the second time-frequency resource is lower than the third time domain resource in frequency domain; or
a time interval between the time-domain symbol corresponding to the second time-frequency resource and the demodulation reference signal DMRS symbol of the uplink channel is less than a time interval between a time-domain symbol corresponding to the third time-frequency resource and the DMRS symbol, and/or the second time-frequency resource is lower than the third time-frequency resource in frequency domain.

With reference to the second aspect, in an implementation of the second aspect, the receiving information from the terminal device on the first time-frequency resource and the second time-frequency resource includes:
receiving the first uplink information from the terminal device on the first time-frequency resource, and receiving the second uplink information from the terminal device on the second time-frequency resource, where
the first uplink information and the second uplink information are mapped to the first time-frequency resource and the second time-frequency resource in a rate matching manner.

With reference to the second aspect, in an implementation of the second aspect, the receiving information from the terminal device on the first time-frequency resource and the second time-frequency resource includes:
receiving the first uplink information from the terminal device on the first time-frequency resource, and receiving the second uplink information from the terminal device on a first non-overlapping time-frequency resource, where
the first non-overlapping time-frequency resource is a time-frequency resource other than a first overlapping time-frequency resource in the second time-frequency resource, the first overlapping time-frequency resource is an overlapping time-frequency resource of the first time-frequency resource and the second time-frequency resource, the second uplink information is information that is sent on the first non-overlapping time-frequency resource when the terminal device maps the second uplink information to the second time-frequency resource and discards information that is in the second uplink information and that has been mapped to the first overlapping time-frequency resource, and the first uplink information is information that is mapped to the first time-frequency resource when the terminal device discards information that is in the second uplink information and that has been mapped to the first overlapping time-frequency resource.

With reference to the second aspect, in an implementation of the second aspect, the receiving information from the terminal device on the first time-frequency resource and the second time-frequency resource includes:
receiving the first uplink information from the terminal device on a second non-overlapping time-frequency resource, and receiving the second uplink information from the terminal device on the second time-frequency resource, where
the second non-overlapping time-frequency resource is a time-frequency resource other than a second overlapping time-frequency resource in the first time-frequency resource, the second overlapping time-frequency resource is an overlapping time-frequency resource of the first time-frequency resource and the second time-frequency resource, the first uplink information is information that is sent on the second non-overlapping time-frequency resource when the terminal device maps the first uplink information to the first time-frequency resource and discards information that is in the first uplink information and that has been mapped to the second overlapping time-frequency resource, and the second uplink information is information that is mapped to the second time-frequency resource when the terminal device discards information that is in the first uplink information and that has been mapped to the second overlapping time-frequency resource.

With reference to the second aspect, in an implementation of the second aspect, the first time-frequency resource is a reserved resource corresponding to the first uplink information, and the first time-frequency resource and the second time-frequency resource do not overlap.

When the uplink channel carries the first uplink information, the second uplink information is mapped to the second time-frequency resource, and the first uplink information is mapped to the first time-frequency resource, where
the receiving information from the terminal device on the first time-frequency resource and the second time-frequency resource includes:
receiving the first uplink information from the terminal device on the first time-frequency resource, and receiving the second uplink information from the terminal device on the second time-frequency resource.

Alternatively, when the uplink channel does not carry the first uplink information, the second uplink information is mapped to the second time-frequency resource, fourth uplink information is mapped to the first time-frequency resource, and the fourth uplink information is different from the first uplink information, where
the receiving information from the terminal device on the first time-frequency resource and the second time-frequency resource includes:
receiving the fourth uplink information from the terminal device on the first time-frequency resource, and receiving the second uplink information from the terminal device on the second time-frequency resource.

With reference to the second aspect, in an implementation of the second aspect, the first time-frequency resource is predefined, or preconfigured by the network device.

With reference to the second aspect, in an implementation of the second aspect, the second time-frequency resource is a reserved resource corresponding to the second uplink information, and the first time-frequency resource and the second time-frequency resource do not overlap.

When the uplink channel carries the second uplink information, the first uplink information is mapped to the first time-frequency resource, and the second uplink information is mapped to the second time-frequency resource, where the receiving information from the terminal device on the first time-frequency resource and the second time-frequency resource includes:
receiving the first uplink information from the terminal device on the first time-frequency resource, and receiving the second uplink information from the terminal device on the second time-frequency resource.

Alternatively, when the uplink channel does not carry the second uplink information, the first uplink information is mapped to the first time-frequency resource, fifth uplink information is mapped to the second time-frequency resource, and the fifth uplink information is different from the second uplink information, where
the receiving information from the terminal device on the first time-frequency resource and the second time-frequency resource includes:
receiving the first uplink information from the terminal device on the first time-frequency resource, and receiving the fifth uplink information from the terminal device on the second time-frequency resource.

With reference to the second aspect, in an implementation of the second aspect, the second time-frequency resource is predefined, or preconfigured by the network device.

According to a third aspect, a communications apparatus is provided and includes each module or unit configured to perform the method according to any one of the first aspect or the possible implementations of the first aspect.

In an implementation, the communications apparatus is a terminal device.

According to a fourth aspect, a communications apparatus is provided and includes each module or unit configured to perform the method according to any one of the second aspect or the possible implementations of the second aspect.

In an implementation, the communications apparatus is a network device.

According to a fifth aspect, a communications apparatus is provided and includes a transceiver, a processor, and a memory. The processor is configured to control the transceiver to receive and send a signal. The memory is configured to store a computer program. The processor is configured to: invoke the computer program from the memory and run the computer program, so that the network device performs the method according to the first aspect or any one of any one of the possible implementations of the first aspect.

In an implementation, the communications apparatus is a terminal device.

According to a sixth aspect, a communications apparatus is provided and includes a transceiver, a processor, and a memory. The processor is configured to control the transceiver to receive and send a signal. The memory is configured to store a computer program. The processor is configured to: invoke the computer program from the memory and run the computer program, so that the terminal device performs the method according to the second aspect or any one of the possible implementations of the second aspect.

In an implementation, the communications apparatus is a network device.

According to a seventh aspect, a computer-readable medium is provided. The computer-readable medium stores a computer program. When the computer program is executed by a computer, the method according to the first aspect or any one of the possible implementations of the first aspect is implemented.

According to an eighth aspect, a computer-readable medium is provided. The computer-readable medium stores a computer program. When the computer program is executed by a computer, the method according to the second aspect or any one of the possible implementations of the second aspect is implemented.

According to a ninth aspect, a computer program product is provided. When the computer program product is executed by a computer, the method according to the first aspect or any one of the possible implementations of the first aspect is implemented.

According to a tenth aspect, a computer program product is provided. When the computer program product is executed by a computer, the method according to the second aspect or any one of the possible implementations of the second aspect is implemented.

According to an eleventh aspect, a processing apparatus is provided and includes a processor and an interface.

According to a twelfth aspect, a processing apparatus is provided and includes a processor, an interface, and a memory.

In the eleventh aspect or the twelfth aspect, the processor is configured to perform the method according to any one of the first aspect and the second aspect or any one of the possible implementations of the first aspect and the second aspect. A related data exchange process (for example, sending or receiving data transmission) is completed through the interface. In a specific implementation process, the interface may further complete the data exchange process by using a transceiver.

It should be understood that the processing apparatus in the eleventh aspect or the twelfth aspect may be a chip. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in a memory. The memory may be integrated into the processor, or may be located outside the processor and exist independently.

According to a thirteenth aspect, a system is provided and includes the foregoing terminal device and the foregoing network device.

### BRIEF DESCRIPTION OF DRAWINGS

FIG. 1 is a schematic diagram of a scenario to which an embodiment of this application is applicable;
FIG. 2 is a schematic diagram of uplink information transmission;
FIG. 3 is another schematic diagram of uplink information transmission;
FIG. 4 is a schematic diagram of an uplink information transmission method according to an embodiment of this application;
FIG. 5 is a schematic diagram of uplink information transmission according to an embodiment of this application;
FIG. 6 is a schematic diagram of uplink information transmission according to another embodiment of this application;
FIG. 7 is a schematic diagram of uplink information transmission according to another embodiment of this application;
FIG. 8 is a schematic diagram of uplink information transmission according to another embodiment of this application;
FIG. 9 is a schematic diagram of uplink information transmission according to another embodiment of this application;
FIG. 10 is a schematic diagram of uplink information transmission according to another embodiment of this application;
FIG. 11 is a schematic diagram of uplink information transmission according to another embodiment of this application;
FIG. 12 is a schematic diagram of uplink information transmission according to another embodiment of this application;
FIG. 13 is a schematic block diagram of a communications apparatus according to this application;
FIG. 14 is a schematic block diagram of a terminal device according to this application;
FIG. 15 is a schematic block diagram of another communications apparatus according to this application; and
FIG. 16 is a schematic block diagram of a network device according to this application.

### DESCRIPTION OF EMBODIMENTS

The following describes the technical solutions in this application with reference to the accompanying drawings.

The technical solutions in embodiments of this application may be applied to various communications systems, such as: a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, a future 5th generation (5th generation, 5G) system, or a new radio (new radio, NR) system.

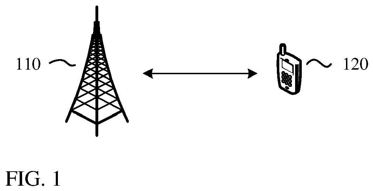

FIG. 1 is a schematic diagram of a communications system 100 applicable to a sending and receiving method and an apparatus according to an embodiment of this application. As shown in the figure, the communications system 100 may include at least one network device such as a network device 110 shown in FIG. 1. The communications system 100 may further include at least one terminal device such as a terminal device 120 shown in FIG. 1. The network device 110 may communicate with the terminal device 120 through a radio link.

A plurality of antennas may be configured for each communications device such as the network device 110 or the terminal device 120 in FIG. 1. The plurality of antennas may include at least one transmit antenna used to send a signal and at least one receive antenna used to receive a signal. In addition, each communications device additionally includes a transmitter chain and a receiver chain. A person of ordinary skill in the art may understand that the transmitter chain and the receiver chain each may include a plurality of components related to signal sending and receiving (for example, a processor, a modulator, a multiplexer, a demodulator, a demultiplexer, or an antenna). Therefore, the network device and the terminal device may communicate with each other by using a multiple-antenna technology.

It should be understood that the network device in the wireless communications system may be any device that has a wireless transceiver function. The device includes but is not limited to: a base transceiver station (base transceiver station, BTS) in a global system for mobile communications (global system for mobile communications, GSM) system or code division multiple access (code division multiple access, CDMA), a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the network device may be a relay station, an access point, a vehicle-mounted device, a wearable device, a network device in a future 5G network, a network device in a future evolved PLMN network, or the like, for example, a transmission reception point (transmission reception point, TRP) or a transmission point (transmission point, TP) in an NR system, a base station (gNB) in the NR system, or one or a group (including a plurality of antenna panels) antenna panels of a base station in a 5G system. This is not particularly limited in this embodiment of this application.

In some deployments, the gNB may include a central unit (centralized unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Because information at the RRC layer finally becomes information at the PHY layer, or is converted from information at the PHY layer, in this architecture, higher layer signaling such as RRC layer signaling may also be considered as being sent by the DU or sent by the DU and the CU (for example, the CU determines higher layer information and then sends the higher layer information to the DU, and the DU sends the higher layer information). It may be understood that the network device may be a CU node, a DU node, or a device including a CU node and a DU node. In addition, the CU may be classified as a network device in an access network (radio access network, RAN), or the CU may be classified as a network device in a core network (core network, CN). This is not limited in this application.

It should be further understood that the terminal device in the wireless communications system may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device in this embodiment of this application may be a mobile phone (mobile phone), a tablet computer (pad), a computer that has a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future 5G network, a terminal device in a future evolved public land mobile communications network (public land mobile network, PLMN), or the like. This is not limited in this embodiment of this application.

In this embodiment of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more of computer operating systems implementing service processing through a process (process), for example, a Linux operating system, a Unix operating system, an Android operating system, an iOS operating system, and a Windows operating system. The application layer includes applications such as a browser, an address book, word processing software, and instant communications software. In addition, a specific structure of an execution body of a method provided in the embodiments of this application is not particularly limited in the embodiments of this application provided that a program that records code for the method provided in the embodiments of this application can be run to perform communication according to the method provided in the embodiments of this application. For example, the method provided in the embodiments of this application may be performed by the terminal device, the network device, or a functional module that is in the terminal device or the network device and that can invoke and execute the program.

In addition, aspects or features of this application may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD) and a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry instructions and/or data.

In this application, unless otherwise specified, an element represented in a singular form is intended to represent "one or more", but is not merely intended to represent "one and only one". "Some" may refer to one or more.

It should be understood that, terms "first", "second", "third", and "fourth", and various sequence numbers in the following embodiments are merely used for differentiation for ease of description, and are not used to limit the scope of the embodiments of this application.

The technical solutions of this application may be applied to a wireless communications system, for example, the communications system 100 shown in FIG. 1. There may be a wireless communications connection relationship between two communications apparatuses located in the wireless communications system. One of the communications apparatuses may correspond to, for example, the network device 110 shown in FIG. 1, and for example, may be the network device 110 or a chip disposed in the network device 110. The other of the two communications apparatuses may correspond to, for example, the terminal device 120 in FIG. 1, and for example, may be the terminal device 120 or a chip disposed in the terminal device 120.

In the communications system, the terminal device may support both a URLLC service and an eMBB service. Two pieces of uplink information (which may be an uplink data channel or uplink control information) corresponding to the two services may collide in time domain. When a collision occurs, how the terminal device sends uplink information becomes an urgent problem to be resolved.

In a solution, when an uplink data channel or uplink control information corresponding to a low-priority (for example, eMBB) service collides with an uplink data channel or uplink control information corresponding to a high-priority (for example, URLLC) service, the terminal device stops sending the uplink data channel or the uplink control information corresponding to the low-priority service.

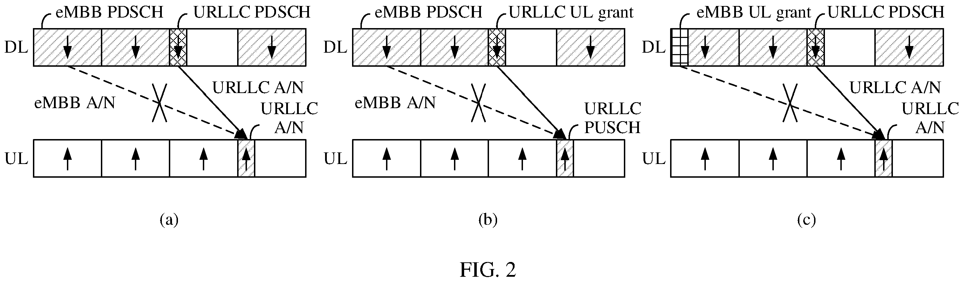

For example, as shown in (a) of FIG. 2, when the UCI for the eMBB collides with the UCI for the URLLC, the terminal device discards the UCI for the eMBB, and sends only the UCI for the URLLC.

For another example, as shown in (b) of FIG. 2, when the UCI for the eMBB collides with a PUSCH corresponding to the URLLC service, the UCI for the eMBB is discarded, and only the PUSCH corresponding to the URLLC is sent.

For another example, as shown in (c) of FIG. 2, when the UCI for the URLLC collides with a PUSCH corresponding to the eMBB service, the PUSCH corresponding to the eMBB service is discarded, and only the UCI for the URLLC is sent.

In this solution, although a high priority of the URLLC service is ensured and implementation is relatively simple, a disadvantage is that the UCI for the eMBB, especially relatively important HARQ-ACK information, is discarded. Consequently, performance of the eMBB service is severely affected.

In another solution, when uplink control information corresponding to a low-priority (for example, eMBB) service collides with uplink control information corresponding to a high-priority (for example, URLLC) service, the terminal device jointly encodes and sends the uplink control information corresponding to the low-priority service and the uplink control information corresponding to the high-priority service. Joint encoding means that information, before encoding, of two types of UCI is combined (for example, the two types of UCI are combined in a serial manner), and then encoding is performed, where an encoded information bit and/or a parity information bit are/is jointly determined by using the information, before encoding, of the two types of UCI.

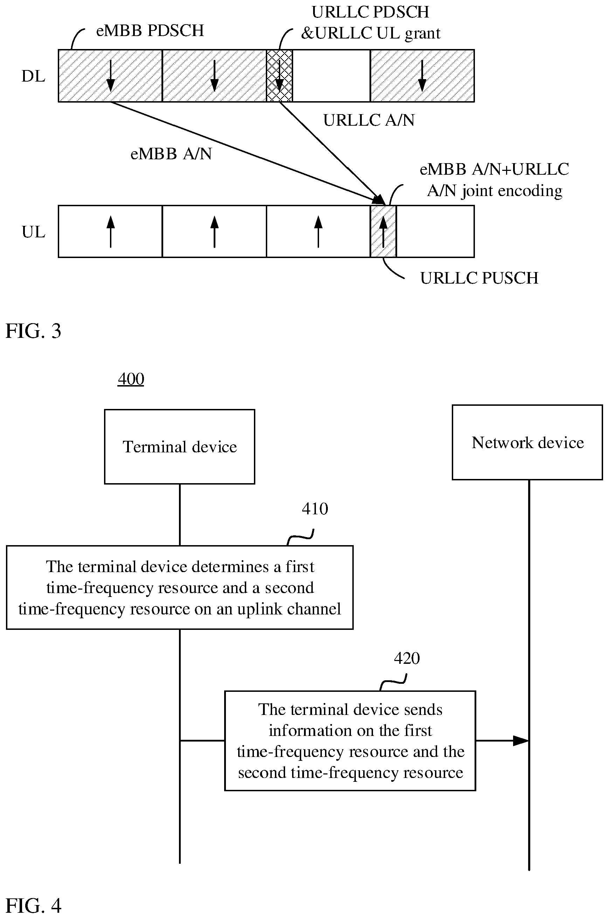

For example, as shown in FIG. 3, when eMBB HARQ-ACK information collides with URLLC HARQ-ACK information, the terminal device jointly encodes the eMBB HARQ-ACK information and the URLLC HARQ-ACK information, and then maps the eMBB HARQ-ACK information and the URLLC HARQ-ACK information to a URLLC PUSCH.

In this solution, although information of the two services can be sent, because the eMBB service and the URLLC service have different reliability requirements, a code rate of the HARQ-ACK information corresponding to the URLLC is usually lower than a code rate of the HARQ-ACK information corresponding to the eMBB, to ensure higher reliability. When joint encoding is performed on the eMBB HARQ-ACK information and the URLLC HARQ-ACK information, only one modulation and coding scheme can be selected for modulation and coding. If a modulation and coding scheme with relatively high reliability is selected, a relatively large quantity of time-frequency resources need to be used when the modulation and coding scheme is used for the eMBB HARQ-ACK information, causing a waste of resources. If a modulation and coding scheme with relatively low reliability is selected, high-reliability transmission of the URLLC HARQ-ACK information cannot be ensured by using the modulation and coding scheme.

An embodiment of this application provides an uplink information transmission method, to resolve a problem that eMBB performance is severely affected because information corresponding to an eMBB service is discarded when an uplink data channel or uplink control information corresponding to a low-priority (for example, eMBB) service collides with an uplink data channel or uplink control information corresponding to a high-priority (for example, URLLC) service, and resolve a problem that it is difficult to balance resources occupied by the two types of uplink control information and reliability because the uplink control information corresponding to the low-priority service and the uplink control information corresponding to the high-priority service are jointly encoded.

Specifically, this application proposes a method for sending uplink information in a scenario in which control information or data information corresponding to two services with different priorities collides. A terminal device separately encodes control information or data information corresponding to services with different priorities, and determines priorities of two services to enable a priority of control/service information corresponding to the low-priority service to be lower than a priority of control/service information corresponding to the high-priority service, or enable a time-frequency domain position of control/service information corresponding to the low-priority service to be later than a time-frequency domain position of control/service information corresponding to the high-priority service, to better balance the two services with different priorities.

Without loss of generality, the following first describes this embodiment of this application in detail by using an uplink transmission process between one terminal device and one network device as an example. It may be understood that any terminal device in a wireless communications system or a chip disposed in a terminal device may send uplink information based on a same method, and any network device in the wireless communications system or a chip disposed in a network device may receive the uplink information based on a same method. This is not limited in this application.

It should be understood that the "collision" in this embodiment of this application indicates that uplink information of different services needs to be transmitted on a same channel. In other words, uplink information corresponding to different services or different priorities needs to be sent on a same time-frequency resource, causing an information collision. In this embodiment of this application, the information "collision" may also be referred to as an information conflict. This embodiment of this application is not limited thereto.

FIG. 4 is a schematic flowchart of a signal receiving and sending method 400 shown from a perspective of interaction between a network device and a terminal device. The method 400 shown in FIG. 4 includes the following steps.

410: The terminal device determines a first time-frequency resource and a second time-frequency resource on an uplink channel. The first time-frequency resource is used to send first uplink information, the second time-frequency resource is used to send second uplink information, the first uplink information includes first uplink data information corresponding to a first priority and/or first uplink control information corresponding to the first priority, the second uplink information includes second uplink data information corresponding to a second priority and/or second uplink control information corresponding to the second priority, and the first uplink information and the second uplink information are separately encoded.

Correspondingly, the network device determines the first time-frequency resource and the second time-frequency resource. For the network device, the first time-frequency resource may be used to receive the first uplink information, and the second time-frequency resource is used to receive the second uplink information.

It should be understood that when determining the first time-frequency resource and the second time-frequency resource, the terminal device or the network device may simultaneously determine the two time-frequency resources, or may separately determine the two resources. For example, the terminal device or the network device may first determine one time-frequency resource, and then determine the other time-frequency resource. This embodiment of this application is not limited thereto.

It should be understood that, in this embodiment of this application, the first time-frequency resource and the second time-frequency resource may not overlap. In other words, the first time-frequency resource and the second time-frequency resource do not include an identical resource element (resource element, RE). The two time-frequency resources may alternatively overlap. In other words, the first time-frequency resource and the second time-frequency resource include at least one identical RE. The at least one identical RE is referred to as an overlapping time-frequency resource (for example, a first overlapping time-frequency resource or a second overlapping time-frequency resource below). For example, when the second uplink information is punctured by using the first uplink information or the first uplink information is punctured by using the second uplink information, a punctured resource may be referred to as an overlapping time-frequency resource.

Similarly, a third time-frequency resource below and the second time-frequency resource may not overlap, or may overlap. This embodiment of this application is not limited thereto.

In this application, puncturing (puncture) may also be referred to as overriding or discarding. Puncturing information D by using information C is also referred to as overriding (override) information D by using information C.

Further, there may alternatively be an inclusion relationship between the first time-frequency resource and the second time-frequency resource. For example, the first time-frequency resource includes the second time-frequency resource, or the second time-frequency resource includes the first time-frequency resource. This embodiment of this application is not limited thereto.

When the first time domain resource and the second time domain resource do not overlap, the first time-frequency resource is earlier than the second time-frequency resource in time domain, and/or the first time-frequency resource is lower than the second time domain resource in frequency domain; or
a time interval between a time-domain symbol corresponding to the first time-frequency resource and a demodulation reference signal (demodulation reference signal, DMRS) symbol of the uplink channel is less than a time interval between a time-domain symbol corresponding to the second time-frequency resource and the DMRS symbol, and/or the first time-frequency resource is lower than the second time-frequency resource in frequency domain.

It should be understood that, in this embodiment of this application, the first priority may correspond to a high-priority service, and the second priority may correspond to a low-priority service.

For example, the first priority corresponds to a URLLC service, and the second priority corresponds to an eMBB service. For another example, the first uplink data information is data information corresponding to the URLLC service, and the first uplink control information is uplink control information corresponding to the URLLC service. The second uplink control information is uplink control information corresponding to the eMBB service, and the second uplink data information is uplink data information corresponding to the eMBB service.

It should be understood that, in this embodiment of this application, for ease of description, only an example in which a first-priority service is a URLLC service and a second-priority service is an eMBB service is used below for description. However, this embodiment of this application is not limited thereto. In this embodiment of this application, the first-priority service and the second-priority service may alternatively be other services.

420: The terminal device sends information on the first time-frequency resource and the second time-frequency resource.

Correspondingly, the network device receives the information on the first time-frequency resource and the second time-frequency resource.

Therefore, in this embodiment of this application, when two types of uplink information with different priorities collide, the terminal device separately encodes the first uplink information and the second uplink information, and sends the information by using different resources, so that two services with different priorities can be better balanced.

It should be understood that the first uplink information may be the first uplink data information corresponding to the first priority, or may be the first uplink control information corresponding to the first priority, or may include both the first uplink data information and the first uplink control information, that is, include the first uplink data information with the first priority and the first uplink control information with the first priority.

The second uplink information may be the second uplink data information corresponding to the second priority, or may be the second uplink control information corresponding to the second priority, or may include the second uplink data information and the second uplink control information, that is, include the second uplink data information with the second priority and the second uplink control information with the second priority.

Similarly, third uplink information may be third uplink control information corresponding to the first priority, or may include third uplink control information corresponding to the first priority and other uplink control information that corresponds to the first priority and is different from the first uplink information.

It should be understood that in this embodiment of this application, the uplink channel may be a PUSCH, or the uplink channel may be a PUCCH. This embodiment of this application is not limited thereto.

For example, in an implementation, the uplink channel is a PUSCH.

Optionally, the PUSCH may carry the first uplink control information and the second uplink control information.

Optionally, the PUSCH may carry the first uplink data information and the second uplink control information.

Optionally, the PUSCH may carry the first uplink control information and the second uplink data information.

Optionally, the PUSCH may carry the first uplink data information and the second uplink data information.

Optionally, the PUSCH may further carry uplink data information (Uplink Shared Channel, UL-SCH) corresponding to the first priority. Specifically, the PUSCH may be a PUSCH that carries the URLLC service. For example, the UL-SCH is the first uplink data information.

Optionally, the PUSCH may further carry uplink data information UL-SCH corresponding to the second priority. Specifically, the PUSCH is a PUSCH that carries the eMBB service. For example, the UL-SCH is the second uplink data information.

Optionally, the uplink channel may be a PUSCH, and the PUSCH carries the first uplink control information and the second uplink control information, but does not carry uplink data information. In other words, the PUSCH is a PUSCH (PUSCH without UL-SCH) that does not carry uplink data information.

Alternatively, in an implementation, the uplink channel is a PUCCH. The PUCCH carries the first uplink control information and the second uplink control information.

In an implementation, that the terminal device sends information on the first time-frequency resource and the second time-frequency resource includes: The terminal device sends the first uplink information on the first time-frequency resource, and sends the second uplink information on the second time-frequency resource.

In another implementation, that the terminal device sends information on the first time-frequency resource and the second time-frequency resource includes: The terminal device sends the first uplink information on the first time-frequency resource, and does not send the second uplink information on the second time-frequency resource but sends other uplink information. Alternatively, the terminal device sends other uplink information on the first time-frequency resource, and sends the second uplink information on the second time-frequency resource. Alternatively, the terminal device sends other uplink information on both the first time-frequency resource and the second time-frequency resource. It should be understood that the other uplink information herein is uplink information different from the first uplink information and the second uplink information. Alternatively, the other uplink information is empty information. That the terminal device sends the empty information indicates that the terminal device does not send uplink information to the network device.

Specifically, in this embodiment of this application, a time-frequency resource (for example, the first time-frequency resource, the second time-frequency resource, or the third time-frequency resource) is a time-frequency resource used to carry uplink information (for example, the first uplink information, the second uplink information, or the third uplink information). In other words, that the time-frequency resource may be used by the terminal device to send the uplink information specifically means that the time-frequency resource may be used to carry or send the potential uplink information. If the terminal device sends (or needs to send) the uplink information on the uplink channel, the terminal device sends the uplink information on the time-frequency resource. If the terminal device does not send (or does not need to send) the uplink information on the uplink channel, the terminal device may send other uplink information on the time-frequency resource, or does not send (or does not map) any information.

That the terminal device needs to send the uplink information on the uplink channel may specifically mean that the terminal device receives downlink control information corresponding to the uplink information, where the downlink control information is used to schedule, trigger, or configure the terminal device to send the uplink information. For example, in the following description, first downlink control information is used to schedule or configure the terminal device to send the first uplink data information, second downlink control information is used to trigger or configure the terminal device to send the first uplink control information, third downlink control information is used to trigger or configure the terminal device to send the second uplink control information, or fourth downlink control information is used to trigger or configure the terminal device to send the second uplink data information.

It should be understood that, for the foregoing time-frequency resource, if the terminal device sends the uplink information on the time-frequency resource, for one time-domain symbol corresponding to the time-frequency resource, the uplink information may be mapped to all frequency domain resources on the time-domain symbol, or may be mapped to a part of frequency domain resources on the time-domain symbol, for example, a part of subcarriers on the time-domain symbol. This embodiment of this application is not limited thereto.

It should be understood that, that the time-frequency resource is a time-frequency resource used to send the uplink information may be understood as that the time-frequency resource may be used to carry all the uplink information, or may be understood as that the time-frequency resource may be used to carry a part of the uplink information. This embodiment of this application is not limited thereto.

Optionally, the uplink information in this embodiment of this application may be information before encoding, which is also referred to as information element information or system information (system information). The information before encoding may include a cyclic redundancy check (cyclic redundancy check, CRC) bit, or may not include a CRC bit. In some scenarios, the uplink information sent by the terminal device is a part or all of information obtained after the uplink information is encoded. In this case, even if the terminal device does not send all the information obtained after the uplink information is encoded, for example, after the information obtained after the uplink information is encoded is mapped to the time-frequency resource, the information obtained after the uplink information is encoded is punctured by using other uplink information on a part of the time-frequency resource, the terminal device actually sends only a part of the information obtained after the uplink information is encoded. However, considering that the network device receives the part of the information obtained after the uplink information is encoded, the network device may still (for example, through decoding) recovers all information that is before the uplink information is encoded (in other words, the network device may potentially obtain, by using the part of the information obtained after the uplink information is encoded, all the information that is before the uplink information is encoded). Therefore, in this case, it may still be considered that the time-frequency resource carries all the uplink information (for example, the first uplink information or the second uplink information).

Optionally, the first uplink information or the second uplink information in this embodiment of this application may alternatively be encoded information.

Optionally, in this embodiment of this application, that a time-frequency resource carries a part of the uplink information may be understood as that the part of the uplink information is mapped to the time-frequency resource, and the other part of the uplink information is mapped to another time-frequency resource of the uplink channel or mapped to another uplink channel, or the other part of information is not mapped or is discarded after being mapped. This embodiment of this application is not limited thereto.

The following describes in detail the first uplink data information, the first uplink control information, the second uplink control information, and the second uplink data information in this embodiment of this application.

Optionally, the first uplink data information is all uplink data information corresponding to the first priority on the uplink channel, or the first uplink data information is a part of uplink data information corresponding to the first priority on the uplink channel.

Further, the first uplink data information is separately encoded uplink data information.

Optionally, the first uplink control information is all uplink control information corresponding to the first priority on the uplink channel, or the first uplink control information is a part of uplink control information corresponding to the first priority on the uplink channel.

Further, the first uplink control information is separately encoded control information.

Optionally, the second uplink data information is all uplink data information corresponding to the second priority on the uplink channel, or the second uplink data information is a part of uplink data information corresponding to the second priority on the uplink channel.

Further, the first uplink data information is separately encoded uplink data information.

Optionally, the second uplink control information is all uplink control information corresponding to the second priority on the uplink channel, or the second uplink control information is a part of uplink control information corresponding to the second priority on the uplink channel.

Further, the second uplink control information is separately encoded control information.

Optionally, the third uplink control information may also be separately encoded control information.

For a piece of uplink information (for example, the first uplink data information, the first uplink control information, the second uplink data information, the second uplink control information, or the third uplink control information), that the uplink information is separately encoded uplink information means that the terminal device generates encoded information (for example, CRC bits and/or encoded bits) based on system information bits of the uplink information, to form an encoded information sequence. Further, that the uplink information is separately encoded uplink information means that the terminal device generates encoded information based on only system information bits of the uplink information, or means that the terminal device does not generate the encoded information based on system information bits of information other than the uplink information.

It should be understood that, in this embodiment of this application, that the first uplink information and the second uplink information are separately encoded means that the terminal device separately encodes the first uplink information and the second uplink information. After encoding and modulation are completed on the first uplink information and the second uplink information, the first uplink information and the second uplink information are mapped to the uplink channel. Specifically, encoded information (for example, parity bits) corresponding to the first uplink information is determined by using system information bits corresponding to the first uplink information, and is unrelated to system information bits (systematic bits) of the second uplink information, and encoded information (for example, CRC bits or encoded bits parity bits) corresponding to the second uplink information is determined by using the system information bits (systematic bits) corresponding to the second uplink information, and is unrelated to the system information bits of the first uplink information.

Similarly, that the first uplink information and the third uplink information are separately encoded means that the terminal device separately encodes the first uplink information and the third uplink information. That the second uplink information and the third uplink information are separately encoded means that the terminal device separately encodes the second uplink information and the third uplink information.

Further, all information included in a piece of uplink information (for example, the first uplink data information, the first uplink control information, the second uplink control information, the second uplink data information, or the third uplink control information) may be jointly encoded information.

The foregoing joint encoding means that encoded information corresponding to the piece of uplink information is generated by using all system information bits included in the piece of uplink information. If the piece of uplink information includes a plurality of types of information, the terminal device jointly encodes the plurality of types of information included in the piece of uplink information, and a CRC and/or encoded information corresponding to the piece of uplink information is jointly generated by using the plurality of types of information. For example, if the piece of uplink information includes HARQ-ACK information and SR information, the piece of uplink information is information obtained by jointly encoding the two types of information.

In other words, in this embodiment of this application, different uplink information may be separately encoded, and all information in same uplink information is jointly encoded.

Optionally, in an implementation, the first uplink data information includes data information that is scheduled or configured to be sent by the terminal device by using first downlink control information, where that the first uplink data information corresponds to the first priority is indicated by meeting one or more of the following conditions: a first bit field in the first downlink control information indicates or configures that the first uplink data information corresponds to the first priority, the first downlink control information is located in first search space, the first downlink control information is located in a first physical downlink control channel PDCCH occasion set, the first downlink control information corresponds to a first downlink control information format DCI format, and the first downlink control information corresponds to a first radio network temporary identifier (radio network temporary identifier, RNTI).

For example, the first downlink control information is dynamic DCI at a physical layer, for example, an uplink grant (uplink grant, UL grant). Specifically, the UL grant is scrambled by using an RNTI other than a configured scheduling radio network temporary identifier (configured scheduling radio network temporary identifier, CS-RNTI), for example, scrambled by using a cell radio network temporary identifier (cell radio network temporary identifier, C-RNTI) or a modulation and coding scheme radio network temporary identifier (modulation and coding scheme RNTI, MCS-C-RNTI).

For another example, the first downlink control information may be information sent, in a grant free (grant free, GF) manner, by the terminal device for which the uplink channel is configured, for example, may be higher layer signaling, or may be a semi-persistent uplink grant UL grant, or may be higher layer signaling and a semi-persistent UL grant (for example, a UL grant scrambled by using the CS-RNTI).

Optionally, in an implementation, the first uplink control information includes uplink control information that is configured or triggered to be sent by the terminal device by using second downlink control information, where that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

In an implementation, similar to that the network device configures, by using the first downlink control information, the terminal device to send the first uplink data information, the second downlink control information may be higher layer signaling for configuring the uplink control information, or may be semi-persistent DCI signaling (for example, a downlink grant (downlink grant, DL grant) scrambled by using the CS-RNTI) for configuring or triggering the terminal device to send the uplink control information. For example, if the first uplink control information includes periodic channel state information (channel state information, CSI) or periodic SR information, the periodic CSI or the periodic SR information is information that is configured to be sent by the terminal device by using higher layer signaling, and a time unit (for example, a slot) used to send the CSI or the SR information is periodic. For another example, the network device may configure semi-persistent scheduling (semi-persistent scheduling, SPS)-based downlink data information (that is, an SPS PDSCH) for the terminal device by using the second downlink control information. The SPS PDSCH is periodic. In this case, HARQ-ACK information fed back by the terminal device for the periodic SPS PDSCH is also periodic. Therefore, if the first uplink control information includes the HARQ-ACK information, it may be considered that the HARQ-ACK information is configured or triggered to be sent by the terminal device by using the second downlink control information.

In another implementation, the second downlink control information may be control signaling that is used to trigger or indicate the terminal device to send the uplink control information. Specifically, the second downlink control information is downlink control information DCI at the physical layer, for example, a UL grant or a DL grant. More specifically, the UL grant or the DL grant is scrambled by using an RNTI other than a CS-RNTI, for example, scrambled by using a C-RNTI or an MCS-C-RNTI. For example, if the first uplink control information includes aperiodic CSI, the aperiodic CSI is triggered to be sent by the terminal device by using the DL grant or the UL grant. For another example, the network device may schedule a PDSCH to the terminal device by using the second downlink control information. After detecting the second downlink control information, the terminal device feeds back corresponding HARQ-ACK information. Therefore, if the first uplink control information includes the HARQ-ACK information, it may be considered that the HARQ-ACK information is triggered to be sent by the terminal device by using the second downlink control information.

Optionally, in an implementation, the second uplink control information includes uplink control information that is configured or triggered to be sent by the terminal device by using third downlink control information, where that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI.

It should be understood that a method in which the third downlink control information is used to configure or trigger the terminal device to send the second uplink control information is similar to the method in which the second downlink control information is used to configure or trigger the terminal device to send the first uplink control information. Details are not described again.

For example, the third downlink control information is dynamic downlink control information DCI at the physical layer, for example, a UL grant or a DL grant. Specifically, the DCI is scrambled by using an RNTI other than a CS-RNTI, for example, scrambled by using a C-RNTI or an MCS-C-RNTI.

For another example, the third downlink control information may be higher layer signaling for configuring the uplink control information, or may be semi-persistent DCI signaling (for example, a downlink grant DL grant scrambled by using the CS-RNTI) for configuring the terminal device to send the uplink control information.

Optionally, in an implementation, the second uplink data information includes data information that is scheduled or configured to be sent by the terminal device by using fourth downlink control information, where that the second uplink data information corresponds to the second priority is indicated by meeting one or more of the following conditions: a fourth bit field in the fourth downlink control information indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

It should be understood that a method in which the fourth downlink control information is used to configure or schedule the terminal device to send the second uplink data information is similar to the method in which the first downlink control information is used to configure or schedule the terminal device to send the first uplink data information. Details are not described again.

For example, the fourth downlink control information is dynamic downlink control information DCI at the physical layer, for example, an uplink grant UL grant. Specifically, the UL grant is scrambled by using an RNTI other than a CS-RNTI, for example, scrambled by using a C-RNTI or an MCS-C-RNTI.

For another example, the fourth downlink control information may be information sent, in the GF manner, by the terminal device for which the uplink channel is configured, for example, may be higher layer signaling, or may be a semi-persistent UL grant, or may be higher layer signaling and a semi-persistent UL grant.

Optionally, in an implementation, the third uplink control information includes uplink control information that is configured or triggered to be sent by the terminal device by using fifth downlink control information, where that the third uplink control information corresponds to the first priority is indicated by meeting one or more of the following conditions: a fifth bit field in the fifth downlink control information indicates or configures that the third uplink control information corresponds to the first priority, the fifth downlink control information is located in first search space, the fifth downlink control information is located in a first PDCCH occasion set, the fifth downlink control information corresponds to a first DCI format, and the fifth downlink control information corresponds to a first RNTI.

It should be understood that a method in which the fifth downlink control information is used to configure or trigger the terminal device to send the third uplink control information is similar to the method in which the second downlink control information is used to configure or trigger the terminal device to send the first uplink control information. Details are not described again.

For example, the fifth downlink control information is dynamic downlink control information DCI at the physical layer, for example, a UL grant or a DL grant. Specifically, the DCI is scrambled by using an RNTI other than a CS-RNTI, for example, scrambled by using a C-RNTI or an MCS-C-RNTI.

For another example, the fifth downlink control information may be higher layer signaling for configuring the uplink control information, or may be semi-persistent DCI signaling (for example, a downlink grant DL grant scrambled by using the CS-RNTI) for configuring the terminal device to send the uplink control information.

Optionally, the first uplink control information includes one or more of the following information: hybrid automatic repeat request-acknowledgment HARQ-ACK information corresponding to the first priority, channel state information CSI corresponding to the first priority, and scheduling request SR information corresponding to the first priority.

For example, the first uplink control information is the HARQ-ACK information corresponding to the first priority, the first uplink control information is the CSI corresponding to the first priority, or the first uplink control information is the SR information corresponding to the first priority.

For another example, the first uplink control information is a combination of at least two of the HARQ-ACK information corresponding to the first priority, the CSI corresponding to the first priority, and the SR information corresponding to the first priority. For example, the first uplink control information is the HARQ-ACK information corresponding to the first priority and the SR information corresponding to the first priority, the first uplink control information is the HARQ-ACK information corresponding to the first priority and the CSI corresponding to the first priority, the first uplink control information is the CSI corresponding to the first priority and the SR information corresponding to the first priority, or the first uplink control information is the HARQ-ACK information corresponding to the first priority, the CSI corresponding to the first priority, and the SR information corresponding to the first priority.

Optionally, the CSI corresponding to the first priority may be CSI part 1 information corresponding to the first priority, or may be CSIpart 2 corresponding to the first priority, or may be CSI part 1 information corresponding to the first priority and CSIpart 2 corresponding to the first priority.

It should be understood that, in this embodiment of this application, the CSI may include two parts of information: a CSI part 1 and a CSI part 2. The CSI part 1 may include high-priority CSI, and the CSI part 2 may include low-priority CSI. For example, the CSI part 1 includes at least one of a channel state information reference signal resource indicator (CSI-RS resource indicator, CRI), a rank indicator (Rank indicator, RI), and channel quality indicator (Channel quality indicator, CQI) information of the first transport block (codeword). The CSI part 2 includes at least one of CQI information of the second transport block and precoding matrix indicator (Precoding matrix indicator, PMI) information. For another example, the CSI part 1 includes at least one of RI information, CQI information, and non-zero wideband amplitude coefficient (non-zero wideband amplitude coefficients) information. The CSI part 2 includes PMI information.

Optionally, the second uplink control information includes one or more of the following information: HARQ-ACK information corresponding to the second priority, CSI corresponding to the second priority, and SR information corresponding to the second priority.

For example, the second uplink control information is the HARQ-ACK information corresponding to the second priority, the second uplink control information is the CSI corresponding to the second priority, or the second uplink control information is the SR information corresponding to the second priority.

For another example, the second uplink control information is a combination of at least two of the HARQ-ACK information corresponding to the second priority, the CSI corresponding to the second priority, and the SR information corresponding to the second priority. For example, the second uplink control information is the HARQ-ACK information corresponding to the second priority and the SR information corresponding to the second priority, the second uplink control information is the HARQ-ACK information corresponding to the second priority and the CSI corresponding to the second priority, the second uplink control information is the CSI corresponding to the second priority and the SR information corresponding to the second priority, or the second uplink control information is the HARQ-ACK information corresponding to the second priority, the CSI corresponding to the second priority, and the SR information corresponding to the second priority.

Optionally, the CSI corresponding to the second priority may be CSI part 1 information corresponding to the second priority, or may be CSIpart 2 corresponding to the second priority, or may be CSI part 1 information corresponding to the second priority and CSIpart 2 corresponding to the second priority.

Further, if x^{th} uplink control information is α information corresponding to an x^{th} priority, the x^{th} uplink control information is all α information corresponding to the x^{th} priority on the uplink channel. Alternatively, the x^{th} uplink control information is a part of α information corresponding to the x^{th} priority on the uplink channel, where x is one or two. Similarly, the third uplink control information is all β information that corresponds to the first priority and is carried on the uplink channel. The α information or the β information may be HARQ-ACK information, or CSI, or SR information, or HARQ-ACK information and CSI, or HARQ-ACK information and SR information, or CSI and SR information, or HARQ-ACK information, CSI, and SR information. For the first uplink control information and the third uplink control information, β information is different from α information. For example, the α information is the HARQ-ACK information corresponding to the first priority, and the β information is the CSI corresponding to the first priority.

Optionally, if the uplink channel is an uplink channel in a frequency hopping (frequency hopping) mode, the first time-frequency resource, the second time-frequency resource, and the third time-frequency resource (if there is the third uplink information) may all be resources located on a same hop (hop), and the first uplink information, the second uplink information, the third uplink information (if there is the third uplink information) are all information located on the same hop.

Further, the first uplink data information may be all uplink data information that corresponds to the first priority and is carried on the hop. The first uplink control information may be all uplink control information that corresponds to the first priority and is carried on the hop.

Further, the second uplink data information may be all uplink data information that corresponds to the second priority and is carried on the hop. The second uplink control information may be all uplink control information that corresponds to the second priority and is carried on the hop.

Still further, if x^{th} uplink control information is α information corresponding to an x^{th} priority, the x^{th} uplink control information is all α information that corresponds to the x^{th} priority and is carried on the hop. Definitions of x and α are as described above.

Similarly, the third uplink control information is all β information that corresponds to the first priority and is carried on the hop.

In an implementation, the second downlink control information is used to configure or schedule the terminal device to send the first downlink data information corresponding to the first priority, and the HARQ-ACK information corresponding to the first priority is HARQ-ACK information for the first downlink data information. In other words, the first priority of the first uplink control information is indicated by a priority of first downlink data configured or scheduled by using the second downlink control information.

In an implementation, the third downlink control information is used to configure or schedule the terminal device to send the second downlink data information corresponding to the second priority, and the HARQ-ACK information corresponding to the second priority is HARQ-ACK information for the second downlink data information. In other words, the second priority of the second uplink control information is indicated by a priority of second downlink data configured or scheduled by using the third downlink control information.

Further, the first downlink data information may be later than the second downlink data information in terms of time. In other words, a PDSCH that carries the first downlink data information is later than a PDSCH that carries the second downlink data information. When the first downlink data information is a high-priority URLLC service and the second downlink data information is a low-priority eMBB service, the URLLC service arrives later than the eMBB service but requires a relatively small HARQ-ACK feedback latency. Consequently, a HARQ-ACK corresponding to the URLLC service and a HARQ-ACK corresponding to the eMBB service may collide in a same time unit.

Specifically, in actual application, in this embodiment of this application, the network device may notify, in any one of the following five manners, the terminal device of a priority corresponding to the first uplink information/the second uplink information.

Manner (1): The first bit field in the first downlink control information indicates that the first uplink data information corresponds to the first priority. In other words, the first downlink control information is used to explicitly notify that the first uplink data information scheduled or configured by using the first downlink control information corresponds to the first priority.

Similarly, the second bit field in the second downlink control information indicates that the first uplink control information corresponds to the first priority. Specifically, the second bit field in the second downlink control information indicates that the first downlink data information corresponds to the first priority. Therefore, the second downlink control information indirectly indicates (that is, implicitly indicates) that the first uplink control information directed to by the second downlink control information corresponds to the first priority.

Similarly, the fifth bit field in the fifth downlink control information indicates that the third uplink control information corresponds to the first priority.

Further, a position of the first bit field in the first downlink control information is the same as a position of the second bit field in the second downlink control information. A position of the fifth bit field in the fifth downlink control information may be the same as the position of the second bit field in the second downlink control information.

To enable the terminal device to distinguish between the first priority and the second priority based on downlink control information, the third bit field in the third downlink control information indicates that the second uplink control information corresponds to the second priority. Specifically, the third bit field in the third downlink control information indicates that the second downlink data information corresponds to the second priority. Therefore, the third downlink control information indirectly indicates (that is, implicitly indicates) that the second uplink control information directed to by the third downlink control information corresponds to the second priority.

Further, a position of the third bit field in the third downlink control information is the same as the position of the second bit field in the second downlink control information. It should be understood that a value of the second bit field is different from a value of the third bit field, so that the terminal device determines different priorities based on different values of bit fields.

Further, the position of the third bit field in the third downlink control information is the same as the position of the fifth bit field in the fifth downlink control information.

Similarly, the fourth bit field in the fourth downlink control information indicates that the second uplink data information corresponds to the second priority. In other words, the fourth downlink control information is used to explicitly notify that the second uplink data information scheduled or configured by using the fourth downlink control information corresponds to the second priority.

Further, the position of the first bit field in the first downlink control information is the same as a position of the fourth bit field in the fourth downlink control information.

For example, if a bit field (for example, the first bit field, the second bit field, or the fifth bit field) that is used to indicate a priority in downlink control information (for example, the first downlink control information, the second downlink control information, or the fifth downlink control information) is set to '0', it indicates that uplink data information (for example, the first uplink data information) or uplink control information (for example, the first uplink control information or the third uplink control information) configured, scheduled, or triggered by using the downlink control information (for example, the first downlink control information or the second downlink control information) corresponds to the first priority. If a bit field (for example, the third bit field or the fourth bit field) in downlink control information (for example, the third downlink control information or the fourth downlink control information) is set to '1', it indicates that uplink data information or uplink control information (for example, the second uplink data information or the second uplink control information) configured, scheduled, or triggered by using the downlink control information corresponds to the second priority.

Manner (2): The first downlink control information is located in the first search space (search space). For example, the first downlink control information is DCI. It should be understood that search space is an area in which the terminal device blindly detects DCI on a PDCCH. The search space may be user search space (UE-specific search space, USS) or common search space (common search space, CSS).

Similarly, the second downlink control information is located in the first search space. It should be understood that a PDCCH in which the first downlink control information is located may be the same as or different from a PDCCH in which the second downlink control information is located, but search space on the PDCCH may be the first search space.

Similarly, the fifth downlink control information is located in the first search space.

To distinguish between the first priority and the second priority, the third downlink control information is located in the second search space, and similarly, the fourth downlink control information is located in the second search space. Further, the second search space is different from the first search space. For example, the second search space is USS, and the first search space is CSS. If the terminal device detects downlink control information in the CSS, it indicates that uplink data information (for example, the first uplink data information) or uplink control information (for example, the first uplink control information or the third uplink control information) configured, scheduled, or triggered by using the downlink control information (for example, the first downlink control information, the second downlink control information, or the fifth downlink control information) corresponds to the first priority. If the terminal device detects downlink control information (for example, the third downlink control information or the fourth downlink control information) in the USS, it indicates that uplink data information (for example, the second uplink data information) or uplink control information (for example, the second uplink control information) configured, scheduled, or triggered by using the downlink control information corresponds to the second priority.

For another example, the second search space is CSS, and the first search space is USS. If the terminal device detects downlink control information (for example, the first downlink control information, the second downlink control information, or the fifth downlink control information) in the USS, it indicates that uplink data information (for example, the first uplink data information) or uplink control information (for example, the first uplink control information or the third uplink control information) configured, scheduled, or triggered by using the downlink control information corresponds to the first priority. If the terminal device detects downlink control information (for example, the third downlink control information or the fourth downlink control information) in the CSS, it indicates that uplink data information or uplink control information (for example, the second uplink control information) configured, scheduled, or triggered by using the downlink control information corresponds to the second priority.

Manner (3): The first downlink control information is located in the first PDCCH occasion (PDCCH occasion) set. In this application, a PDCCH occasion set is also referred to as a PDCCH monitoring occasion (PDCCH monitoring occasion), and is a set of time-frequency resources that are configured by the network device for the terminal device and are used to monitor (monitor) a PDCCH. The terminal device monitors DCI in the PDCCH occasion set configured by the network device, and does not monitor the DCI in a time unit other than the PDCCH occasion set.

Similarly, the second downlink control information is located in the first PDCCH occasion set. It should be understood that a PDCCH in which the first downlink control information is located may be the same as or different from a PDCCH in which the second downlink control information is located, but the first downlink control information and the second downlink control information are located in the same first PDCCH occasion set.

Similarly, the fifth downlink control information is located in the first PDCCH occasion set.

To distinguish between the first priority and the second priority, the third downlink control information is located in the second PDCCH occasion set, and the fourth downlink control information is located in the second PDCCH occasion set. In other words, downlink control information detected by the terminal device in different PDCCH occasion sets respectively corresponds to different priorities. Further, a time-frequency resource included in the second PDCCH occasion set is different from a time-frequency resource included in the first PDCCH occasion set. For example, periodicities corresponding to time units included in the first PDCCH occasion set and the second PDCCH occasion set are different. Therefore, downlink control information detected by the terminal device in the first PDCCH occasion set is downlink control information with the first priority, and downlink control information detected by the terminal device in the second PDCCH occasion set is downlink control information with the second priority.

Manner (4): The first downlink control information corresponds to the first downlink control information format (DCI format). A DCI format is a DCI format used to carry downlink control information.

Similarly, the second downlink control information corresponds to the first DCI format.

Similarly, the fifth downlink control information corresponds to the first DCI format.

To distinguish between the first priority and the second priority, the third downlink control information corresponds to the second DCI format, and the fourth downlink control information corresponds to the second DCI format. In other words, different DCI formats detected by the terminal device respectively correspond to different priorities. Further, the first DCI format is different from the second DCI format. For example, a payload size (payload size) of the first DCI format is less than a payload size of the second DCI format. For another example, the first DCI format is a DCI format 0_0 or a DCI format 1_0, and the second DCI format is a DCI format 1_0 or a DCI format 1_1.

Manner (5): The first downlink control information corresponds to the first radio network temporary identifier RNTI. An RNTI is used to scramble an identifier of downlink control information, and different RNTIs correspond to different control information types.

Similarly, the second downlink control information corresponds to the first radio network temporary identifier RNTI.

Similarly, the fifth downlink control information corresponds to the first radio network temporary identifier RNTI.

To distinguish between the first priority and the second priority, the third downlink control information corresponds to the second RNTI, and the fourth downlink control information corresponds to the second RNTI. In other words, downlink control information that is detected by the terminal device and for which different RNTIs are used respectively corresponds to different priorities.

Further, the second RNTI is a C-RNTI or a CS-RNTI.

Further, the first RNTI is an RNTI other than the C-RNTI or an RNTI other than the CS-RNTI. For example, the second RNTI is an MCS-C-RNTI.

For example, if the terminal device detects downlink control information (for example, the first downlink control information, the second downlink control information, or the fifth downlink control information) in the first PDCCH occasion set, or detected downlink control information (for example, the first downlink control information, the second downlink control information, or the fifth downlink control information) corresponds to the first DCI format or the first RNTI, it indicates that uplink data information (for example, the first uplink data information) or uplink control information (for example, the first uplink control information or the third uplink control information) configured, scheduled, or triggered by using the downlink control information corresponds to the first priority. If the terminal device detects downlink control information (for example, the third downlink control information) in the second PDCCH occasion set, or detected downlink control information (for example, the third downlink control information) corresponds to the second DCI format or the second RNTI, it indicates that uplink data information or uplink control information (for example, the second uplink control information) configured, scheduled, or triggered by using the downlink control information corresponds to the second priority.

That the first priority is higher than the second priority may be reflected in a mapping relationship between the first uplink information and the second uplink control information on the first uplink channel. Specifically, for different information forms of the first uplink information and the second uplink information, the following separately describes an information mapping manner and an information sending method in the embodiments of this application with reference to specific scenario examples.

First, before a specific scenario embodiment is described, an information mapping order and an information mapping manner in the embodiments of this application are described as follows:
For information A and information B that are carried on the uplink channel and are separately encoded, there are two mapping orders between a time-frequency resource (a time-frequency resource #B) used to carry the information B and a time-frequency resource (a time-frequency resource #A) used to carry the information A (that is, a mapping order 1 and a mapping order 2).

The information A is the first uplink data information (the time-frequency resource #A is the first time-frequency resource), the information A is the first uplink control information (the time-frequency resource #A is the first time-frequency resource), the information A is the second uplink control information (the time-frequency resource #A is the second time-frequency resource), the information A is the second uplink data information (the time-frequency resource #A is the second time-frequency resource), or the information A is the third uplink control information (the time-frequency resource #A is the third time-frequency resource). The information B is different from the information A. The information B is the first uplink data information (the time-frequency resource #B is the first time-frequency resource), the information B is the first uplink control information (the time-frequency resource #B is the first time-frequency resource), the information B is the second uplink control information (the time-frequency resource #B is the first time-frequency resource), the information B is the second uplink data information, or the information B is the third uplink control information (the time-frequency resource #B is the third time-frequency resource).

In addition, the time-frequency resource #A may be a time-frequency resource to which information obtained after the information A is encoded and modulated is mapped. It should be understood that after the information A is mapped, a part or all of the time-frequency resource #A may be punctured. Alternatively, the time-frequency resource #A may be a time-frequency resource remaining after a time-frequency resource to which information obtained after the information A is encoded and modulated is mapped is punctured by using other information. The time-frequency resource #B may be a time-frequency resource to which information obtained after the information B is encoded and modulated is mapped. It should be understood that after the information B is mapped, a part or all of the time-frequency resource #B may be punctured. Alternatively, the time-frequency resource #B may be a time-frequency resource remaining after a time-frequency resource to which information obtained after the information B is encoded and modulated is mapped is punctured by using other information.

Mapping order 1: The time-frequency resource carrying the information B is later than the time-frequency resource carrying the information A. In other words, the time-frequency resource #B is later than the time-frequency resource #A.

Optionally, the time-frequency resource #A is earlier than the time-frequency resource #B in time domain, and/or the time-frequency resource #A is lower than the time-frequency resource #B in frequency domain.

It should be understood that, that the time-frequency resource used to carry (or map) the information B is later than the time-frequency resource used to carry (or map) the information A means that the information B is located after the information A in terms of the mapping order. In other words, the information B is later than the information A. In other words, the information B is mapped after the information A.

The mapping order described in this application is frequency domain first time domain second (frequency first time second). A mapping order in time domain is a time order or an ascending order of time-domain symbols, and a mapping order in frequency domain is an ascending order of subcarrier sequence numbers or an ascending order of frequencies.

It should be understood that the mapping order in the embodiments of this application is not limited to a form of time domain first frequency domain second, and mapping may alternatively be performed in order of frequency domain first time domain second.

It should be understood that, for mapping of a type of information (the information A or the information B) on the uplink channel, a sequence obtained after the information is modulated and encoded is also mapped to the uplink channel in a mapping order of frequency domain first time domain second. Further, mapping may be performed in ascending order of time-domain symbol sequence numbers in time domain, and mapping may be performed in ascending order of subcarrier sequence numbers in frequency domain. Still further, the sequence corresponding to the information is preferentially mapped to available subcarriers of a same time-domain symbol in order (in ascending order of sequence numbers). If mapping is performed on all available subcarriers of one time-domain symbol, mapping continues to be performed on available subcarriers of a next time-domain symbol.

For example, for an information sequence a1, a2, ..., aj, ..., aA obtained after the information A is modulated and encoded, where j is greater than or equal to 0, j is less than or equal to A, and A is a quantity of modulation symbols obtained after the information A is modulated and encoded, a time-domain symbol corresponding to an earlier modulation symbol aj in the information A is earlier than a time-domain symbol corresponding to a later modulation symbol aj+1 in the information A, or when time-domain symbols corresponding to aj and aj+1 are the same, a subcarrier sequence number corresponding to aj is less than a subcarrier sequence number corresponding to aj+1.

Similarly, for an information sequence b1, b2, ..., bj, ..., bB obtained after the information B is modulated and encoded, where j is greater than or equal to 0, j is less than or equal to B, and B is a quantity of modulation symbols obtained after the information B is modulated and encoded, a time-domain symbol corresponding to an earlier modulation symbol bj in the information B is earlier than a time-domain symbol corresponding to a later modulation symbol bj+1 in the information B, or when time-domain symbols corresponding to bj and bj+1 are the same, a subcarrier sequence number corresponding to bj is less than a subcarrier sequence number corresponding to bj+1.

Optionally, the time-frequency resource #B is included in a remaining time-frequency resource other than the time-frequency resource #A on the uplink channel. For example, all available time-frequency resources on the uplink channel are a time-frequency resource #P, the time-frequency resource used to carry the information A is the time-frequency resource #A, and the time-frequency resource #A is a time-frequency resource occupied by the information A that is mapped in an order of frequency first time second in the time-frequency resource #P. In this case, the time-frequency resource #B used to carry the information B is included in a time-frequency resource other than the time-frequency resource #A in the time-frequency resource #P. In a mapping order of frequency first time second, because the time-frequency resource #A does not need to consider avoiding the information B, the time-frequency resource #A occupies an earlier time-domain symbol or a lower frequency than the time-frequency resource #B.

Further, the time-frequency resource #A is a time-frequency resource occupied by the information A that is mapped in a mapping order of frequency first time second in the time-frequency resource #P. The time-frequency resource #B is a time-frequency resource occupied by the information B that is mapped in a mapping order of frequency first time second in a time-frequency resource other than the time-frequency resource #A in the time-frequency resource #P.

Further, for an RE #b in the time-frequency resource #B and an RE #a in the time-frequency resource #A, a time-domain symbol corresponding to the RE #b is later than a time-domain symbol corresponding to the RE #a (for example, when the RE #b and the RE #a are located on different time-domain symbols). For example, when the RE #b and the RE #a are located on different time-domain symbols, the RE #b is later than the RE #a in terms of time. Alternatively, the RE #b is higher than the RE #a in terms of frequency (or it is considered that a subcarrier sequence number corresponding to the RE #b is greater than a subcarrier sequence number corresponding to the RE #a). For example, when the RE #b and the RE #a are located on a same time-domain symbol, the RE #b is higher than the RE #a in terms of frequency.

The RE #b in the time-frequency resource #B may be a start RE of the time-frequency resource #B, that is, an RE corresponding to b1, or may be an end RE of the time-frequency resource #B, that is, an RE corresponding to bB, or may be any RE in the time-frequency resource #B. The RE #a in the time-frequency resource #A may be a start RE of the time-frequency resource #A, that is, an RE corresponding to a1, or may be an end RE of the time-frequency resource #A, that is, an RE corresponding to aA, or may be any RE in the time-frequency resource #A.

If the RE #a and the RE #b are located on a same time-domain symbol, the RE #a may be a start RE (that is, an RE with a smallest subcarrier sequence number in subcarriers corresponding to the time-frequency resource #A on the time-domain symbol) located on the time-domain symbol in REs of the time-frequency resource #A, or may be an end RE (an RE with a largest subcarrier sequence number in subcarriers corresponding to the time-frequency resource #A on the time-domain symbol) located on the time-domain symbol in REs of the time-frequency resource #A, or may be any RE located on the time-domain symbol in REs of the time-frequency resource #A. The RE #b may be a start RE (that is, an RE with a smallest subcarrier sequence number in subcarriers corresponding to the time-frequency resource #B on the time-domain symbol) located on the time-domain symbol in REs of the time-frequency resource #B, or may be an end RE (that is, an RE with a largest subcarrier sequence number in subcarriers corresponding to the time-frequency resource #B on the time-domain symbol) located on the time-domain symbol in REs of the time-frequency resource #B, or may be any RE located on the time-domain symbol in REs of the time-frequency resource #B.

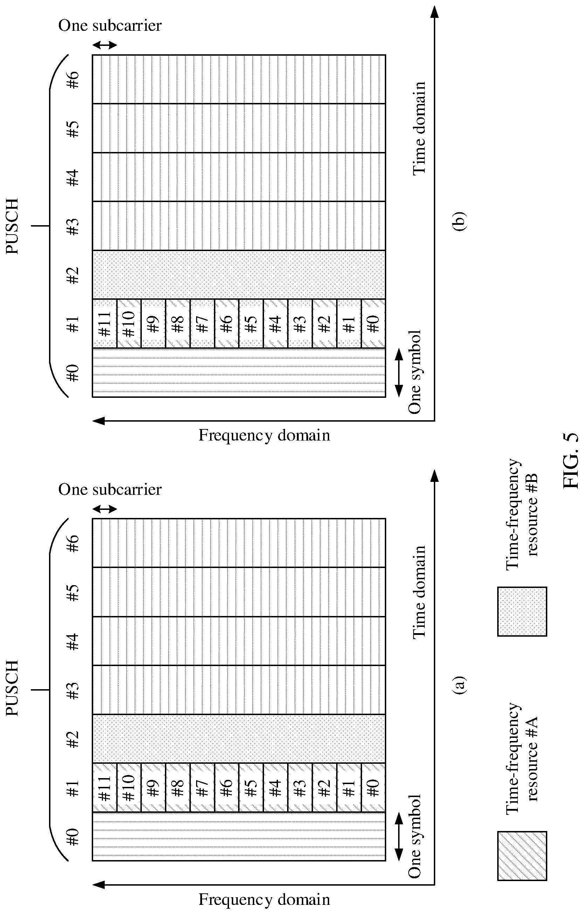

Optionally, the first time-domain symbol of the time-frequency resource #B is the last time-domain symbol of the time-frequency resource #A. As shown in (b) of FIG. 5, the last symbol of the first time-frequency resource (the time-frequency resource #A) is a symbol #1, and is equivalent to the first symbol of the second time-frequency resource (the time-frequency resource #B).

For example, the start RE of the time-frequency resource #B is the first RE (that is, the RE with the smallest subcarrier sequence number) in the last time-domain symbol of the time-frequency resource #A.

Optionally, the first time-domain symbol of the time-frequency resource #B is a next time-domain symbol of the last time-domain symbol of the time-frequency resource #A. As shown in (a) of FIG. 5, the last symbol of the first time-frequency resource (the time-frequency resource #A) is a symbol #1, and the first symbol of the second time-frequency resource (the time-frequency resource #B) is a symbol #2 and is a next symbol of the symbol #1.

For example, the start RE of the time-frequency resource #B is the first RE of the next time-domain symbol of the last time-domain symbol of the time-frequency resource #A.

Further, the start RE (the RE corresponding to b1) of the time-frequency resource #B is an earliest RE that corresponds in a mapping order of frequency first time second in a time-frequency resource other than the time-frequency resource #A in the time-frequency resource #P.

For example, the start RE of the time-frequency resource #B is a next RE of the first RE (that is, the RE with the smallest subcarrier sequence number) in the last symbol of the time-frequency resource #A. As shown in (b) of FIG. 5, the first RE in the last symbol of the first time-frequency resource (the time-frequency resource #A) is a symbol #1 and a subcarrier #0, and the start RE of the second time-frequency resource (the time-frequency resource #B) is the symbol #1 and a subcarrier #1, and is a next RE of the start RE of the first time-frequency resource.

For another example, the start RE of the time-frequency resource #B is a next RE of the end RE of the time-frequency resource #A, or the start RE of the time-frequency resource #B is the first RE (with the smallest subcarrier sequence number) in a next time-domain symbol of the last symbol of the time-frequency resource #A. As shown in (a) of FIG. 5, the end RE of the first time-frequency resource (the time-frequency resource #A) is a symbol #1 and a subcarrier #11, and the start RE of the second time-frequency resource (the time-frequency resource #B) is a symbol #2 and a subcarrier #0, and is a next RE of the end RE of the first time-frequency resource.

It should be understood that the next RE herein is a next RE on which mapping is performed in a mapping order of frequency domain first time domain second. For example, if the RE #b is a next RE of the RE #a, the RE #b and the RE #a are located on a same time-domain symbol, and a subcarrier (a subcarrier sequence number i) corresponding to the RE #b may be a next subcarrier (a subcarrier sequence number i+1) of a subcarrier corresponding to the RE #a, or may be a subcarrier, that may be used for uplink information mapping, with a smallest subcarrier sequence number on the time-domain symbol in subcarriers that are not occupied by the time-frequency resource #A. Alternatively, a time-domain symbol corresponding to the RE #b is a next symbol of a time-domain symbol corresponding to the RE #a.

Optionally, the time-frequency resource #B is a time-frequency resource that is occupied by the information B mapped in an order of frequency domain first time domain second in a remaining time-frequency resource other than the time-frequency resource #A on the uplink channel starting from the first time-domain symbol after the earliest group of consecutive time-domain symbols that carry DMRSs or the earliest time-domain symbol that does not carry a DMRS on the uplink channel. Because the time-frequency resource #A used to carry the information A needs to be skipped when the information B is mapped, the time-frequency resource #B is determined based on the time-frequency resource #A.

In an implementation, when the uplink channel is a PUCCH, that is, both the information A and the information B are mapped to the PUCCH, an RB is a time-frequency resource granularity for carrying uplink control information. In this case, in a resource mapping order of the uplink channel, the time-frequency resource to which the information B is mapped is after the time-frequency resource to which the information A is mapped. For example, the mapping order herein is a descending order in terms of frequency (in terms of frequency, the time-frequency resource to which the information A is mapped is higher than the time-frequency resource to which the information B is mapped), or an ascending order (in terms of frequency, the time-frequency resource to which the information A is mapped is lower than the time-frequency resource to which the information B is mapped).

Optionally, a start RB to which the information B is mapped is later than an end RB to which the information A is mapped. Further, the start RB to which the information B is mapped is a next RB of the end RB to which the information A is mapped. The next RB herein is a next RB of the end RB to which the information A is mapped in an RB set included in the PUCCH channel. For example, the start RB to which the information B is mapped is a next RB whose RB sequence number is greater than that of the end RB to which the information A is mapped in the RB set included in the PUCCH channel, or is a next RB whose RB sequence number is less than that of the end RB to which the information A is mapped in the RB set. For example, the time-frequency resource used to carry the information A corresponds to an RB #k to an RB #k+x, and the time-frequency resource used to carry the information B corresponds to an RB #k+x+1 to an RB #k+x+1+y or an RB #k-1-y to an RB #k-1, where x is an integer greater than or equal to 0, y is an integer greater than or equal to 0, and k is an integer greater than or equal to 0.

Optionally, a start time-domain symbol to which the information B is mapped is later than an end time-domain symbol to which the information A is mapped. For example, the time-frequency resource used to carry the information A corresponds to a symbol #k' to a symbol #k'+x', and the time-frequency resource used to carry the information B corresponds to a symbol #k'+x'+1 to a symbol #k'+x'+1+y' or a symbol #k'-1-y' to a symbol #k'-1, where x' is an integer greater than or equal to 0, y' is an integer greater than or equal to 0, and k' is an integer greater than or equal to 0.

Optionally, in terms of time, a start RB to which the information B is mapped is later than a start RB to which the information A is mapped, or in terms of time, an end RB to which the information B is mapped is later than an end RB to which the information A is mapped. Further, the start RB to which the information B is mapped is a next RB of the start RB to which the information A is mapped.

Optionally, a time interval between a time-domain symbol corresponding to the time-frequency resource #A and a demodulation reference signal DMRS symbol of the uplink channel is less than a time interval between a time-domain symbol corresponding to the second time-frequency resource and the DMRS symbol, and/or the time-frequency resource #A is lower than the time-frequency resource #B in frequency domain.

Specifically, the time interval between the time-frequency resource #B and the symbol carrying a DMRS (which is referred to as a DMRS #1) on the uplink channel is greater than a distance (which is also referred to as the time interval) between the time-frequency resource #A and the symbol carrying the DMRS #1. More specifically, for the RE #b in the time-frequency resource #B and the RE #a in the time-frequency resource #A, a time interval between a time-domain symbol in which the RE #b is located and a time-domain symbol in which the DMRS #1 is located is greater than a time interval between a time-domain symbol in which the RE #a is located and the time-domain symbol in which the DMRS #1 is located (for example, when the RE #b and the RE #a are located on different time-domain symbols). For example, when the RE #b and the RE #a are located on different time-domain symbols, a time interval between the RE #b and the DMRS #1 is greater than a time interval between the RE #a and the DMRS #1. Alternatively, the RE #b is higher than the RE #a in terms of frequency (or it is considered that a subcarrier sequence number corresponding to the RE #b is greater than a subcarrier sequence number corresponding to the RE #a). For example, when the RE #b and the RE #a are located on a same time-domain symbol, the RE #b is higher than the RE #a in terms of frequency. Definitions of the RE #a and the RE #b are described above, and details are not described again.

Optionally, the DMRS #1 is an earliest DMRS carried on the uplink channel. Optionally, the DMRS #1 is any DMRS on the uplink channel.

It should be understood that a start RE/RB (or an end RE/RB) to which the foregoing information (for example, the information A or the information B) is mapped is, in a mapping order or according to a mapping step from information to a time-frequency resource, an RE/RB to which the foregoing information is first mapped (or an RE/RB to which the foregoing information is last mapped) or an earliest RE/RB (or a latest RE/RB) in a time-frequency resource used to carry the foregoing information. For example, the start RE/RB is an RE/RB corresponding to an earliest time-domain symbol in time domain and a subcarrier with a lowest frequency (a smallest subcarrier sequence number) in a time-frequency resource used to map the information in a mapping order of frequency domain first time domain second. The end RE/RB is an RE/RB corresponding to a latest time-domain symbol in time domain and a subcarrier with a highest frequency (a largest subcarrier sequence number/a largest RB sequence number) in a time-frequency resource used to map the information in a mapping order of frequency domain first time domain second.

Mapping order 2: Mapping of the information B to the uplink channel is later than mapping of the information A to the uplink channel according to a mapping step.

Optionally, mapping performed by the terminal device on the information B is later than mapping performed by the terminal device on the information A according to a mapping step. For example, the terminal device first maps the information A, and then maps the information B after completing mapping of the information A.

Further, the information A and the information B may be multiplexed on the uplink channel in a rate matching manner.

For information C and information D that are carried on the uplink channel and are separately encoded, there may be three mapping manners (that is, a mapping manner 1 to a mapping manner 3) between a time-frequency resource (a time-frequency resource #D) used to carry the information D and a time-frequency resource (a time-frequency resource #C) used to carry the information C.

The information C may be the first uplink data information (the time-frequency resource #C is the first time-frequency resource), the information C may be the first uplink control information (the time-frequency resource #C is the first time-frequency resource), the information C may be the second uplink control information (the time-frequency resource #C is the second time-frequency resource), the information C may be the second uplink data information (the time-frequency resource #C is the second time-frequency resource), or the information C is the third uplink control information (the time-frequency resource #C is the third time-frequency resource). The information D is different from the information C. The information D may be the first uplink data information (the time-frequency resource #D is the first time-frequency resource), the information D is the first uplink control information (the time-frequency resource #D is the first time-frequency resource), the information D is the second uplink control information (the time-frequency resource #D is the second time-frequency resource), the information D is the second uplink data information (the time-frequency resource #D is the second time-frequency resource), or the information D is the third uplink control information (the time-frequency resource #D is the third time-frequency resource).

Mapping manner 1: The information C and the information D are multiplexed on the uplink channel in a rate matching manner.

In other words, the terminal device maps the information C after encoding to the time-frequency resource #C, and maps the information D after encoding to the time-frequency resource #D. After the information C and the information D are mapped or multiplexed, the information is not discarded. In other words, after completing mapping of the information D, the terminal device does not use the information C to puncture the mapped information D. In other words, the time-frequency resource #D carries complete information of the information D, and the time-frequency resource #C carries complete information of the information C. The complete information herein is complete information obtained after uplink information (for example, the information C or the information D) is encoded, for example, encoded information obtained after the uplink information is encoded based on a size of a corresponding time-frequency resource (for example, the information C is encoded based on the time-frequency resource #C, or the information D is encoded based on the time-frequency resource #D). That encoding is performed based on a size of a corresponding time-frequency resource specifically means that a code rate of the uplink information is determined based on the size of the corresponding time-frequency resource.

Further, the time-frequency resource #C and the time-frequency resource #D do not overlap.

Optionally, a size of the time-frequency resource #C is determined based on a size (that is, a quantity of bits) of the information C. For example, a quantity of REs included in the time-frequency resource #C linearly increases as the quantity of bits of the information C increases.

Optionally, a size of the time-frequency resource #D is determined based on a size (that is, a quantity of bits) of the information D. For example, a quantity of REs included in the time-frequency resource #D linearly increases as the quantity of bits of the information D increases.

Optionally, a time-frequency position of the time-frequency resource #C on the uplink channel depends on the size of the time-frequency resource #D and/or a time-frequency position of the time-frequency resource #D on the uplink channel.

In other words, the time-frequency position of the time-frequency resource #C on the uplink channel is determined based on the size of the time-frequency resource #D and/or the time-frequency position of the time-frequency resource #D on the uplink channel. For example, when the terminal device sends the information D on the uplink channel at different time-frequency positions of the time-frequency resource #D, time-frequency positions of the time-frequency resource #C are different.

Further, the time-frequency position of the time-frequency resource #C on the uplink channel depends on the size of the information D (that is, the quantity of bits of the information D, for example, a quantity of system information bits), and/or the time-frequency position of the time-frequency resource #C on the uplink channel depends on whether the terminal device sends the information D on the uplink channel.

Optionally, the time-frequency position of the time-frequency resource #D on the uplink channel depends on the size of the information C (that is, the quantity of bits of the information C, for example, a quantity of system information bits), and/or the time-frequency position of the time-frequency resource #D on the uplink channel depends on whether the terminal device sends the information C on the uplink channel.

In other words, the time-frequency position of the time-frequency resource #D on the uplink channel is determined based on the size of the information C. In addition, the time-frequency position of the time-frequency resource #D on the uplink channel is determined based on whether the terminal device sends the information C on the uplink channel. For example, when the terminal device sends the information C on the uplink channel, and when the terminal device does not send the information C on the uplink channel, time-frequency positions of the time-frequency resource #D are different. For another example, when the terminal device sends information C corresponding to different quantities of bits on the uplink channel, time-frequency positions of the time-frequency resource #D are different.

For example, the information C is the first uplink information, and the information D is the second uplink information. The terminal device may respectively map the first uplink information and the second uplink information to the first time-frequency resource and the second time-frequency resource in a rate matching manner, send the first uplink information on the first time-frequency resource, and send the second uplink information on the second time-frequency resource.

It should be understood that, that the terminal device maps the first uplink information to the first time-frequency resource and maps the second uplink information to the second time-frequency resource in the rate matching manner may include: The terminal device first maps the first uplink information to the first time-frequency resource, and then maps the second uplink information to the second time-frequency resource.

Correspondingly, the network device receives, on the first time-frequency resource, the first uplink information sent by the terminal device, and receives, on the second time-frequency resource, the second uplink information sent by the terminal device, where the first uplink information and the second uplink information are mapped to the first time-frequency resource and the second time-frequency resource in the rate matching manner.

Mapping manner 2: The information D is punctured by using the information C. In other words, the terminal device punctures a part or all of the information D that has been mapped to the uplink channel, to map the information C. In other words, the information C is used to puncture, on the time-frequency resource #C used to carry the information C, the information D that has been mapped, or the information C is used to puncture a part of the information D that has been mapped to the time-frequency resource #C used to carry the information C.

In other words, the terminal device first maps the information D to the time-frequency resource #D. Then, the terminal device maps the information C to the time-frequency resource #C, and discards information that has been mapped to a time-frequency resource #D' in the information D. The time-frequency resource #D' is an overlapping time-frequency resource of the time-frequency resource #C and the time-frequency resource #D (for example, the time-frequency resource #D' is the first overlapping time-frequency resource or the second overlapping time-frequency resource).

In this case, mapping of the information D to the uplink channel is earlier than mapping of the information C to the uplink channel according to a mapping step.

Optionally, a size of the time-frequency resource #C is determined based on a size of the information C. For example, a quantity of REs included in the time-frequency resource #C linearly increases as a quantity of bits of the information C increases.

Optionally, a size of the time-frequency resource #D is determined based on a size of the information D. For example, a quantity of REs included in the time-frequency resource #D linearly increases as a quantity of bits of the information D increases.

Specifically, it is assumed that the time-frequency resource #C is a time-frequency resource used to carry the information C, and the time-frequency resource #D is a time-frequency resource used to carry the information D. The terminal device first maps the information D to the time-frequency resource #D, then maps the information C to the time-frequency resource #C, and punctures a part of information D that has been mapped to the overlapping resource #D' of the time-frequency resource #C and the time-frequency resource #D (in other words, a part of information on the overlapping resource #D' is discarded). In other words, the terminal device punctures, on the overlapping resource #D', the part of information previously mapped to the overlapping resource #D' in the information D, to map the information C.

It should be understood that the time-frequency resource #D and the time-frequency resource #C may partially overlap. In other words, an overlapping time-frequency resource (for example, an overlapping RE set) of the time-frequency resource #D and the time-frequency resource #C is a part of the time-frequency resource #D and is a part of the time-frequency resource #C. The time-frequency resource #D may include the time-frequency resource #C. In other words, all REs of the time-frequency resource #C are included in the time-frequency resource #D. In this case, the overlapping time-frequency resource #D' of the time-frequency resource #C and the time-frequency resource #D is the time-frequency resource #C. The time-frequency resource #C may alternatively include the time-frequency resource #D. In other words, all REs of the time-frequency resource #D are included in the time-frequency resource #C. In this case, the overlapping time-frequency resource #D' of the time-frequency resource #C and the time-frequency resource #D is the time-frequency resource #D.

It should be understood that, after the information D is punctured by using the information C, the time-frequency resource #D, that is, a non-overlapping time-frequency resource #D", carries a part of information obtained after the information D is encoded. Before the information D is punctured, information that is mapped to the overlapping time-frequency resource of the time-frequency resource #C and the time-frequency resource #D in the information obtained after the information D is encoded is discarded. The non-overlapping time-frequency resource #D" is a time-frequency resource other than the overlapping time-frequency resource #D' in the time-frequency resource #D. In this case, it may be considered that the terminal device sends the information D on the non-overlapping time-frequency resource #D". The information D sent on the non-overlapping time-frequency resource #D" corresponds to system information of the information D, that is, information before encoding, that is, a part of the information D sent on the non-overlapping time-frequency resource #D". Herein, the part of the information D is specifically a part of the information obtained after the information D is encoded and modulated.

In this application, discarding may also be referred to as puncturing (puncture). Puncturing information D by using information C is also referred to as overriding (override) information D by using information C.

For example, the information C is the first uplink information, the information D is the second uplink information, and the information D is punctured by using the information C. A specific mapping process may be that the terminal device maps the second uplink information to the second time-frequency resource and the terminal device maps the first uplink information to the first time-frequency resource, and discards information that is in the second uplink information and that has been mapped to the first overlapping time-frequency resource, where the first overlapping time-frequency resource is an overlapping time-frequency resource of the first time-frequency resource and the second time-frequency resource. After mapping the information, the terminal device sends the first uplink information on the first time-frequency resource, and sends the second uplink information on a first non-overlapping time-frequency resource, where the first non-overlapping time-frequency resource is a time-frequency resource other than the first overlapping time-frequency resource in the second time-frequency resource.

Herein, the information sent by the terminal device on the first non-overlapping time-frequency resource is a part of the second uplink information.

Correspondingly, that the network device receives, on the first time-frequency resource and the second time-frequency resource, the information sent by the terminal device includes:
receiving, on the first time-frequency resource, the first uplink information sent by the terminal device, and receiving, on the first non-overlapping time-frequency resource, the second uplink information sent by the terminal device, where
the second uplink information is information that is sent on the first non-overlapping time-frequency resource when the terminal device maps the second uplink information to the second time-frequency resource and discards information that is in the second uplink information and that has been mapped to the first overlapping time-frequency resource, and the first uplink information is information that is mapped to the first time-frequency resource when the terminal device discards information that is in the second uplink information and that has been mapped to the first overlapping time-frequency resource.

It should be noted that if the second time-frequency resource is included in the first time-frequency resource (in other words, the second time-frequency resource is equivalent to the first overlapping time-frequency resource), that the terminal device sends the information on the first time-frequency resource and the second time-frequency resource may include: The terminal device sends the first uplink information on the first time-frequency resource. In this case, the information sent by the terminal device on the uplink channel does not include the second uplink information. In other words, all the second uplink information mapped to the second time-frequency resource is punctured by using the first uplink information.

Correspondingly, that the network device receives, on the first time-frequency resource and the second time-frequency resource, the information sent by the terminal device includes: The network device receives, on the first time-frequency resource, the first uplink information sent by the terminal device. In this case, the information received by the network device on the uplink channel does not include the first uplink information.

For another example, the information C is the first uplink information, the information D is the second uplink information, and the information C is punctured by using the information D. A specific mapping process may be to map the first uplink information to the first time-frequency resource, map the second uplink information to the second time-frequency resource, and discard information that is in the first uplink information and that has been mapped to the second overlapping time-frequency resource, where the second overlapping time-frequency resource is an overlapping time-frequency resource of the first time-frequency resource and the second time-frequency resource. After mapping the information, the terminal device sends the first uplink information on a second non-overlapping time-frequency resource, and sends the second uplink information on the second time-frequency resource, where the second non-overlapping time-frequency resource is a time-frequency resource other than the second overlapping time-frequency resource in the first time-frequency resource.

Herein, the information sent by the terminal device on the second non-overlapping time-frequency resource is a part of the first uplink information.

Correspondingly, that the network device receives, on the first time-frequency resource and the second time-frequency resource, the information sent by the terminal device includes:
receiving, on the second non-overlapping time-frequency resource, the first uplink information sent by the terminal device, and receiving, on the second time-frequency resource, the second uplink information sent by the terminal device, where
the first uplink information is information that is sent on the second non-overlapping time-frequency resource when the terminal device maps the first uplink information to the first time-frequency resource and discards information that is in the first uplink information and that has been mapped to the second overlapping time-frequency resource, and the second uplink information is information that is mapped to the second time-frequency resource when the terminal device discards information that is in the first uplink information and that has been mapped to the second overlapping time-frequency resource.

It should be noted that, if the first time-frequency resource is included in the second time-frequency resource (that is, the first time-frequency resource is equivalent to the second overlapping time-frequency resource), that the terminal device sends the information on the first time-frequency resource and the second time-frequency resource includes: The terminal device sends the second uplink information on the second time-frequency resource. In this case, the information sent by the terminal device on the uplink channel does not include the first uplink information. In other words, all the first uplink information mapped to the first time-frequency resource is punctured by using the second uplink information.

Correspondingly, that the network device receives, on the first time-frequency resource and the second time-frequency resource, the information sent by the terminal device includes: The network device receives, on the second time-frequency resource, the second uplink information sent by the terminal device. In this case, the information received by the network device on the uplink channel does not include the second uplink information.

Mapping manner 3: When mapping the information D, the terminal device avoids the reserved time-frequency resource #C used to carry the information C. The time-frequency resource #C used to carry the information C is also referred to as a reserved resource for the information C.

It should be understood that "avoiding" in this application indicates that the terminal device skips the reserved time-frequency resource used to carry the information C and maps the information D to a resource following the reserved resource when mapping the information D.

That the time-frequency resource #C is a reserved resource for the information C means that the time-frequency resource #C is used to carry or send the potential information C. In other words, if the terminal device sends (or needs to send) the information C on the uplink channel, the terminal device sends the information C on the time-frequency resource #C. If the terminal device does not send (or does not need to send) the information C on the uplink channel, the terminal device may send other uplink information on the time-frequency resource #C, or does not send (or does not map) any information.

In this case, mapping of the information D to the uplink channel is earlier than mapping of the information C to the uplink channel according to a mapping step. Regardless of whether the terminal device needs to send the information C on the uplink channel, the terminal device avoids the reserved resource for the information C when mapping the information D.

Before the information C is mapped, the reserved resource may be used to map other uplink information besides the information C and the information D, for example, uplink control information or uplink data information, specifically, for example, UL-SCH information and/or CSIpart 2. Alternatively, the reserved resource may not be used to map any information.

Further, the time-frequency resource #C and the time-frequency resource #D do not overlap.

If the terminal device actually needs to send the information C on the uplink channel (in other words, the information sent by the terminal device on the uplink channel includes the information C), the terminal device maps the information C to the reserved resource. For example, the terminal device punctures the foregoing other uplink information that has been mapped to the reserved resource. If the terminal device does not need to send the information C on the uplink channel (in other words, the information sent by the terminal device on the uplink channel does not include the information C), the terminal device does not map the information C to the reserved resource. For example, the terminal device sends the foregoing other uplink information on or does not map the uplink information to the reserved resource. In other words, the information sent by the terminal device on the reserved resource does not include the information C.

Optionally, a time-frequency position of the time-frequency resource #C on the uplink channel is predefined, or preconfigured by the network device, and/or a size of the time-frequency resource #C is predefined, or preconfigured by the network device. In other words, the size of the time-frequency resource #C is not determined based on a size of the information C.

Optionally, a size of the time-frequency resource #D is determined based on a size of the information D. For example, a quantity of REs included in the time-frequency resource #D linearly increases as a quantity of bits of the information D increases.

Optionally, a time-frequency position of the time-frequency resource #C on the uplink channel is indicated by the network device, and/or a size of the time-frequency resource #C is indicated by the network device.

Therefore, regardless of a size (a quantity of bits) of the information C sent by the terminal device on the uplink channel, the terminal device avoids a reserved resource, at a predefined or preconfigured position, for the information C corresponding to the predefined or preconfigured position and/or size when mapping the information D.

On the one hand, the time-frequency position of the time-frequency resource #C on the uplink channel does not depend on the size of the time-frequency resource #D and/or a time-frequency position of the time-frequency resource #D on the uplink channel.

In other words, factors used to determine the time-frequency position of the time-frequency resource #C on the uplink channel do not include the size of the time-frequency resource #D and/or the time-frequency position of the time-frequency resource #D on the uplink channel. For example, when the terminal device sends the information D on the uplink channel at different time-frequency positions of the time-frequency resource #D, time-frequency positions of the time-frequency resource #C are the same.

Further, the time-frequency position of the time-frequency resource #C on the uplink channel does not depend on the size of the information D (that is, the quantity of bits of the information D, for example, a quantity of system information bits), and/or the time-frequency position of the time-frequency resource #C on the uplink channel does not depend on whether the terminal device sends the information D on the uplink channel.

On the other hand, the time-frequency position of the time-frequency resource #D on the uplink channel does not depend on the size of the information C (that is, the quantity of bits of the information C, for example, a quantity of system information bits), and/or the time-frequency position of the time-frequency resource #D on the uplink channel does not depend on whether the terminal device sends the information C on the uplink channel.

In other words, factors used to determine the time-frequency position of the time-frequency resource #D on the uplink channel do not include the size of the information C, and/or factors used to determine the time-frequency position of the time-frequency resource #D on the uplink channel do not include whether the terminal device sends the information C on the uplink channel. For example, when the terminal device sends the information C on the uplink channel, and when the terminal device does not send the information C on the uplink channel, time-frequency positions of the time-frequency resource #D are the same. For another example, when the terminal device sends information C corresponding to different quantities of bits on the uplink channel, time-frequency positions of the time-frequency resource #D are the same.

In this embodiment of this application, the time-frequency position of the time-frequency resource #C and the time-frequency position of the time-frequency resource #D are independent of each other, and the time-frequency position of the time-frequency resource #C and the time-frequency position of the time-frequency resource #D that are determined by the terminal device are correct. In other words, a case in which a size and/or a position of another time-frequency resource are/is incorrectly determined because a payload size of uplink information (the information C or the information D) corresponding to a time-frequency position of a time-frequency resource (the time-frequency resource #C or the time-frequency resource #D) is misunderstood (for example, DCI is incorrectly received), affecting decoding performance each other does not occur.

In this application, avoidance may also be referred to as skipping (skip).

For example, the information C is the first uplink information, and the information D is the second uplink information. The first time-frequency resource and the second time-frequency resource do not overlap, and the second uplink information avoids the first uplink information. In other words, when mapping the second uplink information on the uplink channel, the terminal device avoids the first time-frequency resource, regardless of whether the terminal device (needs to send) sends the first uplink information on the uplink channel.

It should be understood that the first time-frequency resource is predefined, or preconfigured by the network device. In other words, a size and/or a position of the first time-frequency resource are/is predefined, or preconfigured by the network device.

If the first uplink information is sent on the uplink channel, before the information is sent on the first time-frequency resource and the second time-frequency resource, the method further includes: mapping the second uplink information to the second time-frequency resource, and mapping the first uplink information to the first time-frequency resource. That the information is sent on the first time-frequency resource and the second time-frequency resource includes: sending the first uplink information on the first time-frequency resource, and sending the second uplink information on the second time-frequency resource. It should be understood that in this case, in this embodiment of this application, the second uplink information may be first mapped, and then the first uplink information is mapped.

Correspondingly, that the network device receives, on the first time-frequency resource and the second time-frequency resource, the information sent by the terminal device includes: receiving, on the first time-frequency resource, the first uplink information sent by the terminal device, and receiving, on the second time-frequency resource, the second uplink information sent by the terminal device.

Alternatively, if the first uplink information is not sent on the uplink channel, before the information is sent on the first time-frequency resource and the second time-frequency resource, the method further includes: mapping the second uplink information to the second time-frequency resource, and mapping fourth uplink information to the first time-frequency resource, where the fourth uplink information is different from the first uplink information. That the information is sent on the first time-frequency resource and the second time-frequency resource includes: sending the fourth uplink information on the first time-frequency resource, and sending the second uplink information on the second time-frequency resource. It should be understood that in this case, the second uplink information is first mapped, and then the fourth uplink information is mapped. It should be understood that the fourth uplink information is different from the first uplink information. For example, the fourth uplink information is UL-SCH information (corresponding to the first priority or the second priority) or CSIpart 2 (corresponding to the first priority or the second priority).

Correspondingly, that the network device receives, on the first time-frequency resource and the second time-frequency resource, the information sent by the terminal device includes: receiving, on the first time-frequency resource, the fourth uplink information sent by the terminal device, and receiving, on the second time-frequency resource, the second uplink information sent by the terminal device.

For another example, the information C is the first uplink information, and the information D is the second uplink information. The first time-frequency resource and the second time-frequency resource do not overlap, and the first uplink information avoids the second uplink information. In other words, when mapping the first uplink information on the uplink channel, the terminal device avoids the second time-frequency resource, regardless of whether the terminal device (needs to send) sends the second uplink information on the uplink channel.

It should be understood that the second time-frequency resource is predefined, or preconfigured by the network device. In other words, a size and/or a position of the second time-frequency resource are/is predefined, or preconfigured by the network device.

If the second uplink information is sent on the uplink channel, before the information is sent on the first time-frequency resource and the second time-frequency resource, the method further includes: mapping the first uplink information to the first time-frequency resource, and mapping the second uplink information to the second time-frequency resource. That the information is sent on the first time-frequency resource and the second time-frequency resource includes: sending the first uplink information on the first time-frequency resource, and sending the second uplink information on the second time-frequency resource. It should be understood that in this case, in this embodiment of this application, the first uplink information is first mapped, and then the second uplink information is mapped.

Correspondingly, that the network device receives, on the first time-frequency resource and the second time-frequency resource, the information sent by the terminal device includes: receiving, on the first time-frequency resource, the first uplink information sent by the terminal device, and receiving, on the second time-frequency resource, the second uplink information sent by the terminal device.

Alternatively, if the second uplink information is not sent on the uplink channel, before the information is sent on the first time-frequency resource and the second time-frequency resource, the method further includes: mapping the first uplink information to the first time-frequency resource, and mapping fifth uplink information to the second time-frequency resource, where the fifth uplink information is different from the second uplink information. That the information is sent on the first time-frequency resource and the second time-frequency resource includes: The terminal device sends the first uplink information on the first time-frequency resource, and sends the fifth uplink information on the second time-frequency resource. It should be understood that, in this case, the first uplink information is first mapped, and then the fifth uplink information is mapped. It should be understood that the fifth uplink information is different from the second uplink information. For example, the fifth uplink information is UL-SCH information (corresponding to the first priority or the second priority) or CSIpart 2 (corresponding to the first priority or the second priority).

Correspondingly, that the network device receives, on the first time-frequency resource and the second time-frequency resource, the information sent by the terminal device includes: receiving, on the first time-frequency resource, the first uplink information sent by the terminal device, and receiving, on the second time-frequency resource, the fifth uplink information sent by the terminal device.

With reference to a specific scenario, the following describes a specific uplink information mapping manner and a specific uplink information sending method in the embodiments of this application. Specifically, before a specific method for mapping and sending uplink information is described, a specific scenario to which the embodiments of this application may be applied is first described. As an example instead of a limitation, the embodiments of this application may be applied to the following three scenarios:

### Scenario 1:

The first uplink information is the first uplink data information corresponding to the first priority, and the second uplink information is the second uplink control information corresponding to the second priority.

### Scenario 2:

The first uplink information is the first uplink control information corresponding to the first priority, and the second uplink information is the second uplink control information corresponding to the second priority.

For example, the first uplink information is HARQ-ACK information corresponding to the first priority. For another example, the first uplink information is HARQ-ACK information corresponding to the first priority and SR information corresponding to the first priority.

For example, the second uplink information is HARQ-ACK information corresponding to the second priority. For another example, the second uplink information is HARQ-ACK information corresponding to the second priority and SR information corresponding to the second priority.

Optionally, in the scenario 2, the terminal device may further send, on the uplink channel, uplink data information with the first priority after the HARQ-ACK information corresponding to the second priority.

Optionally, in the scenario 2, the terminal device may further determine a third time-frequency resource on the uplink channel, and send information on the third time-frequency resource. For example, the terminal device sends the third uplink information on the third time-frequency resource.

The third uplink information includes third uplink control information corresponding to the first priority, the third uplink control information and the first uplink control information are separately encoded, and the third uplink control information and the second uplink control information are separately encoded.

The second time domain resource is earlier than the third time-frequency resource in time domain, and/or the second time-frequency resource is lower than the third time domain resource in frequency domain; or a time interval between the time-domain symbol corresponding to the second time-frequency resource and the demodulation reference signal DMRS symbol of the uplink channel is less than a time interval between a time-domain symbol corresponding to the third time-frequency resource and the DMRS symbol, and/or the second time-frequency resource is lower than the third time-frequency resource in frequency domain.

Therefore, the scenario 2 further includes: The terminal device sends the information (for example, the third uplink information) on the third time-frequency resource. Correspondingly, the network device receives the information (for example, the third uplink information) on the third time-frequency resource.

The third uplink information is different from the first uplink information.

For example, the first uplink information includes the HARQ-ACK information corresponding to the first priority (or the HARQ-ACK information corresponding to the first priority and the SR information corresponding to the first priority). The second uplink information includes the HARQ-ACK information corresponding to the second priority (or the HARQ-ACK information corresponding to the second priority and the SR information corresponding to the second priority). The third uplink information includes CSI corresponding to the first priority.

Further, the third uplink information includes CSI part 1 information corresponding to the first priority and CSIpart 2 corresponding to the first priority. Optionally, the third uplink information is the CSIpart 2 corresponding to the first priority.

### Scenario 3:

The first uplink information is CSI corresponding to the first priority, and the second uplink information is HARQ-ACK information corresponding to the second priority (or HARQ-ACK information corresponding to the second priority and SR information corresponding to the second priority).

Optionally, in the scenario 3, the terminal device may further send, on the uplink channel, HARQ-ACK information with the first priority before the HARQ-ACK information with the second priority.

It should be understood that, in the embodiments of this application, the first uplink information and the second uplink information may be combined in various manners.

The following separately describes the uplink information mapping method and the uplink information sending method in the embodiments of this application with reference to examples of the foregoing three specific scenarios.

Scenario 1: The first uplink information is the first uplink data information corresponding to the first priority, and the second uplink information is the second uplink control information corresponding to the second priority.

Specifically, the uplink channel is an uplink traffic channel PUSCH, and the first uplink information is the first uplink data information.

In this case, that the first priority is higher than the second priority is reflected in that the second time-frequency resource is later than the first time-frequency resource.

Specifically, the first time-frequency resource is earlier than the second time-frequency resource in time domain, and/or the first time-frequency resource is lower than the second time domain resource in frequency domain.

For example, the foregoing resource relationship may correspond to a case in which the uplink channel is a PUSCH. This embodiment of this application is not limited thereto.

Alternatively, a time interval between a time-domain symbol corresponding to the first time-frequency resource and a demodulation reference signal DMRS symbol of the uplink channel is less than a time interval between a time-domain symbol corresponding to the second time-frequency resource and the DMRS symbol, and/or the first time-frequency resource is lower than the second time-frequency resource in frequency domain.

For example, the foregoing resource relationship may correspond to a case in which the uplink channel is a PUCCH. This embodiment of this application is not limited thereto.

For descriptions that the second time-frequency resource is later than the first time-frequency resource, refer to the foregoing mapping order 1 and mapping order 2, to be specific, the corresponding descriptions that the information A is the first uplink data information, the information B is the second uplink control information, the time-frequency resource #A is the first time-frequency resource, and the time-frequency resource #B is the second time-frequency resource.

Alternatively, when the first time-frequency resource and the second time-frequency resource overlap, the time-frequency resource #A is a time-frequency resource, in the first time-frequency resource, other than a time-frequency resource overlapping the second time-frequency resource, and the time-frequency resource #B is the second time-frequency resource. Alternatively, the time-frequency resource #A is the first time-frequency resource, and the time-frequency resource #B is a time-frequency resource, in the second time-frequency resource, other than a time-frequency resource overlapping the first time-frequency resource.

Further, h time-domain symbols corresponding to the second time-frequency resource are the last h time-domain symbols of the uplink channel, and h is an integer greater than or equal to 1. In other words, the second uplink control information is mapped to a tail of the uplink channel. Still further, h is less than a quantity of all symbols that are included in the uplink channel and are used to map uplink information (for example, data information and control information).

Optionally, in an implementation, the first uplink data information is UL-SCH information on the PUSCH.

It should be understood that, for uplink data information and uplink control information that have a same priority, a time-frequency resource used to carry the uplink data information is later than a time-frequency resource used to carry the uplink control information. Considering that a typical position of the DMRS of the uplink channel is a front-loaded (front loaded) position, in other words, the DMRS is located on an earliest symbol of the uplink channel, the uplink control information is closer to the DMRS, and accuracy of channel estimation for the uplink control information is higher. Therefore, demodulation performance of the uplink control information is better than that of the uplink data information.

However, considering that in the scenario 1, the first uplink data information corresponds to the first priority, and the second uplink control information corresponds to the first priority, if the first uplink data information is mapped after the second uplink control information, a position of a time-frequency resource to which the first uplink data information is mapped is relatively far away from the DMRS, and demodulation performance of the first uplink data information is damaged. Therefore, to reflect that the first priority is higher than the second priority and better protect performance of the uplink data information with the first priority, in this application, the second uplink control information is mapped after the first uplink data information, that is, the second time-frequency resource is later than the first time-frequency resource. In this way, it can be ensured that the first uplink data information corresponding to a high priority is closer to the DMRS, thereby helping ensure demodulation performance of the first uplink data information.

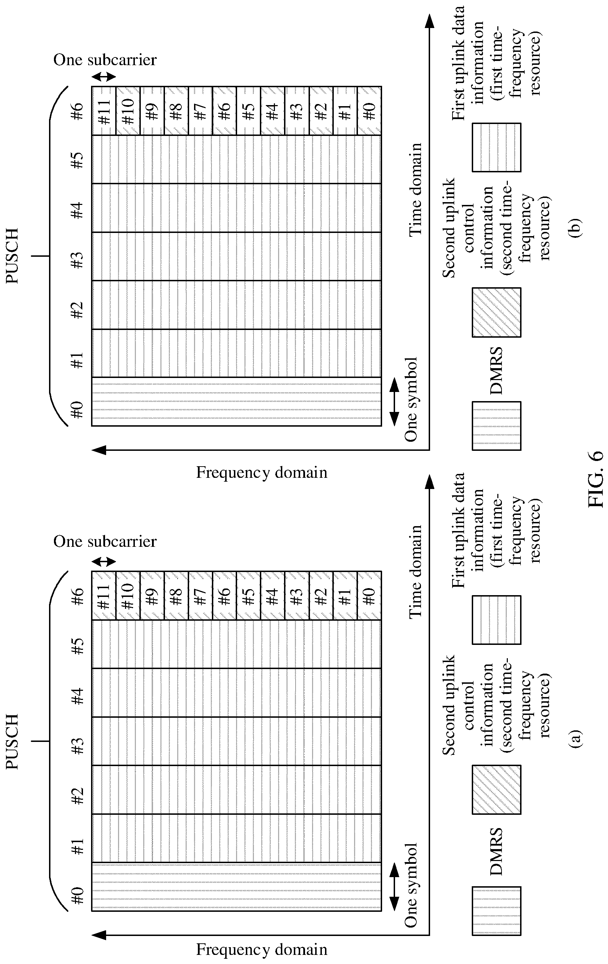

For example, as shown in FIG. 6, the uplink channel is a PUSCH, and includes seven time-domain symbols (#0 to #6) and 12 subcarriers (#0 to #11). The DMRS is located on the first symbol, that is, the symbol #0. The PUSCH includes the first uplink data information (that is, a UL-SCH corresponding to URLLC) and the second uplink control information (for example, a HARQ-ACK corresponding to eMBB). Starting from a next symbol following the symbol carrying the DMRS, that is, the symbol #1, the terminal device first maps, in a mapping order of frequency first time second, the UL-SCH corresponding to the URLLC, and then maps, in the mapping order of frequency first time second, the HARQ-ACK corresponding to the eMBB to a remaining resource. In FIG. 6(a), the HARQ-ACK corresponding to the URLLC occupies all the symbols #1 to #5. Therefore, the HARQ-ACK corresponding to the eMBB is mapped starting from a subcarrier #0 of the symbol #6. In FIG. 6(b), the HARQ-ACK corresponding to the URLLC occupies all the symbols #1 to #5 and subcarriers #0, #2, ..., and #10 of the symbol #6, and remaining subcarriers are #1, #3, ..., and #11. Therefore, the HARQ-ACK corresponding to the eMBB is mapped starting from the subcarrier #1 of the symbol #6, and is mapped to the remaining subcarriers of the symbol #6.

Optionally, the first uplink data information and the second uplink control information are multiplexed on the PUSCH in a rate matching manner. For details, refer to the foregoing descriptions of the mapping manner 1. Specifically, in the mapping manner 1, the information C may be set as the second uplink control information, the information D may be set as the first uplink data information, the time-frequency resource #C may be set as the second time-frequency resource, and the time-frequency resource #D may be set as the first time-frequency resource, so that the mapping manner in this application can be obtained.

Optionally, a part of UL-SCH information, on the PUSCH, mapped to the second time-frequency resource is punctured by using the second uplink control information on the second time-frequency resource. The first uplink data information is UL-SCH information other than the punctured information in the UL-SCH information on the PUSCH.

Optionally, a part of the first uplink data information mapped to the second time-frequency resource is punctured by using the second uplink control information on the second time-frequency resource. In other words, the terminal device first maps the first uplink data information to the first time-frequency resource. Then, the terminal device maps the second uplink control information to the second time-frequency resource, and discards information that is in the first uplink data information and that has been mapped to a second overlapping time-frequency resource, where the second overlapping time-frequency resource is an overlapping time-frequency resource of the first time-frequency resource and the second time-frequency resource. The first uplink data information is UL-SCH information before encoding or system information on the PUSCH. For details, refer to the foregoing descriptions of the mapping manner 2. Specifically, in the mapping manner 2, the information C may be set as the second uplink control information, the information D may be set as the first uplink data information, the time-frequency resource #C may be set as the second time-frequency resource, and the time-frequency resource #D may be set as the first time-frequency resource, so that the mapping manner in this application can be obtained. Further, the first time-frequency resource includes the second time-frequency resource. In other words, the second time-frequency resource is equivalent to the second overlapping time-frequency resource.

Further, if a payload size of the second uplink control information is greater than a second payload threshold, the second uplink control information and the first uplink data information are multiplexed on the PUSCH in a rate matching manner (that is, the mapping manner 1). Conversely, if a payload size of the second uplink control information is not greater than a second payload threshold, the first uplink data information is punctured by using the second uplink control information, in other words, the mapping manner 2 is used for mapping. For example, the second payload threshold is two bits. In other words, the second time-frequency resource is later than the first time-frequency resource in a mapping order, but the first uplink data information with a higher priority is still punctured by using the second uplink control information with a lower priority. Generally, the punctured information is information with a relatively low priority. However, the first uplink data information is punctured by using the second uplink control information because on the one hand, a payload size of the first uplink data information is usually far greater than the payload size of the second uplink control information, so that relatively, a loss caused by puncturing the first uplink data information is relatively small; and on the other hand, the time-frequency resource to which the first uplink data information is mapped includes the time-frequency resource of the second uplink control information, so that all the second uplink control information is punctured if the second uplink control information is punctured by using the first uplink data information.

Therefore, in this embodiment of this application, the second uplink control information is mapped by puncturing the first uplink data information, so that transmission of control information with a low priority can be implemented when transmission of the first uplink data information with a high priority is ensured.

Optionally, in this embodiment of this application, resource mapping may alternatively be performed in a manner in which the first uplink data information avoids a reserved resource for the second uplink control information. For details, refer to the foregoing descriptions of the mapping manner 3. Specifically, in the mapping manner 3, the information C may be set as the second uplink control information, the information D may be set as the first uplink data information, the time-frequency resource #C may be set as the second time-frequency resource, and the time-frequency resource #D may be set as the first time-frequency resource, so that the mapping manner in this application can be obtained.

For the scenario 1, further, the second uplink control information is at least one of HARQ-ACK information corresponding to the second priority, SR information corresponding to the second priority, and CSI part 1 information corresponding to the second priority. Alternatively, the second uplink control information is HARQ-ACK information corresponding to the second priority and/or SR information corresponding to the second priority. This embodiment of this application is not limited thereto.

### Scenario 2:

The first uplink information is the first uplink control information corresponding to the first priority, and the second uplink information is the second uplink control information corresponding to the second priority.

In this scenario, the uplink channel is a PUSCH or a PUCCH.

Optionally, the first uplink control information is HARQ-ACK information corresponding to the first priority, SR information corresponding to the first priority, or HARQ-ACK information corresponding to the first priority and SR information corresponding to the first priority.

Optionally, the second uplink control information is HARQ-ACK information corresponding to the second priority, SR information corresponding to the second priority, or HARQ-ACK information corresponding to the second priority and SR information corresponding to the second priority.

Optionally, the second time-frequency resource is a time-frequency resource determined based on the first time-frequency resource, and a position of a start time-frequency resource (for example, a start RE or a start RB) of the second time-frequency resource is determined based on the first time-frequency resource, for example, as described in the foregoing mapping order 1. Because uplink control information complies with a predefined mapping order, a position of another RE or RB of the second time-frequency resource is also determined based on the first time-frequency resource.

Specifically, the second time-frequency resource is later than the first time-frequency resource. For details, refer to the foregoing mapping order 1 or mapping order 2, to be specific, the corresponding descriptions that the information A is set as the first uplink control information, the information B is set as the second uplink control information, the time-frequency resource #A is set as the first time-frequency resource, and the time-frequency resource #B is set as the second time-frequency resource; or
the corresponding descriptions that when the first time-frequency resource and the second time-frequency resource overlap, the time-frequency resource #A is the first time-frequency resource, and the time-frequency resource #B is a time-frequency resource, in the second time-frequency resource, other than a time-frequency resource overlapping the first time-frequency resource; or the time-frequency resource #A is a time-frequency resource, in the first time-frequency resource, other than a time-frequency resource overlapping the second time-frequency resource, and the time-frequency resource #B is the second time-frequency resource.

Optionally, that the second time-frequency resource is a time-frequency resource determined based on the first time-frequency resource means that the second time-frequency resource is a time-frequency resource determined by the terminal device from a time-frequency resource other than the first time-frequency resource on the uplink channel. Regardless of a specific multiplexing relationship (for example, any one of the foregoing mapping manners 1 to 3) used when the terminal device maps the first uplink control information to the second uplink control information, the second time-frequency resource is determined from a remaining time-frequency resource on the uplink channel after the first time-frequency resource is excluded (for example, in a rate matching manner, in a puncturing manner, or in a manner of avoiding a reserved resource). Therefore, it may be considered that the second time-frequency resource is determined based on the first time-frequency resource.

Relatively, a position of the first time-frequency resource of the first uplink control information is not determined based on the second time-frequency resource. Specifically, the position of the first time-frequency resource herein refers to a start time-frequency resource (a start RE or a start RB) of the first time-frequency resource. For example, if the uplink channel is a PUSCH, the start RE of the first time-frequency resource is a start RE, on the uplink channel, used to map HARQ-ACK information. Specifically, the start RE of the first time-frequency resource corresponds to the first time-domain symbol following an earliest DMRS symbol in time domain, and corresponds to a subcarrier with a smallest subcarrier sequence number in frequency domain. For another example, if the uplink channel is a PUCCH, the start RB of the first time-frequency resource is a start RB, on the uplink channel, used to map uplink control information, for example, a PRB with a highest frequency or a PRB with a lowest frequency in PRBs occupied by the PUCCH.

Considering that the terminal device may incorrectly determine, due to incorrect reception of DCI, a time-frequency resource to which the uplink control information is mapped, for example, the terminal device detects no downlink control information used to trigger the uplink control information, or incorrectly understands a quantity of bits of the uplink control information due to incorrect detection of the DCI, the terminal device may incorrectly determine a position of a physical resource to which the uplink control information is mapped. In addition, considering that the first uplink control information and the second uplink control information correspond to different priorities, a transmission reliability target of an eMBB service corresponding to the first priority is lower than that of a URLLC service corresponding to the second priority, a possibility that the terminal device incorrectly receives DCI corresponding to the second uplink control information is greater than a possibility that the terminal device incorrectly receives DCI corresponding to the first uplink control information. Therefore, the second time-frequency resource is determined based on the first time-frequency resource. For example, an advantage of the second time-frequency resource being later than the first time-frequency resource is that it can be ensured that determining of the position of the first time-frequency resource does not depend on the second time-frequency resource, so that accuracy of determining the position of the first time-frequency resource is not further affected even though the terminal device incorrectly determines a position of the second time-frequency resource, thereby better ensuring transmission reliability of the first uplink control information.

In comparison, if the position of the first time-frequency resource is determined based on the position of the second time-frequency resource, for example, the second time-frequency resource to which the second uplink control information is mapped is earlier than the first time-frequency resource to which the first uplink control information is mapped, if the terminal device detects no second downlink control information used to trigger the second uplink control information, or incorrectly understands a quantity of bits of the second uplink control information due to incorrect detection of the DCI, an end position, of the second time-frequency resource, determined by the terminal device is different from an end position, of the second time-frequency resource, expected by the network device. Consequently, the position, of the first time-frequency resource, determined by the terminal device based on the second time-frequency resource is different from a position, of the first time-frequency resource, expected by the network device, affecting decoding performance of the first uplink control information.

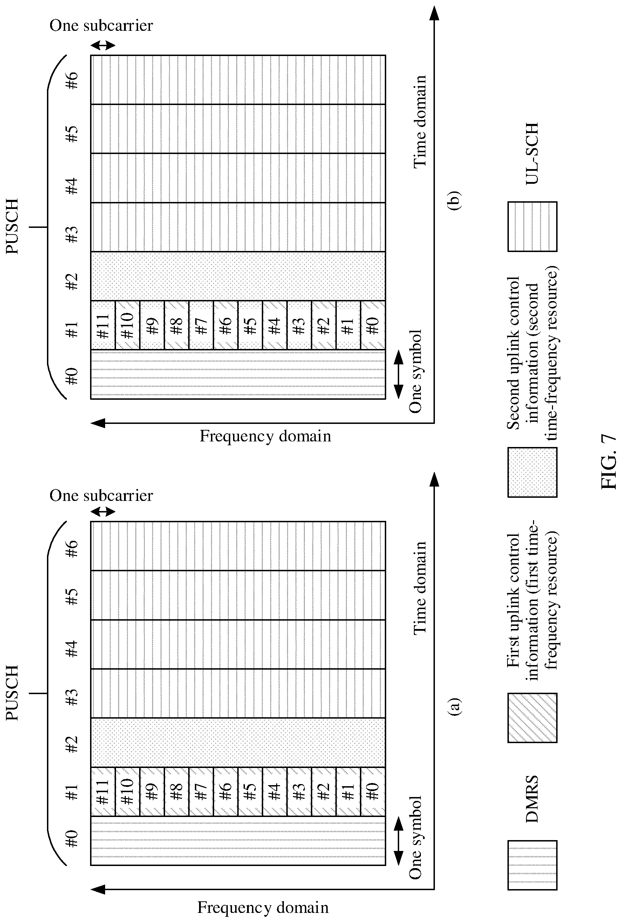

For example, as shown in FIG. 7, the uplink channel is a PUSCH, and includes seven time-domain symbols (#0 to #6) and 12 subcarriers (#0 to #11). The DMRS is located on the first symbol, that is, the symbol #0. The PUSCH includes the first uplink control information (that is, a HARQ-ACK corresponding to URLLC), the second uplink control information (that is, a HARQ-ACK corresponding to eMBB), and a UL-SCH corresponding to the URLLC. Starting from a next symbol following the symbol carrying the DMRS, that is, the symbol #1, the terminal device first maps, in a mapping order of frequency first time second, the HARQ-ACK corresponding to the URLLC (that is, the first uplink control information), and then maps, in the mapping order of frequency first time second, the HARQ-ACK corresponding to the eMBB (that is, the second uplink control information) to a remaining resource. In FIG. 7(a), the HARQ-ACK corresponding to the URLLC occupies the symbol #1. Therefore, the HARQ-ACK corresponding to the eMBB is mapped starting from a subcarrier #0 of the symbol #2. In FIG. 7(b), the HARQ-ACK corresponding to the URLLC occupies subcarriers #0, #2, ..., and #10 of the symbol #1, and remaining subcarriers are #1, #3, ..., and #11. Therefore, the HARQ-ACK corresponding to the eMBB is mapped starting from the subcarrier #1 of the symbol #1, and is mapped to the remaining subcarriers of the symbol #1 and the symbol #2.

When the uplink channel is a PUSCH, mapping manners or multiplexing manners of the second time-frequency resource and the first time-frequency resource may specifically include the following several methods.

### (1) Rate matching manner:

If the information sent by the terminal device on the PUSCH includes the first uplink control information, the second uplink control information and the first uplink control information are multiplexed on the PUSCH in the rate matching manner. For details, refer to the foregoing mapping manner 1, to be specific, the corresponding descriptions that the information C is the first uplink control information, the information D is the second uplink control information, the time-frequency resource #C is the first time-frequency resource, and the time-frequency resource #D is the second time-frequency resource.

Correspondingly, according to a mapping step, a step of mapping the first uplink control information is performed before a step of mapping the second uplink control information.

Further, if a payload size of the first uplink control information is greater than a first payload threshold, the second uplink control information and the first uplink control information are multiplexed on the PUSCH in the rate matching manner. Conversely, if a payload size of the first uplink control information is not greater than a first payload threshold, a puncturing mapping manner is used, to be specific, the second uplink control information is punctured by using the first uplink control information. Alternatively, an avoidance mapping manner is used, to be specific, the second uplink control information avoids the reserved resource for the first uplink control information.

For example, the first payload threshold is two bits. Further, the first payload threshold is equal to a second payload threshold.

### (2) Puncturing mapping manner in which the second uplink control information is punctured by using the first uplink control information:

If the information sent by the terminal device on the uplink channel includes the first uplink control information, before the terminal device sends the information on the first time-frequency resource and the second time-frequency resource, the method includes:

The terminal device maps the second uplink control information to the second time-frequency resource and the first time-frequency resource; and
the terminal device maps the first uplink control information to the first time-frequency resource, and discards information that is in the second uplink control information and that is mapped to the first time-frequency resource.

In other words, the UE punctures, on the first time-frequency resource, a part of the second uplink control information previously mapped to the first time-frequency resource, to map the first uplink control information. Therefore, the part of the second uplink control information is lost because the second uplink control information is punctured by using the first uplink control information on the first time-frequency resource.

Correspondingly, according to a mapping step, a step of mapping the second uplink control information is performed before a step of mapping the first uplink control information.

For specific descriptions of puncturing the second uplink control information by using the first uplink control information, refer to the foregoing mapping manner 2. The first uplink control information corresponds to the information C, the second uplink control information corresponds to the information D, the time-frequency resource #C is the first time-frequency resource, and the time-frequency resource #D is the second time-frequency resource.

For the puncturing mapping manner, puncturing the second uplink control information by using the first uplink control information is similar to a method for puncturing a CSI part 2 or a UL-SCH with a same priority by using HARQ-ACK information with the same priority in a conventional technology.

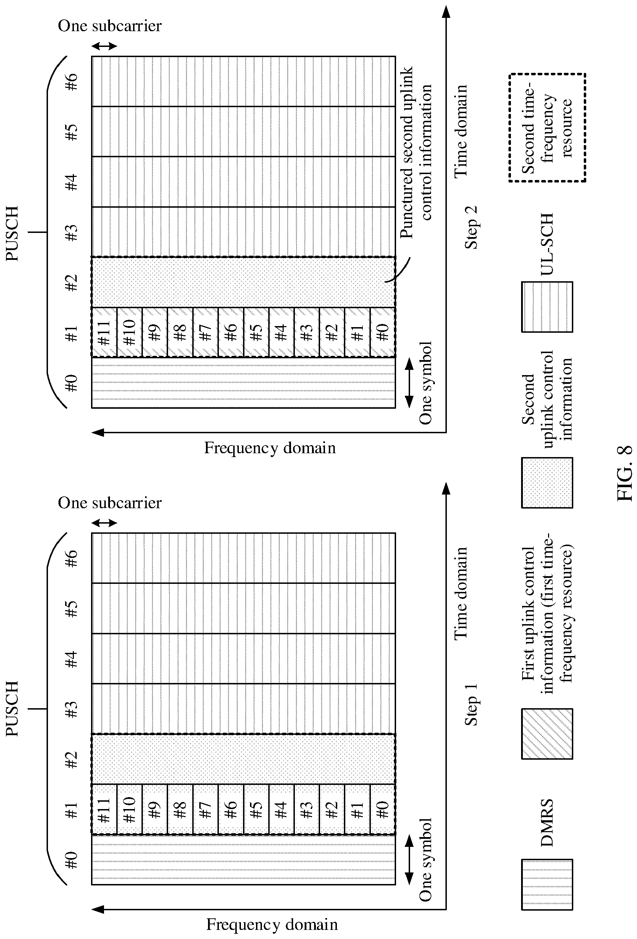

For example, as shown in FIG. 8, the uplink channel is a PUSCH, and includes seven time-domain symbols (#0 to #6) and 12 subcarriers (#0 to #11). The DMRS is located on the first symbol, that is, the symbol #0. The PUSCH includes the first uplink control information (that is, a HARQ-ACK corresponding to URLLC), the second uplink control information (that is, a HARQ-ACK corresponding to eMBB), and a UL-SCH corresponding to the URLLC. In the first step, starting from a next symbol following the symbol carrying the DMRS, that is, the symbol #1, the terminal device first maps, in a mapping order of frequency first time second, the HARQ-ACK corresponding to the eMBB, and the HARQ-ACK occupies all subcarriers of the symbol #1 and the symbol #2. Then, in the second step, the terminal device punctures a part of the HARQ-ACK information that has been mapped to subcarriers #0 to #11 of the symbol #1 and that corresponds to the URLLC. Information actually sent by the terminal device is the HARQ-ACK information corresponding to the URLLC and a remaining part after the HARQ-ACK corresponding to the eMBB is punctured. The first time-frequency resource is a time-frequency resource on which the mapped second uplink control information is punctured by using the first uplink control information, that is, all the subcarriers of the symbol #1, and the second time-frequency resource is a time-frequency resource to which the second uplink control information is mapped in the first step, that is, all the subcarriers of the symbol #1 and the symbol #2.

### (3) The second uplink control information avoiding a reserved resource for the first uplink control information:

If the information sent by the terminal device on the uplink channel does not include the first uplink control information, before the terminal device sends the information on the first time-frequency resource and the second time-frequency resource, the method includes:
The terminal device maps the second uplink control information to the second time-frequency resource, where information mapped by the terminal device to the first time-frequency resource does not include the first uplink control information; and
if the information sent by the terminal device on the uplink channel includes the first uplink control information, the terminal device maps the second uplink control information to the second time-frequency resource, and the terminal device maps the first uplink control information to the first time-frequency resource.

The reserved resource for the first uplink control information is the first time-frequency resource.

It should be understood that the reserved resource for the first uplink control information is a time-frequency resource determined based on a predefined or preconfigured payload size. For example, the predefined payload size is the first payload threshold. A time-frequency resource that the first uplink control information actually needs to occupy may be less than or equal to the reserved resource for the first uplink control information.

Correspondingly, according to a mapping step, a step of mapping the second uplink control information is performed before a step of mapping the first uplink control information.

For specific descriptions of avoiding the first uplink control information by the second uplink control information, refer to the foregoing mapping manner 3. The first uplink control information corresponds to the information C, the second uplink control information corresponds to the information D, the time-frequency resource #C is the first time-frequency resource, and the time-frequency resource #D is the second time-frequency resource.

For the avoidance mapping manner, avoiding the first uplink control information by the second uplink control information is similar to a method for avoiding a resource reserved for HARQ-ACK information with a same priority by CSI part 1 information with the same priority in a conventional technology.

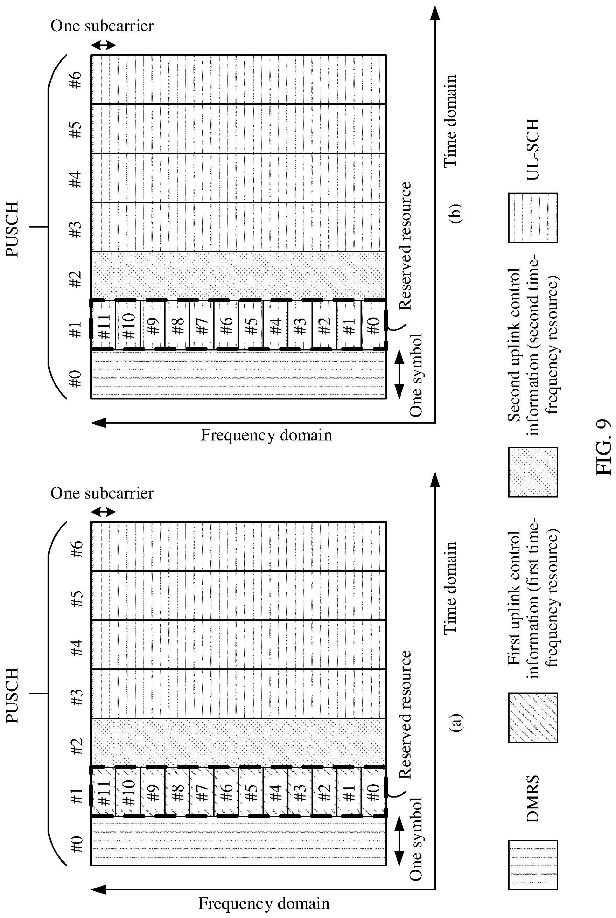

For example, as shown in FIG. 9, the uplink channel is a PUSCH, and includes seven time-domain symbols (#0 to #6) and 12 subcarriers (#0 to #11). The DMRS is located on the first symbol, that is, the symbol #0. The PUSCH includes the first uplink control information (that is, a HARQ-ACK corresponding to URLLC), the second uplink control information (that is, a HARQ-ACK corresponding to eMBB), and a UL-SCH corresponding to the URLLC. A reserved resource for the HARQ-ACK corresponding to the URLLC is subcarriers #0 to #11 of the symbol #1, and is a time-frequency resource calculated based on the first payload threshold = two bits. Starting from a next symbol following the symbol carrying the DMRS, that is, the symbol #1, the terminal device skips the reserved resource, that is, the symbol #1, for the HARQ-ACK corresponding to the URLLC, and first maps, in a mapping order of frequency first time second, the HARQ-ACK corresponding to the eMBB, the HARQ-ACK occupies all subcarriers of the symbol #2. Then, starting from the next symbol following the symbol carrying the DMRS, that is, the symbol #1, the terminal device maps the UL-SCH information in the order of frequency first time second, and skips the symbol #2 to which the HARQ-ACK information corresponding to the eMBB has been mapped. If the terminal device needs to send, on the PUSCH, the HARQ-ACK corresponding to the URLLC, as shown in FIG. 9(a), the terminal device punctures the UL-SCH information on the symbol #1 by using the HARQ-ACK corresponding to the URLLC. If the terminal device does not need to send, on the PUSCH, the HARQ-ACK corresponding to the URLLC, as shown in FIG. 9(b), the terminal device sends the UL-SCH on the symbol #1.

### (4) Mapping manner in which the first uplink control information avoids a reserved resource for the second uplink control information:

The reserved resource for the second uplink control information is the second time-frequency resource.

To avoid a problem that a mapping position of the first uplink control information is misunderstood because a quantity of bits of the second uplink control information is incorrectly determined, a position of the first time-frequency resource of the first uplink control information may not depend on the second time-frequency resource of the second uplink control information. In addition to limiting a time-domain relationship or a frequency-domain relationship between time-frequency resources of the first uplink control information and the second uplink control information, or limiting a mapping manner between the first uplink control information and the second uplink control information to the foregoing mapping manners (1) to (3), in this embodiment of this application, the first uplink control information may further avoid, during mapping, the reserved resource corresponding to the second uplink control information, and a size and/or a time-frequency position of the reserved resource are/is predefined or preconfigured. In this way, regardless of whether the terminal device actually needs to send the second uplink control information or an actual payload size of the second uplink control information that needs to be sent, the terminal device does not map the first uplink control information to the reserved resource. Because the size and/or the time-frequency position of the reserved resource do not depend on the payload size of the second uplink control information, a position of the time-frequency resource to which the first uplink control information is mapped is also not affected by the payload size of the second uplink control information, thereby ensuring decoding reliability of the first uplink control information.

It should be understood that the reserved resource for the second uplink control information is a time-frequency resource determined based on a predefined or preconfigured payload size. For example, the predefined payload size is the second payload threshold. A time-frequency resource that the second uplink control information actually needs to occupy may be less than or equal to the reserved resource for the second uplink control information.

Correspondingly, according to a mapping step, a step of mapping the first uplink control information is performed before a step of mapping the second uplink control information.

For specific descriptions of avoiding the second uplink control information by the first uplink control information, refer to the following mapping manner 3. The second uplink control information corresponds to the information C, the first uplink control information corresponds to the information D, the time-frequency resource #C is the second time-frequency resource, and the time-frequency resource #D is the first time-frequency resource.

Further, in another embodiment, the uplink channel further includes a third time-frequency resource, and the third time-frequency resource is a time-frequency resource used to carry third uplink control information corresponding to the first priority. Specifically, the third uplink control information is CSI, and the third time-frequency resource is a time-frequency resource determined based on the second time-frequency resource.

For example, the third uplink control information may be CSI part 1 information, or may be CSI part 2 information, or may be CSI part 1 information and CSIpart 2.

Similar to the foregoing descriptions in which the second time-frequency resource is a time-frequency resource determined based on the first time-frequency resource, the third time-frequency resource is determined from a remaining time-frequency resource on the uplink channel after the second time-frequency resource is excluded (for example, in a rate matching manner, in a puncturing manner, or in a manner of avoiding a reserved resource). Therefore, it may be considered that the third time-frequency resource is determined based on the second time-frequency resource.

Still further, the third time-frequency resource is later than the second time-frequency resource. For details, refer to the foregoing mapping orders 1 and 2. To be specific, the information A is the second uplink control information, the information B is the third uplink control information, the time-frequency resource #A is the second time-frequency resource, and the time-frequency resource #B is the third time-frequency resource. Alternatively, when the second time-frequency resource and the third time-frequency resource overlap, the time-frequency resource #A is the second time-frequency resource, and the time-frequency resource #B is a time-frequency resource, in the third time-frequency resource, other than a time-frequency resource overlapping the second time-frequency resource. Alternatively, the time-frequency resource #A is a time-frequency resource, in the second time-frequency resource, other than a time-frequency resource overlapping the third time-frequency resource, and the time-frequency resource #B is the third time-frequency resource.

In other words, a mapping order of the second uplink control information corresponding to the second priority is between that of the first uplink control information corresponding to the first priority and that of the CSI corresponding to the first priority. Considering that the HARQ-ACK information corresponding to the second priority is responsible for feeding back whether data information is correctly received, and the SR information corresponding to the second priority is responsible for reporting a sending requirement of the data information, although importance of the second uplink control information is lower than that of the HARQ-ACK information and/or the SR information corresponding to the first priority but is higher than that of the CSI corresponding to the first priority (because the CSI does not directly affect whether uplink data information can be sent in a timely manner like the SR information, and does not directly affect whether downlink data information is correctly received like the HARQ-ACK information), the mapping order of the second uplink control information should be after that of the first uplink control information (the HARQ-ACK and/or the SR) corresponding to the first priority and before that of the third uplink control information corresponding to the first priority, that is, the CSI. This helps ensure demodulation performance of HARQ-ACK information and/or SR information with two priorities.

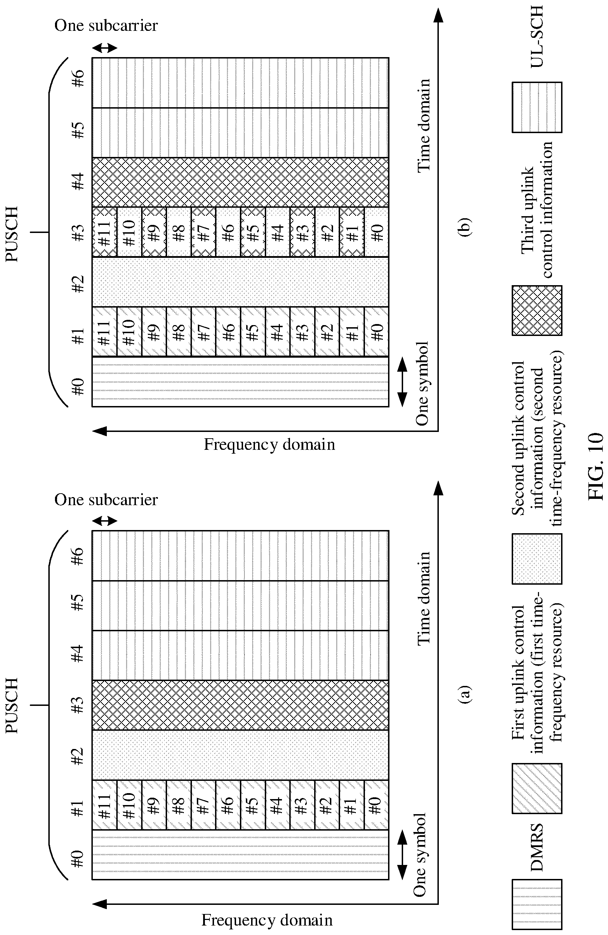

For example, as shown in FIG. 10, the uplink channel is a PUSCH, and includes seven time-domain symbols (#0 to #6) and 12 subcarriers (#0 to #11). The DMRS is located on the first symbol, that is, the symbol #0. The PUSCH includes the first uplink control information (that is, a HARQ-ACK corresponding to URLLC), the third uplink control information (that is, CSI corresponding to the URLLC), the second uplink control information (that is, a HARQ-ACK corresponding to eMBB), and a UL-SCH corresponding to the URLLC. Starting from a next symbol following the symbol carrying the DMRS, that is, the symbol #1, the terminal device first maps, in a mapping order of frequency first time second, the HARQ-ACK corresponding to the URLLC, maps, in the mapping order of frequency first time second, the HARQ-ACK corresponding to the eMBB to a remaining resource, and then continues to map the CSI corresponding to the URLLC to the remaining resource. In FIG. 10(a), the HARQ-ACK corresponding to the eMBB occupies the symbol #2. Therefore, the CSI corresponding to the URLLC is mapped starting from a subcarrier #0 of the symbol #3. In FIG. 10(b), the HARQ-ACK corresponding to the eMBB occupies the symbol #2 and subcarriers #0, #2, ..., and #10 of the symbol #3, and remaining subcarriers are #1, #3, ..., and #11. Therefore, the CSI corresponding to the URLLC is mapped starting from the subcarrier #1 of the symbol #3, and is mapped to the remaining subcarriers of the symbol #3 and the symbol #4.

Similar to a mapping manner between the first uplink control information and the second uplink control information, when the uplink channel is a PUSCH, mapping manners between the second uplink control information and the third uplink control information may also include the following three methods:

(1) The second uplink control information and the third uplink control information are multiplexed on the PUSCH in a rate matching manner. For details, refer to the foregoing mapping manner 1. The information C is the second uplink control information, the information D is the third uplink control information, the time-frequency resource #C is the second time-frequency resource, and the time-frequency resource #D is the third time-frequency resource.

Further, if a payload size of the second uplink control information is greater than a second payload threshold, the second uplink control information and the third uplink control information are multiplexed on the PUSCH in the rate matching manner. Conversely, if a payload size of the second uplink control information is not greater than a second payload threshold, the third uplink control information is punctured by using the second uplink control information, or the third uplink control information avoids a reserved resource for the second uplink control information.

(2) The third uplink control information is punctured by using the second uplink control information on the second time-frequency resource. Further, the third uplink control information is a CSI part 2.

For details, refer to the foregoing mapping manner 2. The information C is the second uplink control information, the information D is the third uplink control information, the time-frequency resource #C is the second time-frequency resource, and the time-frequency resource #D is the third time-frequency resource.

(3) The third uplink control information avoids a reserved resource for the second uplink control information.

Further, the third uplink control information is a CSI part 1.

The reserved resource for the second uplink control information is the second time-frequency resource.

It should be understood that the reserved resource for the second uplink control information is a time-frequency resource determined based on a predefined or preconfigured payload size. For example, the predefined payload size is the second payload threshold. A time-frequency resource that the second uplink control information actually needs to occupy may be less than or equal to the reserved resource for the second uplink control information.

For details, refer to the foregoing mapping manner 3. The information C is the second uplink control information, the information D is the third uplink control information, the time-frequency resource #C is the second time-frequency resource, and the time-frequency resource #D is the third time-frequency resource.

(4) The second uplink control information avoids a reserved resource for the third uplink control information. For details, refer to the foregoing mapping manner 3. The information C is the third uplink control information, the information D is the second uplink control information, the time-frequency resource #C is the third time-frequency resource, and the time-frequency resource #D is the second time-frequency resource.

Scenario 3: The first uplink information is CSI corresponding to the first priority, and the second uplink information is HARQ-ACK information corresponding to the second priority.

For example, the uplink channel is a PUSCH or a PUCCH, the first uplink information is first uplink control information corresponding to the first priority, the first uplink control information includes the CSI corresponding to the first priority, and the second uplink control information includes the HARQ-ACK information corresponding to the second priority.

Optionally, the second time-frequency resource is a time-frequency resource determined based on the first time-frequency resource.

Optionally, the first uplink control information is the CSI corresponding to the first priority, or the CSI corresponding to the first priority and HARQ-ACK information corresponding to the first priority, or the CSI corresponding to the first priority and SR information corresponding to the first priority. The CSI herein may be a CSI part 1, a CSI part 2, or a CSI part 1 and a CSI part 2.

For example, if the uplink channel is a PUCCH, the first uplink control information is joint encoding information of a HARQ-ACK (if existent) corresponding to the first priority, an SR (if existent) corresponding to the first priority, and a CSI part 1 (if existent) corresponding to the first priority.

For another example, if the uplink channel is a PUSCH, the first uplink control information is CSI part 1 information or CSIpart 2 corresponding to the first priority.

Specifically, the second time-frequency resource is later than the first time-frequency resource. For details, refer to the foregoing mapping order 1 or 2. The information A is the first uplink control information, the information B is the second uplink control information, the time-frequency resource #A is the first time-frequency resource, and the time-frequency resource #B is the second time-frequency resource. Alternatively, when the first time-frequency resource and the second time-frequency resource overlap, the time-frequency resource #A is the first time-frequency resource, and the time-frequency resource #B is a time-frequency resource, in the second time-frequency resource, other than a time-frequency resource overlapping the first time-frequency resource. Alternatively, the time-frequency resource #A is a time-frequency resource, in the first time-frequency resource, other than a time-frequency resource overlapping the second time-frequency resource, and the time-frequency resource #B is the second time-frequency resource.

Similar to the scenario 2, the second time-frequency resource is determined from a remaining time-frequency resource on the uplink channel after the first time-frequency resource is excluded (for example, in a rate matching manner, in a puncturing manner, or in a manner of avoiding a reserved resource). Therefore, it may be considered that the second time-frequency resource is determined based on the first time-frequency resource.

Although a priority of HARQ-ACK information and/or SR information with a same priority is higher than that of CSI, considering that a priority corresponding to the first uplink control information is lower than a priority corresponding to the second uplink control information, mapping of the first uplink control information (for example, the CSI) should be prior to that of the second uplink control information (the HARQ-ACK information and/or the SR information). In this way, similar to the descriptions of the mapping relationship between two types of HARQ-ACK information with different priorities in the scenario 2, the second time-frequency resource is determined based on the first time-frequency resource. For example, an advantage of the second time-frequency resource being later than the first time-frequency resource is that it can be ensured that determining of the position of the first time-frequency resource does not depend on the second time-frequency resource, so that accuracy of determining the position of the first time-frequency resource is not further affected even though the terminal device incorrectly determines a position of the second time-frequency resource, thereby better ensuring transmission reliability of the first uplink control information (for example, the CSI). In addition, that the second time-frequency resource is later than the first time-frequency resource can further ensure that the first uplink control information is closer to the DMRS, and ensure that CSI corresponding to a URLLC service is received more accurately, thereby effectively ensuring URLLC link adaptation.

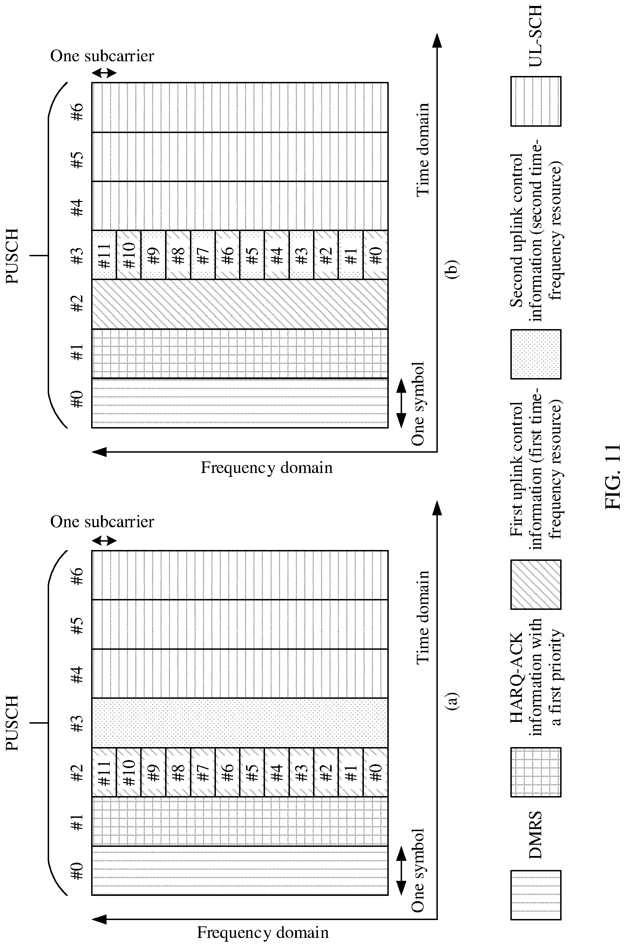

For example, as shown in FIG. 11, the uplink channel is a PUSCH, and includes seven time-domain symbols (#0 to #6) and 12 subcarriers (#0 to #11). The DMRS is located on the first symbol, that is, the symbol #0. The PUSCH includes a HARQ-ACK corresponding to URLLC, the first uplink control information (that is, CSI corresponding to the URLLC), the second uplink control information (that is, a HARQ-ACK corresponding to eMBB), and a UL-SCH corresponding to the URLLC. Starting from a next symbol following the symbol carrying the DMRS, that is, the symbol #1, the terminal device first maps, in a mapping order of frequency first time second, the HARQ-ACK corresponding to the URLLC, maps, in the mapping order of frequency first time second, the CSI corresponding to the URLLC to a remaining resource, and then maps, in the mapping order of frequency first time second, the HARQ-ACK corresponding to the eMBB to the remaining resource. In FIG. 11(a), the CSI corresponding to the URLLC occupies the symbol #2. Therefore, the HARQ-ACK corresponding to the eMBB is mapped starting from a subcarrier #0 of the symbol #3. In FIG. 11(b), the CSI corresponding to the URLLC occupies the symbol #2 and subcarriers #0, #2, ..., and #10 of the symbol #3, and remaining subcarriers are #1, #3, ..., and #11. Therefore, the HARQ-ACK corresponding to the eMBB is mapped starting from the subcarrier #1 of the symbol #3, and is mapped to the remaining subcarriers of the symbol #1.

Similar to the scenario 2, when the uplink channel is a PUSCH, mapping manners of the second time-frequency resource and the first time-frequency resource may also specifically include the following several methods.

### (1) Rate matching mapping manner:

If the information sent by the terminal device on the uplink channel includes the second uplink control information, the second uplink control information and the first uplink control information are multiplexed on the PUSCH in the rate matching manner. Similar to the rate matching mapping manner in the scenario 2, for details, refer to the foregoing descriptions of the mapping manner 1. Specifically, the information C may be set as the first uplink control information, the information D may be set as the second uplink control information, the time-frequency resource #C is the first time-frequency resource, and the time-frequency resource #D is the second time-frequency resource.

Further, if the payload size of the second uplink control information is greater than the second payload threshold, or if the payload size of the first uplink control information is greater than the first payload threshold, the second uplink control information and the first uplink control information are multiplexed on the PUSCH in the rate matching manner (the rate matching mapping manner). Conversely, if the payload size of the second uplink control information is not greater than the second payload threshold, the first uplink control information is punctured by using the second uplink control information (a first puncturing mapping manner), or the second uplink control information avoids a reserved resource for the first uplink control information (a first avoidance mapping manner). Alternatively, if the payload size of the first uplink control information is not greater than the first payload threshold, the second uplink control information is punctured by using the first uplink control information (a second puncturing mapping manner), or the first uplink control information avoids a reserved resource for the second uplink control information (a second avoidance mapping manner).

(2) First puncturing mapping manner in which the first uplink control information is punctured by using the second uplink control information on the second time-frequency resource: If the information sent by the terminal device on the uplink channel includes the second uplink control information, before the terminal device sends the information on the first time-frequency resource and the second time-frequency resource, the method includes:
The terminal device maps the first uplink control information to the second time-frequency resource and the first time-frequency resource; and
the terminal device maps the second uplink control information to the second time-frequency resource, and discards information that is in the first uplink control information and that is mapped to the first time-frequency resource.

Similar to the puncturing mapping manner in the methods of the scenario 2, for details, refer to the foregoing descriptions of the mapping manner 2. To be specific, the information C is set as the second uplink control information, the information D is set as the first uplink control information, the time-frequency resource #C is the second time-frequency resource, and the time-frequency resource #D is the first time-frequency resource.

Similar to that in the scenario 1, the second uplink control information is later than the first uplink data information, but for a reason that the second uplink control information is punctured by using the first uplink data information, the second time-frequency resource is later than the first time-frequency resource in a mapping order, but the first uplink control information with a higher priority is still punctured by using the second uplink control information with a lower priority. In other words, the second time-frequency resource is located at a tail of the first time-frequency resource, and the first uplink control information is punctured by using the second uplink control information at the tail of the first time-frequency resource.

### (3) Second puncturing mapping manner in which the second uplink control information is punctured by using the first uplink control information on the first time-frequency resource:

For details, refer to the foregoing descriptions of the mapping manner 2. To be specific, the information C is set as the first uplink control information, the information D is set as the second uplink control information, the time-frequency resource #C is the first time-frequency resource, and the time-frequency resource #D is the second time-frequency resource.

### (4) First avoidance mapping manner in which the second uplink control information avoids a reserved resource for the first uplink control information:

The reserved resource for the first uplink control information is the first time-frequency resource.

It should be understood that the reserved resource for the first uplink control information is a time-frequency resource determined based on a predefined or preconfigured payload size (for example, the first payload threshold).

Correspondingly, according to a mapping step, a step of mapping the second uplink control information is performed before a step of mapping the first uplink control information.

For specific descriptions of avoiding the first uplink control information by the second uplink control information, refer to the foregoing mapping manner 3. To be specific, it is set that the first uplink control information corresponds to the information C, the second uplink control information corresponds to the information D, the time-frequency resource #C is the first time-frequency resource, and the time-frequency resource #D is the second time-frequency resource.

### (5) Second avoidance mapping manner in which the first uplink control information avoids a reserved resource for the second uplink control information:

The reserved resource for the second uplink control information is the second time-frequency resource.

It should be understood that the reserved resource for the second uplink control information is a time-frequency resource determined based on a predefined or preconfigured payload size (for example, the second payload threshold). For example, the predefined payload size is the second payload threshold.

Correspondingly, according to a mapping step, a step of mapping the first uplink control information is performed before a step of mapping the second uplink control information.

For specific descriptions of avoiding the second uplink control information by the first uplink control information, refer to the foregoing mapping manner 3. The second uplink control information corresponds to the information C, the first uplink control information corresponds to the information D, the time-frequency resource #C is the second time-frequency resource, and the time-frequency resource #D is the first time-frequency resource.

Optionally, the first uplink control information is a CSI part 2. In other words, the second time-frequency resource is later than the time-frequency resource carrying the CSI part 2 corresponding to the first priority. In this case, the second time-frequency resource may be earlier than the the time-frequency resource for UL-SCH information corresponding to the first priority. In other words, a mapping priority of the second uplink control information is between that of the CSI part 2 corresponding to the first priority and that of the UL-SCH corresponding to the first priority.

Optionally, the first uplink control information is a CSI part 1. In other words, the second time-frequency resource is later than the time-frequency resource carrying the CSI part 1 corresponding to the first priority, and is earlier than the time-frequency resource carrying the CSI part 2 corresponding to the first priority. In other words, a mapping priority of the second uplink control information is between that of the CSI part 1 corresponding to the first priority and that of the CSI part 2 corresponding to the first priority. It is considered that information carried in the CSI part 2 has a relatively large payload, and the CSI part 2 carries control information with a relatively low priority and relatively small impact on performance, such as a PMI, but information carried in the CSI part 1 has a relatively small payload, and the CSI part 1 carries control information with a relatively high priority and relatively great impact on performance, such as a CQI and an RI. Therefore, the second uplink control information corresponding to the second priority is mapped after the CSI part 1 corresponding to the first priority (that is, the second time-frequency resource is later than the time-frequency resource of the CSI part 1). On the one hand, transmission reliability of the relatively important channel state information CSI part 1 can be ensured. On the other hand, because payloads/a payload of the HARQ-ACK and/or SR information that are/is included in the second uplink control information is relatively small, and a quantity of occupied resources is relatively small, the second uplink control information is mapped before the CSI part 2 corresponding to the first priority, and impact on performance of the CSI part 2 corresponding to the first priority is also relatively small. Conversely, if the second uplink control information is mapped after the CSI part 2 corresponding to the first priority, because the CSI part 2 occupies a relatively large quantity of resources, a position to which the second uplink control information is mapped is relatively far away from the DMRS, and reliability of the second uplink control information is affected.

Further, if the uplink channel is a PUSCH, the second uplink control information and the CSI part 2 corresponding to the first priority may be multiplexed in the rate matching manner, or the second uplink control information may be used to puncture the CSIpart 2 that corresponds to the first priority and that has been mapped to the second time-frequency resource, or the CSIpart 2 corresponding to the first priority may avoid the reserved resource for the second uplink control information during mapping. This is similar to the multiplexing relationship between the second uplink control information and the third uplink control information in the scenario 2. Details are not described again.

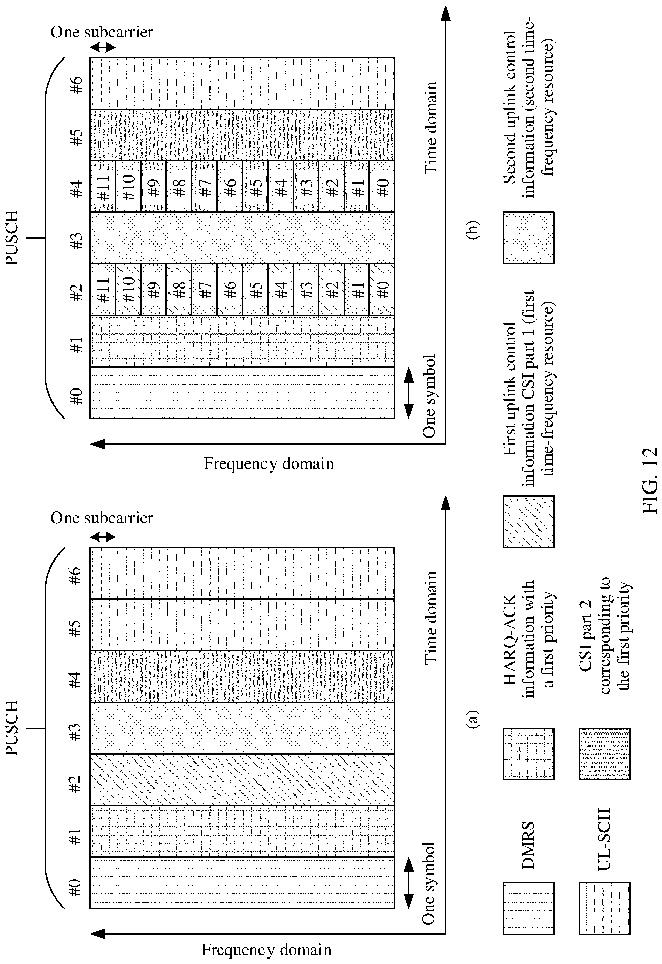

For example, as shown in FIG. 12, the uplink channel is a PUSCH, and includes seven time-domain symbols (#0 to #6) and 12 subcarriers (#0 to #11). The DMRS is located on the first symbol, that is, the symbol #0. The PUSCH includes a HARQ-ACK corresponding to URLLC, the first uplink control information (that is, CSI corresponding to the URLLC), the second uplink control information (that is, a HARQ-ACK corresponding to eMBB), and a UL-SCH corresponding to the URLLC. Starting from a next symbol following the symbol carrying the DMRS, that is, the symbol #1, the terminal device first maps, in a mapping order of frequency first time second, the HARQ-ACK corresponding to the URLLC, maps, in the mapping order of frequency first time second, the CSI part 1 corresponding to the URLLC to a remaining resource, maps, in the mapping order of frequency first time second, the HARQ-ACK corresponding to the eMBB to the remaining resource, and then maps, in the mapping order of frequency first time second, the CSI part 2 corresponding to the URLLC to the remaining resource. In FIG. 12(a), the HARQ-ACK corresponding to the eMBB occupies the symbol #3. Therefore, the CSI part 2 corresponding to the URLLC is mapped starting from a subcarrier #0 of the symbol #4. In FIG. 12(b), the HARQ-ACK corresponding to the eMBB occupies the symbol #3 and subcarriers #0, #2, ..., and #10 of the symbol #4, and remaining subcarriers are #1, #3, ..., and #11. Therefore, the CSI part 2 corresponding to the URLLC is mapped starting from the subcarrier #1 of the symbol #4, and is mapped to the remaining subcarriers of the symbol #4 and the symbol #5.

In this embodiment of this application, control information or data information corresponding to services with different priorities is separately encoded, and priorities of two services are determined to enable a priority of control/service information corresponding to a low-priority service to be lower than a priority of control/service information corresponding to a high-priority service, or enable a time-frequency domain position of control/service information corresponding to a low-priority service to be later than a time-frequency domain position of control/service information corresponding to a high-priority service, to better balance two services with different priorities.

It should be understood that, examples in FIG. 4 to FIG. 12 above are merely intended to help a person skilled in the art understand the embodiments of the present invention, but are not intended to limit the embodiments of the present invention to a specific value or a specific scenario in the examples. Clearly, a person skilled in the art may make various equivalent modifications or changes based on the examples in FIG. 4 to FIG. 12. For example, a person skilled in the art may combine and split a plurality of embodiments based on the examples in FIG. 4 to FIG. 12. Such modifications or changes in the embodiments of this application also fall within the scope of the embodiments of the present invention.

It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

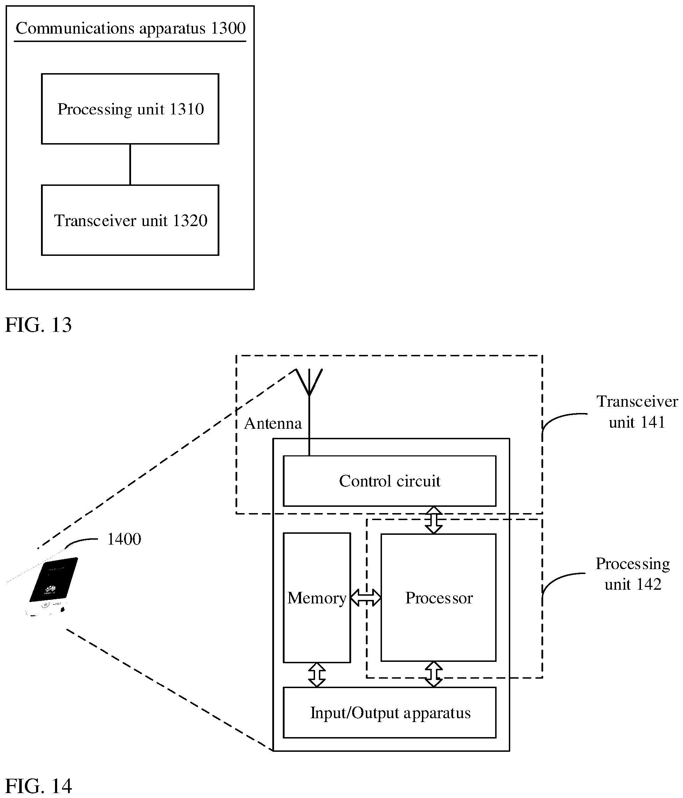

It may be understood that in the foregoing method embodiments, a method implemented by the terminal device may alternatively be implemented by a component (for example, a chip or a circuit) that may be used in the terminal, and a method implemented by the network device may alternatively be implemented by a component (for example, a chip or a circuit) that may be used in the network device. The foregoing describes in detail the methods in the embodiments of the present invention with reference to FIG. 1 to FIG. 12. The following describes communications apparatuses in the embodiments of the present invention with reference to FIG. 13 to FIG. 16.

FIG. 13 is a schematic structural diagram of a communications apparatus according to an embodiment of this application. The communications apparatus 1300 may include:
a processing unit 1310 and a transceiver unit 1320.

Specifically, the processing unit is configured to determine a first time-frequency resource and a second time-frequency resource on an uplink channel, where the first time-frequency resource is used to send first uplink information, the second time-frequency resource is used to send second uplink information, the first uplink information includes first uplink data information corresponding to a first priority and/or first uplink control information corresponding to the first priority, the second uplink information includes second uplink data information corresponding to a second priority and/or second uplink control information corresponding to the second priority, and the first uplink information and the second uplink information are separately encoded; and
the transceiver unit is configured to send information on the first time-frequency resource and the second time-frequency resource.

In this embodiment of this application, a terminal device separately encodes control information or data information corresponding to services with different priorities, and determines priorities of two services to enable a priority of control/service information corresponding to a low-priority service to be lower than a priority of control/service information corresponding to a high-priority service, or enable a time-frequency domain position of control/service information corresponding to a low-priority service to be later than a time-frequency domain position of control/service information corresponding to a high-priority service, to better balance two services with different priorities.

Optionally, the first uplink data information includes data information that is scheduled or configured to be sent by the terminal device by using first downlink control information, where that the first uplink data information corresponds to the first priority is indicated by meeting one or more of the following conditions: a first bit field in the first downlink control information indicates or configures that the first uplink data information corresponds to the first priority, the first downlink control information is located in first search space, the first downlink control information is located in a first PDCCH occasion set, the first downlink control information corresponds to a first DCI format, and the first downlink control information corresponds to a first RNTI; or
the first uplink control information includes uplink control information that is configured or triggered to be sent by the terminal device by using second downlink control information, where that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

Optionally, the second uplink control information includes uplink control information that is configured or triggered to be sent by the terminal device by using third downlink control information, where that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI; or
the second uplink data information includes data information that is scheduled or configured to be sent by the terminal device by using fourth downlink control information, where that the second uplink data information corresponds to the second priority is indicated by meeting one or more of the following conditions: a fourth bit field in the fourth downlink control information indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

Optionally, the first uplink control information includes one or more of the following information: HARQ-ACK information corresponding to the first priority, channel state information CSI corresponding to the first priority, and SR information corresponding to the first priority; and
the second uplink control information includes one or more of the following information: HARQ-ACK information corresponding to the second priority, CSI corresponding to the second priority, and SR information corresponding to the second priority.

Optionally, the first time-frequency resource is earlier than the second time-frequency resource in time domain, and/or the first time-frequency resource is lower than the second time domain resource in frequency domain; or
a time interval between a time-domain symbol corresponding to the first time-frequency resource and a DMRS symbol of the uplink channel is less than a time interval between a time-domain symbol corresponding to the second time-frequency resource and the DMRS symbol, and/or the first time-frequency resource is lower than the second time-frequency resource in frequency domain.

Optionally, the first uplink information includes the first uplink control information corresponding to the first priority, and the second uplink information includes the second uplink control information corresponding to the second priority. The processing unit is further configured to determine a third time-frequency resource on the uplink channel, where the third time-frequency resource is used by the terminal device to send third uplink information, the third uplink information includes third uplink control information corresponding to the first priority, the third uplink control information and the first uplink control information are separately encoded, and the third uplink control information and the second uplink control information are separately encoded. The transceiver unit is further configured to send information on the third time-frequency resource.

The second time domain resource is earlier than the third time-frequency resource in time domain, and/or the second time-frequency resource is lower than the third time domain resource in frequency domain; or a time interval between the time-domain symbol corresponding to the second time-frequency resource and the DMRS symbol of the uplink channel is less than a time interval between a time-domain symbol corresponding to the third time-frequency resource and the DMRS symbol, and/or the second time-frequency resource is lower than the third time-frequency resource in frequency domain.

Optionally, before the transceiver unit sends the information on the first time-frequency resource and the second time-frequency resource, the processing unit is further configured to respectively map the first uplink information and the second uplink information to the first time-frequency resource and the second time-frequency resource in a rate matching manner.

The transceiver unit is specifically configured to: send the first uplink information on the first time-frequency resource, and send the second uplink information on the second time-frequency resource.

Optionally, before the transceiver unit sends the information on the first time-frequency resource and the second time-frequency resource, the processing unit is further configured to:
map the second uplink information to the second time-frequency resource;
map the first uplink information to the first time-frequency resource; and
discard information that is in the second uplink information and that has been mapped to a first overlapping time-frequency resource, where the first overlapping time-frequency resource is an overlapping time-frequency resource of the first time-frequency resource and the second time-frequency resource.

The transceiver unit is specifically configured to: send the first uplink information on the first time-frequency resource, and send the second uplink information on a first non-overlapping time-frequency resource, where the first non-overlapping time-frequency resource is a time-frequency resource other than the first overlapping time-frequency resource in the second time-frequency resource.

Optionally, before the transceiver unit sends the information on the first time-frequency resource and the second time-frequency resource, the processing unit is further configured to:
map the first uplink information to the first time-frequency resource;
map the second uplink information to the second time-frequency resource; and
discard information that is in the first uplink information and that has been mapped to a second overlapping time-frequency resource, where the second overlapping time-frequency resource is an overlapping time-frequency resource of the first time-frequency resource and the second time-frequency resource.

The transceiver unit is specifically configured to: send the first uplink information on a second non-overlapping time-frequency resource, and send the second uplink information on the second time-frequency resource, where the second non-overlapping time-frequency resource is a time-frequency resource other than the second overlapping time-frequency resource in the first time-frequency resource.

Optionally, the first time-frequency resource is a reserved resource corresponding to the first uplink information, and the first time-frequency resource and the second time-frequency resource do not overlap.

If the first uplink information is sent on the uplink channel, before the transceiver unit sends the information on the first time-frequency resource and the second time-frequency resource, the processing unit is further configured to:
map the second uplink information to the second time-frequency resource, and map the first uplink information to the first time-frequency resource.

The transceiver unit is specifically configured to: send the first uplink information on the first time-frequency resource, and send the second uplink information on the second time-frequency resource.

Alternatively, if the first uplink information is not sent on the uplink channel, before the transceiver unit sends the information on the first time-frequency resource and the second time-frequency resource, the processing unit is further configured to:
map the second uplink information to the second time-frequency resource, and map fourth uplink information to the first time-frequency resource, where the fourth uplink information is different from the first uplink information.

The transceiver unit is specifically configured to: send the fourth uplink information on the first time-frequency resource, and send the second uplink information on the second time-frequency resource.

Optionally, the first time-frequency resource is predefined, or is preconfigured by a network device.

Optionally, the second time-frequency resource is a reserved resource corresponding to the second uplink information, and the first time-frequency resource and the second time-frequency resource do not overlap.

If the second uplink information is sent on the uplink channel, before the transceiver unit sends the information on the first time-frequency resource and the second time-frequency resource, the processing unit is further configured to:
map the first uplink information to the first time-frequency resource, and map the second uplink information to the second time-frequency resource.

The transceiver unit is specifically configured to: send the first uplink information on the first time-frequency resource, and send the second uplink information on the second time-frequency resource.

Alternatively, if the second uplink information is not sent on the uplink channel, before the transceiver unit sends the information on the first time-frequency resource and the second time-frequency resource, the processing unit is further configured to:
map the first uplink information to the first time-frequency resource, and map fifth uplink information to the second time-frequency resource, where the fifth uplink information is different from the second uplink information.

The transceiver unit is specifically configured to: send the first uplink information on the first time-frequency resource, and send the fifth uplink information on the second time-frequency resource.

Optionally, the second time-frequency resource is predefined, or preconfigured by a network device.

The communications apparatus 1300 provided in this application may correspond to processes performed by the terminal device in the method embodiments in FIG. 4 to FIG. 12. For a function of each unit/module in the communications apparatus, refer to the foregoing descriptions. Detailed descriptions are appropriately omitted herein.

It should be understood that, the communications apparatus in FIG. 13 may be a terminal device, or may be a chip or an integrated circuit that may be used in a terminal device.

For example, the communications apparatus is a terminal device. FIG. 14 is a schematic structural diagram of a terminal device according to an embodiment of this application. For ease of understanding and illustration, in FIG. 14, for example, the terminal device is a mobile phone. FIG. 14 shows only main components of the terminal device. The terminal device 1400 shown in FIG. 14 includes a processor, a memory, a control circuit, and an antenna. Optionally, the terminal device may further include an input/output apparatus. It should be understood that, the control circuit may be disposed in the processor, or may be located outside the processor and exists independently. This embodiment of this application is not limited thereto. The processor is mainly configured to: process a communications protocol and communications data, control the entire terminal device, execute a software program, and process data of the software program, for example, configured to support the terminal device in performing an action described in the foregoing method embodiments. The memory is mainly configured to store the software program and data. The control circuit is mainly configured to: perform conversion between a baseband signal and a radio frequency signal, and process the radio frequency signal. A combination of the control circuit and the antenna may also be referred to as a transceiver that is mainly configured to receive and send a radio frequency signal in an electromagnetic wave form. The input/output apparatus, such as a touchscreen, a display screen, or a keyboard, is mainly configured to: receive data entered by a user and output data to the user.

After the terminal device is powered on, the processor may read the software program in the memeory, interpret and execute instructions of the software program, and process the data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal to the outside through the antenna in an electromagnetic wave form. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 14 shows only one memory and one processor. An actual terminal device may have a plurality of processors and a plurality of memories. The memory may also be referred to as a storage medium, a storage device, or the like. This is not limited in this embodiment of this application. It should be understood that, the memory may be integrated in the processor, or may be located outside the processor and exists independently. This embodiment of this application is not limited thereto.

In an optional implementation, the processor may include a baseband processor and a central processing unit. The baseband processor is mainly configured to process the communications protocol and the communications data. The central processing unit is mainly configured to: control the entire terminal device, execute the software program, and process the data of the software program. Functions of the baseband processor and the central processing unit may be integrated into the processor in FIG. 14. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to improve a processing capability of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communications protocol and the communications data may be built in the processor, or may be stored in the memory in a form of a software program. The processor executes the software program to implement a baseband processing function.

In this embodiment of this application, the control circuit and the antenna that has transmitting and receiving functions may be considered as a transceiver unit 141 of the terminal device 1400, for example, configured to support the terminal device in performing the transmitting and receiving functions performed by the terminal device in the method embodiments shown in FIG. 4 to FIG. 12. The processor having a processing function is considered as a processing unit 142 of the terminal device 1400, and corresponds to the processing unit 1310 in FIG. 13. As shown in FIG. 14, the terminal device 1400 includes the transceiver unit 141 and the processing unit 142. The transceiver unit may also be referred to as a transceiver, a transceiver machine, a transceiver apparatus, or the like. The transceiver unit corresponds to the transceiver unit 1320 in FIG. 13. Optionally, a device configured to implement the receiving function in the transceiver unit 141 may be considered as a receiving unit. A device configured to implement the sending function in the transceiver unit 141 may be considered as a sending unit. In other words, the transceiver unit 141 includes the receiving unit and the sending unit. The receiving unit may also be referred to as a receiver, an input port, a receiving circuit, or the like. The sending unit may be referred to as a transmitter, a transmitting circuit, or the like.

The processing unit 142 may be configured to execute instructions stored in the memory, to control the transceiver unit 141 to receive a signal and/or send a signal to implement a function of the terminal device in the foregoing method embodiments. In an implementation, it may be considered that the function of the transceiver unit 141 is implemented through a transceiver circuit or a special-purpose transceiver chip. It may be understood that the transceiver unit may also be an interface circuit.

It should be understood that, the terminal device 1400 shown in FIG. 14 can implement each process related to the terminal device in the method embodiments in FIG. 4 to FIG. 12. Operations and/or functions of the modules in the terminal device 1400 are separately intended to implement corresponding procedures in the foregoing method embodiments. For details, refer to the descriptions in the foregoing method embodiments. To avoid repetition, detailed descriptions are appropriately omitted herein.

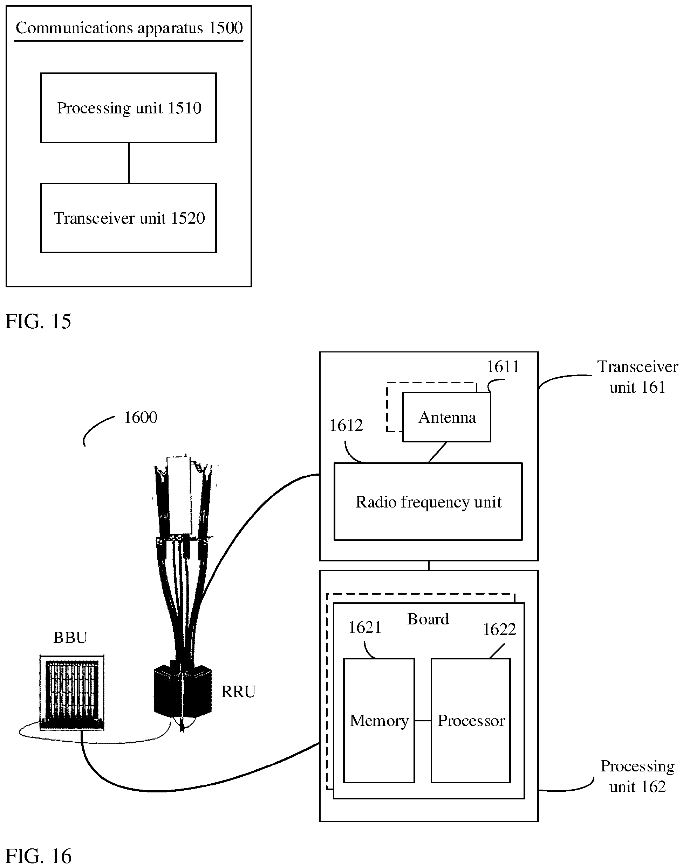

FIG. 15 is a schematic structural diagram of a communications apparatus according to an embodiment of this application. The apparatus 1500 may include:
a processing unit 1510 and a transceiver unit 1520.

Specifically, a first time-frequency resource and a second time-frequency resource on an uplink channel are determined, where the first time-frequency resource is used to carry first uplink information, the second time-frequency resource is used to carry second uplink information, the first uplink information includes first uplink data information corresponding to a first priority and/or first uplink control information corresponding to the first priority, the second uplink information includes second uplink data information corresponding to a second priority and/or second uplink control information corresponding to the second priority, and the first uplink information and the second uplink information are separately encoded.

Information from a terminal device is received on the first time-frequency resource and the second time-frequency resource.

In this embodiment of this application, control information or data information corresponding to services with different priorities is separately encoded, and priorities of two services are determined to enable a priority of control/service information corresponding to a low-priority service to be lower than a priority of control/service information corresponding to a high-priority service, or enable a time-frequency domain position of control/service information corresponding to a low-priority service to be later than a time-frequency domain position of control/service information corresponding to a high-priority service, to better balance two services with different priorities.

Optionally, the first uplink data information includes data information that is scheduled or configured to be sent by the terminal device by using first downlink control information, where that the first uplink data information corresponds to the first priority is indicated by meeting one or more of the following conditions: a first bit field in the first downlink control informaition indicates or configures that the first uplink data information corresponds to the first priority, the first downlink control information is located in first search space, the first downlink control information is located in a first physical downlink control channel PDCCH occasion set, the first downlink control information corresponds to a first DCI format, and the first downlink control information corresponds to a first RNTI; or
the first uplink control information includes uplink control information that is configured or triggered to be sent by the terminal device by using second downlink control information, where that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

Optionally, the second uplink control information includes uplink control information that is configured or triggered to be sent by the terminal device by using third downlink control information, where that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI; or
the second uplink data information includes data information that is scheduled or configured to be sent by the terminal device by using fourth downlink control information, where that the second uplink data information corresponds to the second priority is indicated by meeting one or more of the following conditions: a fourth bit field in the fourth downlink control informaition indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

Optionally, the first uplink control information includes one or more of the following information: HARQ-ACK information corresponding to the first priority, channel state information CSI corresponding to the first priority, and SR information corresponding to the first priority; and
the second uplink control information includes one or more of the following information: HARQ-ACK information corresponding to the second priority, CSI corresponding to the second priority, and SR information corresponding to the second priority.

Optionally, the first time-frequency resource is earlier than the second time-frequency resource in time domain, and/or the first time-frequency resource is lower than the second time domain resource in frequency domain; or
a time interval between a time-domain symbol corresponding to the first time-frequency resource and a DMRS symbol of the uplink channel is less than a time interval between a time-domain symbol corresponding to the second time-frequency resource and the DMRS symbol, and/or the first time-frequency resource is lower than the second time-frequency resource in frequency domain.

Optionally, the first uplink information includes the first uplink control information corresponding to the first priority, and the second uplink information includes the second uplink control information corresponding to the second priority. The processing unit is further configured to determine a third time-frequency resource on the uplink channel, where the third time-frequency resource is used by the terminal device to send third uplink information, the third uplink information includes third uplink control information corresponding to the first priority, the third uplink control information and the first uplink control information are separately encoded, and the third uplink control information and the second uplink control information are separately encoded.

The transceiver unit is further configured to receive information from the terminal device on the third time-frequency resource.

The second time domain resource is earlier than the third time-frequency resource in time domain, and/or the second time-frequency resource is lower than the third time domain resource in frequency domain; or a time interval between the time-domain symbol corresponding to the second time-frequency resource and the DMRS symbol of the uplink channel is less than a time interval between a time-domain symbol corresponding to the third time-frequency resource and the DMRS symbol, and/or the second time-frequency resource is lower than the third time-frequency resource in frequency domain.

Optionally, the transceiver unit is specifically configured to: receive, on the first time-frequency resource, the first uplink information sent by the terminal device, and receive, on the second time-frequency resource, the second uplink information sent by the terminal device, where
the first uplink information and the second uplink information are mapped to the first time-frequency resource and the second time-frequency resource in a rate matching manner.

Optionally, the transceiver unit is specifically configured to: receive, on the first time-frequency resource, the first uplink information sent by the terminal device, and receive, on a first non-overlapping time-frequency resource, the second uplink information sent by the terminal device, where
the first non-overlapping time-frequency resource is a time-frequency resource other than a first overlapping time-frequency resource in the second time-frequency resource, the first overlapping time-frequency resource is an overlapping time-frequency resource of the first time-frequency resource and the second time-frequency resource, the second uplink information is information that is sent on the first non-overlapping time-frequency resource when the terminal device maps the second uplink information to the second time-frequency resource and discards information that is in the second uplink information and that has been mapped to the first overlapping time-frequency resource, and the first uplink information is information that is mapped to the first time-frequency resource when the terminal device discards information that is in the second uplink information and that has been mapped to the first overlapping time-frequency resource.

Optionally, the transceiver unit is specifically configured to: receive, on a second non-overlapping time-frequency resource, the first uplink information sent by the terminal device, and receive, on the second time-frequency resource, the second uplink information sent by the terminal device, where
the second non-overlapping time-frequency resource is a time-frequency resource other than a second overlapping time-frequency resource in the first time-frequency resource, the second overlapping time-frequency resource is an overlapping time-frequency resource of the first time-frequency resource and the second time-frequency resource, the first uplink information is information that is sent on the second non-overlapping time-frequency resource when the terminal device maps the first uplink information to the first time-frequency resource and discards information that is in the first uplink information and that has been mapped to the second overlapping time-frequency resource, and the second uplink information is information that is mapped to the second time-frequency resource when the terminal device discards information that is in the first uplink information and that has been mapped to the second overlapping time-frequency resource.

Optionally, the first time-frequency resource is a reserved resource corresponding to the first uplink information, and the first time-frequency resource and the second time-frequency resource do not overlap.

When the uplink channel carries the first uplink information, the second uplink information is mapped to the second time-frequency resource, and the first uplink information is mapped to the first time-frequency resource.

The transceiver unit is specifically configured to: receive, on the first time-frequency resource, the first uplink information sent by the terminal device, and receive, on the second time-frequency resource, the second uplink information sent by the terminal device.

Alternatively, when the uplink channel does not carry the first uplink information, the second uplink information is mapped to the second time-frequency resource, fourth uplink information is mapped to the first time-frequency resource, and the fourth uplink information is different from the first uplink information.

The transceiver unit is specifically configured to: receive, on the first time-frequency resource, the fourth uplink information sent by the terminal device, and receive, on the second time-frequency resource, the second uplink information sent by the terminal device.

Optionally, the first time-frequency resource is predefined, or is preconfigured by a network device.

Optionally, the second time-frequency resource is a reserved resource corresponding to the second uplink information, and the first time-frequency resource and the second time-frequency resource do not overlap.

When the uplink channel carries the second uplink information, the first uplink information is mapped to the first time-frequency resource, and the second uplink information is mapped to the second time-frequency resource. The transceiver unit is specifically configured to: receive, on the first time-frequency resource, the first uplink information sent by the terminal device, and receive, on the second time-frequency resource, the second uplink information sent by the terminal device.

Alternatively, when the uplink channel does not carry the second uplink information, the first uplink information is mapped to the first time-frequency resource, fifth uplink information is mapped to the second time-frequency resource, and the fifth uplink information is different from the second uplink information.

The transceiver unit is specifically configured to: receive, on the first time-frequency resource, the first uplink information sent by the terminal device, and receive, on the second time-frequency resource, the fifth uplink information sent by the terminal device.

Optionally, the second time-frequency resource is predefined, or preconfigured by a network device.

The communications apparatus 1500 provided in this application may correspond to processes performed by the network device in the method embodiments in FIG. 4 to FIG. 12. For a function of each unit/module in the communications apparatus, refer to the foregoing descriptions. Detailed descriptions are appropriately omitted herein.

It should be understood that, the communications apparatus in FIG. 15 may be a network device, or may be a chip or an integrated circuit that may be used in a network device.

For example, the communications apparatus is a network device communicating with the terminal device. FIG. 16 is a schematic structural diagram of a network device according to an embodiment of this application, for example, may be a schematic structural diagram of a base station. As shown in FIG. 16, the network device 1600 may be applied to the system shown in FIG. 1, and performs a function of the network device in the foregoing method embodiments.

The network device 1600 may include one or more radio frequency units, for example, a remote radio unit (remote radio unit, RRU) 161 and one or more baseband units (baseband unit, BBU) (which may also be referred to as a digital unit (digital unit, DU)) 162. The RRU 161 may be referred to as a transceiver unit 161, and corresponds to the transceiver unit 1520 in FIG. 15. Optionally, the transceiver unit may also be referred to as a transceiver machine, a transceiver circuit, a transceiver, or the like, and may include at least one antenna 1611 and a radio frequency unit 1612. The RRU 161 is mainly configured to: receive and send a radio frequency signal and perform conversion between a radio frequency signal and a baseband signal, for example, configured to send precoding matrix information to a terminal device. The BBU 162 is mainly configured to: perform baseband processing, control the base station, and so on. The RRU 161 and the BBU 162 may be physically disposed together, or may be physically separated, that is, a distributed base station. It may be understood that the transceiver unit may also be an interface circuit.

The BBU 162 is a control center of the base station, and may also be referred to as a processing unit 162. The BBU 162 may correspond to the processing unit 1510 in FIG. 15, and is mainly configured to implement a baseband processing function, for example, channel coding, multiplexing, modulation, or spreading. For example, the BBU (the processing unit) may be configured to control the base station to perform an operation procedure related to the network device in the foregoing method embodiments.

In an example, the BBU 162 may include one or more boards, and a plurality of boards may jointly support a radio access network (for example, an LTE network) having a single access standard, or may separately support radio access networks (for example, an LTE network, a 5G network, or another network) having different access standards. The BBU 162 further includes a memory 1621 and a processor 1622. The memory 1621 is configured to store necessary instructions and data. The processor 1622 is configured to control the base station to perform a necessary action, for example, configured to control the base station to perform an operation procedure related to the network device in the foregoing method embodiments. It should be understood that, the memory may be integrated in the processor, or may be located outside the processor and exists independently. This embodiment of this application is not limited thereto. The memory 1621 and the processor 1622 may serve the one or more boards. To be specific, a memory and a processor may be separately disposed on each board. Alternatively, a plurality of boards may share a same memory and a same processor. In addition, a necessary circuit may be further disposed on each board.

It should be understood that the network device 1600 shown in FIG. 16 can implement each process related to the network device in the method embodiments in FIG. 4 to FIG. 12. Operations and/or functions of the modules in the network device 1600 are separately intended to implement corresponding procedures in the foregoing method embodiments. For details, refer to the descriptions in the foregoing method embodiments. To avoid repetition, detailed descriptions are appropriately omitted herein.

An embodiment of this application further provides a processing apparatus, including a processor and an interface. The processor is configured to perform the communications method in any one of the foregoing method embodiments.

It should be understood that, the processing apparatus may be a chip. For example, the processing apparatus may be a field-programmable gate array (Field-Programmable Gate Array, FPGA), an application specific integrated chip (Application Specific Integrated Circuit, ASIC), a system on chip (System on Chip, SoC), a central processing unit (Central Processor Unit, CPU), a network processor (Network Processor, NP), a digital signal processing circuit (Digital Signal Processor, DSP), a micro controller unit (Micro Controller Unit, MCU), a programmable controller (Programmable Logic Device, PLD), or another integrated chip.

In an implementation process, steps in the foregoing methods can be implemented by using a hardware integrated logical circuit in the processor, or by using instructions in a form of software. The steps of the methods disclosed with reference to the embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that the processor in this embodiment of the present invention may be an integrated circuit chip and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in the embodiments of the present invention. The general-purpose processor may be a microprocessor, or the processor may be any conventional processor or the like. Steps of the methods disclosed with reference to the embodiments of the present invention may be directly executed and accomplished by using a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of the present invention may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), and a direct rambus dynamic random access memory (direct Rambus RAM, DR RAM). It should be noted that the memory of the systems and methods described in this specification includes but is not limited to these and any memory of another proper type.

An embodiment of this application further provides a communications system, including the foregoing network device and the foregoing terminal device.

An embodiment of this application further provides a computer-readable medium. The computer-readable medium stores a computer program. When the computer program is executed by a computer, the method in any one of the foregoing method embodiments is implemented.

An embodiment of this application further provides a computer program product. When the computer program product is executed by a computer, the method in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD), a semiconductor medium (for example, a solid-state drive (solid state disk, SSD)), or the like.

It should be understood that the foregoing describes a communications method used in downlink transmission in a communications system. However, this application is not limited thereto. Optionally, a solution similar to the foregoing solution may also be used in uplink transmission. To avoid repetition, details are not described herein again.

The network device and the terminal device in the foregoing apparatus embodiments entirely correspond to the network device or the terminal device in the method embodiments. A corresponding module or unit performs a corresponding step. For example, a sending module (transmitter) performs a sending step in the method embodiments, and a receiving module (receiver) performs a receiving step in the method embodiments, a step other than sending and receiving steps may be performed by a processing module (processor). For a function of a specific module, refer to the corresponding method embodiments. The sending module and the receiving module may form a transceiver module, and the transmitter and the receiver may form a transceiver, to jointly implement receiving and sending functions. There may be one or more processors.

In this application, "at least one" means one or more, and "a plurality of' means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

It should be understood that "an embodiment" or "an embodiment" mentioned in the whole specification does not mean that particular features, structures, or characteristics related to the embodiment are included in at least one embodiment of this application. Therefore, "in an embodiment" or "in an embodiment" appearing throughout the specification does not refer to a same embodiment. In addition, these particular features, structures, or characteristics may be combined in one or more embodiments in any appropriate manner. It should be understood that sequence numbers of the foregoing processes do not mean execution sequences in the embodiments of this application. The execution sequences of the processes should be determined based on functions and internal logic of the processes, and should not be construed as any limitation on the implementation processes of the embodiments of this application.

The terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, a thread of execution, a program, and/or a computer. As shown in figures, both a computing device and an application that runs on a computing device may be components. One or more components may reside within a process and/or a thread of execution, and a component may be located on one computer and/or distributed between two or more computers. In addition, these components may be executed from various computer-readable media that store various data structures. For example, the components may perform communication by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in the embodiments disclosed in this specification and steps (step) may be implemented by using electronic hardware or a combination of computer software and electronic hardware. Whether the functions are performed by using hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electrical, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An uplink information transmission method, comprising:
determining a first time-frequency resource and a second time-frequency resource on an uplink channel, wherein the first time-frequency resource is used to send first uplink information, the second time-frequency resource is used to send second uplink information, the first uplink information comprises first uplink data information corresponding to a first priority and/or first uplink control information corresponding to the first priority, the second uplink information comprises second uplink data information corresponding to a second priority and/or second uplink control information corresponding to the second priority, and the first uplink information and the second uplink information are separately encoded; and
sending information on the first time-frequency resource and the second time-frequency resource.

2. The method according to claim 1, wherein
the first uplink data information comprises data information that is scheduled or configured to be sent by a terminal device by using first downlink control information, wherein that the first uplink data information corresponds to the first priority is indicated by meeting one or more of the following conditions: a first bit field in the first downlink control information indicates or configures that the first uplink data information corresponds to the first priority, the first downlink control information is located in first search space, the first downlink control information is located in a first physical downlink control channel PDCCH occasion set, the first downlink control information corresponds to a first downlink control information format DCI format, and the first downlink control information corresponds to a first radio network temporary identifier RNTI; or
the first uplink control information comprises uplink control information that is configured or triggered to be sent by a terminal device by using second downlink control information, wherein that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

3. The method according to claim 1 or 2, wherein
the second uplink control information comprises uplink control information that is configured or triggered to be sent by the terminal device by using third downlink control information, wherein that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI; or
the second uplink data information comprises data information that is scheduled or configured to be sent by the terminal device by using fourth downlink control information, wherein that the second uplink data information corresponds to the second priority is indicated by meeting one or more of the following conditions: a fourth bit field in the fourth downlink control information indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

4. The method according to claim 2 or 3, wherein
the first uplink control information comprises one or more of the following information: hybrid automatic repeat request-acknowledgment HARQ-ACK information corresponding to the first priority, channel state information CSI corresponding to the first priority, and scheduling request SR information corresponding to the first priority; and
the second uplink control information comprises one or more of the following information: HARQ-ACK information corresponding to the second priority, CSI corresponding to the second priority, and SR information corresponding to the second priority.

5. The method according to any one of claims 1 to 4, wherein
the first time-frequency resource is earlier than the second time-frequency resource in time domain, and/or the first time-frequency resource is lower than the second time-frequency resource in frequency domain; or
a time interval between a time-domain symbol corresponding to the first time-frequency resource and a demodulation reference signal DMRS symbol of the uplink channel is less than a time interval between a time-domain symbol corresponding to the second time-frequency resource and the DMRS symbol, and/or the first time-frequency resource is lower than the second time-frequency resource in frequency domain.

6. The method according to claim 5, wherein the first uplink information comprises the first uplink control information corresponding to the first priority, the second uplink information comprises the second uplink control information corresponding to the second priority, and the method further comprises:
determining a third time-frequency resource on the uplink channel, wherein the third time-frequency resource is used to send third uplink information, the third uplink information comprises third uplink control information corresponding to the first priority, the third uplink control information and the first uplink control information are separately encoded, and the third uplink control information and the second uplink control information are separately encoded, and
sending information on the third time-frequency resource, wherein
the second time domain resource is earlier than the third time-frequency resource in time domain, and/or the second time-frequency resource is lower than the third time domain resource in frequency domain; or
a time interval between the time-domain symbol corresponding to the second time-frequency resource and the demodulation reference signal DMRS symbol of the uplink channel is less than a time interval between a time-domain symbol corresponding to the third time-frequency resource and the DMRS symbol, and/or the second time-frequency resource is lower than the third time-frequency resource in frequency domain.

7. The method according to any one of claims 1 to 6, wherein before the sending information on the first time-frequency resource and the second time-frequency resource, the method further comprises:
respectively mapping the first uplink information and the second uplink information to the first time-frequency resource and the second time-frequency resource in a rate matching manner, wherein
the sending information on the first time-frequency resource and the second time-frequency resource comprises:
sending the first uplink information on the first time-frequency resource, and sending the second uplink information on the second time-frequency resource.

8. The method according to any one of claims 1 to 6, wherein before the sending information on the first time-frequency resource and the second time-frequency resource, the method further comprises:
mapping the second uplink information to the second time-frequency resource; and
mapping the first uplink information to the first time-frequency resource, and discarding information that is in the second uplink information and that has been mapped to a first overlapping time-frequency resource, wherein the first overlapping time-frequency resource is an overlapping time-frequency resource of the first time-frequency resource and the second time-frequency resource, and
the sending information on the first time-frequency resource and the second time-frequency resource comprises:
sending the first uplink information on the first time-frequency resource, and sending the second uplink information on a first non-overlapping time-frequency resource, wherein the first non-overlapping time-frequency resource is a time-frequency resource other than the first overlapping time-frequency resource in the second time-frequency resource.

9. The method according to any one of claims 1 to 6, wherein before the sending information on the first time-frequency resource and the second time-frequency resource, the method further comprises:
mapping the first uplink information to the first time-frequency resource; and
mapping the second uplink information to the second time-frequency resource, and discarding information that is in the first uplink information and that has been mapped to a second overlapping time-frequency resource, wherein the second overlapping time-frequency resource is an overlapping time-frequency resource of the first time-frequency resource and the second time-frequency resource, and
the sending information on the first time-frequency resource and the second time-frequency resource comprises:
sending the first uplink information on a second non-overlapping time-frequency resource, and sending the second uplink information on the second time-frequency resource, wherein the second non-overlapping time-frequency resource is a time-frequency resource other than the second overlapping time-frequency resource in the first time-frequency resource.

10. The method according to any one of claims 1 to 6, wherein the first time-frequency resource is a reserved resource corresponding to the first uplink information, and the first time-frequency resource and the second time-frequency resource do not overlap; and
when the first uplink information is sent on the uplink channel, before the sending information on the first time-frequency resource and the second time-frequency resource, the method further comprises:
mapping the second uplink information to the second time-frequency resource, and mapping the first uplink information to the first time-frequency resource, wherein
the sending information on the first time-frequency resource and the second time-frequency resource comprises:
sending the first uplink information on the first time-frequency resource, and sending the second uplink information on the second time-frequency resource; or
when the first uplink information is not sent on the uplink channel, before the sending information on the first time-frequency resource and the second time-frequency resource, the method further comprises:
mapping the second uplink information to the second time-frequency resource, and mapping fourth uplink information to the first time-frequency resource, wherein the fourth uplink information is different from the first uplink information, wherein
the sending information on the first time-frequency resource and the second time-frequency resource comprises:
sending the fourth uplink information on the first time-frequency resource, and sending the second uplink information on the second time-frequency resource.

11. The method according to claim 10, wherein
the first time-frequency resource is predefined, or preconfigured by a network device.

12. The method according to any one of claims 1 to 6, wherein the second time-frequency resource is a reserved resource corresponding to the second uplink information, and the first time-frequency resource and the second time-frequency resource do not overlap; and
when the second uplink information is sent on the uplink channel, before the sending information on the first time-frequency resource and the second time-frequency resource, the method further comprises:
mapping the first uplink information to the first time-frequency resource, and mapping the second uplink information to the second time-frequency resource, wherein
the sending information on the first time-frequency resource and the second time-frequency resource comprises:
sending the first uplink information on the first time-frequency resource, and sending the second uplink information on the second time-frequency resource; or
when the second uplink information is not sent on the uplink channel, before the sending information on the first time-frequency resource and the second time-frequency resource, the method further comprises:
mapping the first uplink information to the first time-frequency resource, and mapping fifth uplink information to the second time-frequency resource, wherein the fifth uplink information is different from the second uplink information, and
the sending information on the first time-frequency resource and the second time-frequency resource comprises:
sending, by the terminal device, the first uplink information on the first time-frequency resource, and sending the fifth uplink information on the second time-frequency resource.

13. The method according to claim 12, wherein
the second time-frequency resource is predefined, or preconfigured by a network device.

14. An uplink information transmission method, comprising:
determining a first time-frequency resource and a second time-frequency resource on an uplink channel, wherein the first time-frequency resource is used to carry first uplink information, the second time-frequency resource is used to carry second uplink information, the first uplink information comprises first uplink data information corresponding to a first priority and/or first uplink control information corresponding to the first priority, the second uplink information comprises second uplink data information corresponding to a second priority and/or second uplink control information corresponding to the second priority, and the first uplink information and the second uplink information are separately encoded; and
receiving information from a terminal device on the first time-frequency resource and the second time-frequency resource.

15. The method according to claim 14, wherein
the first uplink data information comprises data information that is scheduled or configured to be sent by the terminal device by using first downlink control information, wherein that the first uplink data information corresponds to the first priority is indicated by meeting one or more of the following conditions: a first bit field in the first downlink control information indicates or configures that the first uplink data information corresponds to the first priority, the first downlink control information is located in first search space, the first downlink control information is located in a first physical downlink control channel PDCCH occasion set, the first downlink control information corresponds to a first downlink control information format DCI format, and the first downlink control information corresponds to a first radio network temporary identifier RNTI; or
the first uplink control information comprises uplink control information that is configured or triggered to be sent by the terminal device by using second downlink control information, wherein that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

16. The method according to claim 15, wherein
the second uplink control information comprises uplink control information that is configured or triggered to be sent by the terminal device by using third downlink control information, wherein that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI; or
the second uplink data information comprises data information that is scheduled or configured to be sent by the terminal device by using fourth downlink control information, wherein that the second uplink data information corresponds to the second priority is indicated by meeting one or more of the following conditions: a fourth bit field in the fourth downlink control informaition indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

17. The method according to claim 15 or 16, wherein
the first uplink control information comprises one or more of the following information: hybrid automatic repeat request-acknowledgment HARQ-ACK information corresponding to the first priority, channel state information CSI corresponding to the first priority, and scheduling request SR information corresponding to the first priority; and
the second uplink control information comprises one or more of the following information: HARQ-ACK information corresponding to the second priority, CSI corresponding to the second priority, and SR information corresponding to the second priority.

18. The method according to any one of claims 14 to 17, wherein
the first time-frequency resource is earlier than the second time-frequency resource in time domain, and/or the first time-frequency resource is lower than the second time domain resource in frequency domain; or
a time interval between a time-domain symbol corresponding to the first time-frequency resource and a demodulation reference signal DMRS symbol of the uplink channel is less than a time interval between a time-domain symbol corresponding to the second time-frequency resource and the DMRS symbol, and/or the first time-frequency resource is lower than the second time-frequency resource in frequency domain.

19. The method according to claim 18, wherein the first uplink information comprises the first uplink control information corresponding to the first priority, the second uplink information comprises the second uplink control information corresponding to the second priority, and the method further comprises:
determining a third time-frequency resource on the uplink channel, wherein the third time-frequency resource is used by the terminal device to send third uplink information, the third uplink information comprises third uplink control information corresponding to the first priority, the third uplink control information and the first uplink control information are separately encoded, and the third uplink control information and the second uplink control information are separately encoded, and
receiving information from the terminal device on the third time-frequency resource, wherein
the second time domain resource is earlier than the third time-frequency resource in time domain, and/or the second time-frequency resource is lower than the third time domain resource in frequency domain; or
a time interval between the time-domain symbol corresponding to the second time-frequency resource and the demodulation reference signal DMRS symbol of the uplink channel is less than a time interval between a time-domain symbol corresponding to the third time-frequency resource and the DMRS symbol, and/or the second time-frequency resource is lower than the third time-frequency resource in frequency domain.

20. The method according to any one of claims 14 to 19, wherein the receiving information from the terminal device on the first time-frequency resource and the second time-frequency resource comprises:
receiving the first uplink information from the terminal device on the first time-frequency resource, and receiving the second uplink information from the terminal device on the second time-frequency resource, wherein
the first uplink information and the second uplink information are mapped to the first time-frequency resource and the second time-frequency resource in a rate matching manner.

21. The method according to any one of claims 14 to 19, wherein the receiving information from the terminal device on the first time-frequency resource and the second time-frequency resource comprises:
receiving the first uplink information from the terminal device on the first time-frequency resource, and receiving the second uplink information from the terminal device on a first non-overlapping time-frequency resource, wherein
the first non-overlapping time-frequency resource is a time-frequency resource other than a first overlapping time-frequency resource in the second time-frequency resource, the first overlapping time-frequency resource is an overlapping time-frequency resource of the first time-frequency resource and the second time-frequency resource, the second uplink information is information that is sent on the first non-overlapping time-frequency resource when the terminal device maps the second uplink information to the second time-frequency resource and discards information that is in the second uplink information and that has been mapped to the first overlapping time-frequency resource, and the first uplink information is information that is mapped to the first time-frequency resource when the terminal device discards information that is in the second uplink information and that has been mapped to the first overlapping time-frequency resource.

22. The method according to any one of claims 14 to 19, wherein the receiving information from the terminal device on the first time-frequency resource and the second time-frequency resource comprises:
receiving the first uplink information from the terminal device on a second non-overlapping time-frequency resource, and receiving the second uplink information from the terminal device on the second time-frequency resource, wherein
the second non-overlapping time-frequency resource is a time-frequency resource other than a second overlapping time-frequency resource in the first time-frequency resource, the second overlapping time-frequency resource is an overlapping time-frequency resource of the first time-frequency resource and the second time-frequency resource, the first uplink information is information that is sent on the second non-overlapping time-frequency resource when the terminal device maps the first uplink information to the first time-frequency resource and discards information that is in the first uplink information and that has been mapped to the second overlapping time-frequency resource, and the second uplink information is information that is mapped to the second time-frequency resource when the terminal device discards information that is in the first uplink information and that has been mapped to the second overlapping time-frequency resource.

23. The method according to any one of claims 14 to 19, wherein the first time-frequency resource is a reserved resource corresponding to the first uplink information, and the first time-frequency resource and the second time-frequency resource do not overlap; and
when the uplink channel carries the first uplink information, the second uplink information is mapped to the second time-frequency resource, and the first uplink information is mapped to the first time-frequency resource, wherein
the receiving information from the terminal device on the first time-frequency resource and the second time-frequency resource comprises:
receiving the first uplink information from the terminal device on the first time-frequency resource, and receiving the second uplink information from the terminal device on the second time-frequency resource; or
when the uplink channel does not carry the first uplink information, the second uplink information is mapped to the second time-frequency resource, fourth uplink information is mapped to the first time-frequency resource, and the fourth uplink information is different from the first uplink information, wherein
the receiving information from the terminal device on the first time-frequency resource and the second time-frequency resource comprises:
receiving the fourth uplink information from the terminal device on the first time-frequency resource, and receiving the second uplink information from the terminal device on the second time-frequency resource.

24. The method according to claim 23, wherein
the first time-frequency resource is predefined, or preconfigured by a network device.

25. The method according to any one of claims 14 to 19, wherein the second time-frequency resource is a reserved resource corresponding to the second uplink information, and the first time-frequency resource and the second time-frequency resource do not overlap; and
when the uplink channel carries the second uplink information, the first uplink information is mapped to the first time-frequency resource, and the second uplink information is mapped to the second time-frequency resource, wherein
the receiving information from the terminal device on the first time-frequency resource and the second time-frequency resource comprises:
receiving the first uplink information from the terminal device on the first time-frequency resource, and receiving the second uplink information from the terminal device on the second time-frequency resource; or
when the uplink channel does not carry the second uplink information, the first uplink information is mapped to the first time-frequency resource, fifth uplink information is mapped to the second time-frequency resource, and the fifth uplink information is different from the second uplink information, wherein
the receiving information from the terminal device on the first time-frequency resource and the second time-frequency resource comprises:
receiving the first uplink information from the terminal device on the first time-frequency resource, and receiving the fifth uplink information from the terminal device on the second time-frequency resource.

26. The method according to claim 25, wherein
the second time-frequency resource is predefined, or preconfigured by a network device.

27. A communications apparatus, comprising:
a processing unit and a transceiver unit, wherein
the processing unit is configured to determine a first time-frequency resource and a second time-frequency resource on an uplink channel, wherein the first time-frequency resource is used to send first uplink information, the second time-frequency resource is used to send second uplink information, the first uplink information comprises first uplink data information corresponding to a first priority and/or first uplink control information corresponding to the first priority, the second uplink information comprises second uplink data information corresponding to a second priority and/or second uplink control information corresponding to the second priority, and the first uplink information and the second uplink information are separately encoded; and
the transceiver unit is configured to send information on the first time-frequency resource and the second time-frequency resource.

28. The communications apparatus according to claim 27, wherein
the first uplink data information comprises data information that is scheduled or configured to be sent by a terminal device by using first downlink control information, wherein that the first uplink data information corresponds to the first priority is indicated by meeting one or more of the following conditions: a first bit field in the first downlink control information indicates or configures that the first uplink data information corresponds to the first priority, the first downlink control information is located in first search space, the first downlink control information is located in a first physical downlink control channel PDCCH occasion set, the first downlink control information corresponds to a first downlink control information format DCI format, and the first downlink control information corresponds to a first radio network temporary identifier RNTI; or
the first uplink control information comprises uplink control information that is configured or triggered to be sent by a terminal device by using second downlink control information, wherein that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

29. The communications apparatus according to claim 27 or 28, wherein
the second uplink control information comprises uplink control information that is configured or triggered to be sent by the terminal device by using third downlink control information, wherein that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI; or
the second uplink data information comprises data information that is scheduled or configured to be sent by the terminal device by using fourth downlink control information, wherein that the second uplink data information corresponds to the second priority is indicated by meeting one or more of the following conditions: a fourth bit field in the fourth downlink control information indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

30. The communications apparatus according to claim 28 or 29, wherein
the first uplink control information comprises one or more of the following information: hybrid automatic repeat request-acknowledgment HARQ-ACK information corresponding to the first priority, channel state information CSI corresponding to the first priority, and scheduling request SR information corresponding to the first priority; and
the second uplink control information comprises one or more of the following information: HARQ-ACK information corresponding to the second priority, CSI corresponding to the second priority, and SR information corresponding to the second priority.

31. The communications apparatus according to any one of claims 27 to 30, wherein
the first time-frequency resource is earlier than the second time-frequency resource in time domain, and/or the first time-frequency resource is lower than the second time domain resource in frequency domain; or
a time interval between a time-domain symbol corresponding to the first time-frequency resource and a demodulation reference signal DMRS symbol of the uplink channel is less than a time interval between a time-domain symbol corresponding to the second time-frequency resource and the DMRS symbol, and/or the first time-frequency resource is lower than the second time-frequency resource in frequency domain.

32. The communications apparatus according to claim 31, wherein the first uplink information comprises the first uplink control information corresponding to the first priority, the second uplink information comprises the second uplink control information corresponding to the second priority, and the processing unit is further configured to:
determine a third time-frequency resource on the uplink channel, wherein the third time-frequency resource is used to send third uplink information, the third uplink information comprises third uplink control information corresponding to the first priority, the third uplink control information and the first uplink control information are separately encoded, and the third uplink control information and the second uplink control information are separately encoded, and
send information on the third time-frequency resource, wherein
the second time domain resource is earlier than the third time-frequency resource in time domain, and/or the second time-frequency resource is lower than the third time domain resource in frequency domain; or
a time interval between the time-domain symbol corresponding to the second time-frequency resource and the demodulation reference signal DMRS symbol of the uplink channel is less than a time interval between a time-domain symbol corresponding to the third time-frequency resource and the DMRS symbol, and/or the second time-frequency resource is lower than the third time-frequency resource in frequency domain.

33. The communications apparatus according to any one of claims 27 to 32, wherein before the sending information on the first time-frequency resource and the second time-frequency resource, the processing unit is further configured to:
respectively map the first uplink information and the second uplink information to the first time-frequency resource and the second time-frequency resource in a rate matching manner, wherein
the sending information on the first time-frequency resource and the second time-frequency resource comprises:
sending the first uplink information on the first time-frequency resource, and sending the second uplink information on the second time-frequency resource.

34. The communications apparatus according to any one of claims 27 to 32, wherein before the sending information on the first time-frequency resource and the second time-frequency resource, the processing unit is further configured to:
map the second uplink information to the second time-frequency resource; and
map the first uplink information to the first time-frequency resource, and discard information that is in the second uplink information and that has been mapped to a first overlapping time-frequency resource, wherein the first overlapping time-frequency resource is an overlapping time-frequency resource of the first time-frequency resource and the second time-frequency resource, and
the sending information on the first time-frequency resource and the second time-frequency resource comprises:
sending the first uplink information on the first time-frequency resource, and sending the second uplink information on a first non-overlapping time-frequency resource, wherein the first non-overlapping time-frequency resource is a time-frequency resource other than the first overlapping time-frequency resource in the second time-frequency resource.

35. The communications apparatus according to any one of claims 27 to 32, wherein before the sending information on the first time-frequency resource and the second time-frequency resource, the processing unit is further configured to:
map the first uplink information to the first time-frequency resource; and
map the second uplink information to the second time-frequency resource, and discard information that is in the first uplink information and that has been mapped to a second overlapping time-frequency resource, wherein the second overlapping time-frequency resource is an overlapping time-frequency resource of the first time-frequency resource and the second time-frequency resource, and
the sending information on the first time-frequency resource and the second time-frequency resource comprises:
sending the first uplink information on a second non-overlapping time-frequency resource, and sending the second uplink information on the second time-frequency resource, wherein the second non-overlapping time-frequency resource is a time-frequency resource other than the second overlapping time-frequency resource in the first time-frequency resource.

36. The communications apparatus according to any one of claims 27 to 32, wherein the first time-frequency resource is a reserved resource corresponding to the first uplink information, and the first time-frequency resource and the second time-frequency resource do not overlap; and
when the transceiver unit sends the first uplink information on the uplink channel, before the sending information on the first time-frequency resource and the second time-frequency resource, the processing unit is further configured to:
map the second uplink information to the second time-frequency resource, and map the first uplink information to the first time-frequency resource, wherein
the sending information on the first time-frequency resource and the second time-frequency resource comprises:
sending the first uplink information on the first time-frequency resource, and sending the second uplink information on the second time-frequency resource; or
when the transceiver unit does not send the first uplink information on the uplink channel, before the sending information on the first time-frequency resource and the second time-frequency resource, the processing unit is further configured to:
map the second uplink information to the second time-frequency resource, and map fourth uplink information to the first time-frequency resource, wherein the fourth uplink information is different from the first uplink information, wherein
the sending information on the first time-frequency resource and the second time-frequency resource comprises:
sending the fourth uplink information on the first time-frequency resource, and sending the second uplink information on the second time-frequency resource.

37. The communications apparatus according to claim 36, wherein
the first time-frequency resource is predefined, or preconfigured by a network device.

38. The communications apparatus according to any one of claims 27 to 32, wherein the second time-frequency resource is a reserved resource corresponding to the second uplink information, and the first time-frequency resource and the second time-frequency resource do not overlap; and
when the transceiver unit sends the second uplink information on the uplink channel, before the sending information on the first time-frequency resource and the second time-frequency resource, the processing unit is further configured to:
map the first uplink information to the first time-frequency resource, and map the second uplink information to the second time-frequency resource, wherein
the sending information on the first time-frequency resource and the second time-frequency resource comprises:
sending the first uplink information on the first time-frequency resource, and sending the second uplink information on the second time-frequency resource; or
when the transceiver unit does not send the second uplink information on the uplink channel, before the sending information on the first time-frequency resource and the second time-frequency resource, the processing unit is further configured to:
map the first uplink information to the first time-frequency resource, and map fifth uplink information to the second time-frequency resource, wherein the fifth uplink information is different from the second uplink information, and
the sending information on the first time-frequency resource and the second time-frequency resource comprises:
sending the first uplink information on the first time-frequency resource, and sending the fifth uplink information on the second time-frequency resource.

39. The communications apparatus according to claim 38, wherein
the second time-frequency resource is predefined, or preconfigured by a network device.

40. A communications apparatus, comprising:
a processing unit and a transceiver unit, wherein
the processing unit is configured to determine a first time-frequency resource and a second time-frequency resource on an uplink channel, wherein the first time-frequency resource is used to carry first uplink information, the second time-frequency resource is used to carry second uplink information, the first uplink information comprises first uplink data information corresponding to a first priority and/or first uplink control information corresponding to the first priority, the second uplink information comprises second uplink data information corresponding to a second priority and/or second uplink control information corresponding to the second priority, and the first uplink information and the second uplink information are separately encoded; and
the transceiver unit is configured to receive information from the terminal device on the first time-frequency resource and the second time-frequency resource.

41. The communications apparatus according to claim 40, wherein
the first uplink data information comprises data information that is scheduled or configured to be sent by the terminal device by using first downlink control information, wherein that the first uplink data information corresponds to the first priority is indicated by meeting one or more of the following conditions: a first bit field in the first downlink control informaition indicates or configures that the first uplink data information corresponds to the first priority, the first downlink control information is located in first search space, the first downlink control information is located in a first physical downlink control channel PDCCH occasion set, the first downlink control information corresponds to a first downlink control information format DCI format, and the first downlink control information corresponds to a first radio network temporary identifier RNTI; or
the first uplink control information comprises uplink control information that is configured or triggered to be sent by the terminal device by using second downlink control information, wherein that the first uplink control information corresponds to the first priority is indicated by meeting one or more of the following conditions: a second bit field in the second downlink control information indicates or configures that the first uplink control information corresponds to the first priority, the second downlink control information is located in first search space, the second downlink control information is located in a first PDCCH occasion set, the second downlink control information corresponds to a first DCI format, and the second downlink control information corresponds to a first RNTI.

42. The communications apparatus according to claim 41, wherein
the second uplink control information comprises uplink control information that is configured or triggered to be sent by the terminal device by using third downlink control information, wherein that the second uplink control information corresponds to the second priority is indicated by meeting one or more of the following conditions: a third bit field in the third downlink control information indicates or configures that the second uplink control information corresponds to the second priority, the third downlink control information is located in second search space, the third downlink control information is located in a second PDCCH occasion set, the third downlink control information corresponds to a second DCI format, and the third downlink control information corresponds to a second RNTI; or
the second uplink data information comprises data information that is scheduled or configured to be sent by the terminal device by using fourth downlink control information, wherein that the second uplink data information corresponds to the second priority is indicated by meeting one or more of the following conditions: a fourth bit field in the fourth downlink control informaition indicates or configures that the second uplink data information corresponds to the second priority, the fourth downlink control information is located in second search space, the fourth downlink control information is located in a second PDCCH occasion set, the fourth downlink control information corresponds to a second DCI format, and the fourth downlink control information corresponds to a second RNTI.

43. The communications apparatus according to claim 41 or 42, wherein
the first uplink control information comprises one or more of the following information: hybrid automatic repeat request-acknowledgment HARQ-ACK information corresponding to the first priority, channel state information CSI corresponding to the first priority, and scheduling request SR information corresponding to the first priority; and
the second uplink control information comprises one or more of the following information: HARQ-ACK information corresponding to the second priority, CSI corresponding to the second priority, and SR information corresponding to the second priority.

44. The communications apparatus according to any one of claims 40 to 43, wherein
the first time-frequency resource is earlier than the second time-frequency resource in time domain, and/or the first time-frequency resource is lower than the second time domain resource in frequency domain; or
a time interval between a time-domain symbol corresponding to the first time-frequency resource and a demodulation reference signal DMRS symbol of the uplink channel is less than a time interval between a time-domain symbol corresponding to the second time-frequency resource and the DMRS symbol, and/or the first time-frequency resource is lower than the second time-frequency resource in frequency domain.

45. The communications apparatus according to claim 44, wherein the first uplink information comprises the first uplink control information corresponding to the first priority, the second uplink information comprises the second uplink control information corresponding to the second priority, and the processing unit is further configured to:
determine a third time-frequency resource on the uplink channel, wherein the third time-frequency resource is used by the terminal device to send third uplink information, the third uplink information comprises third uplink control information corresponding to the first priority, the third uplink control information and the first uplink control information are separately encoded, and the third uplink control information and the second uplink control information are separately encoded, and
receive information from the terminal device on the third time-frequency resource, wherein
the second time domain resource is earlier than the third time-frequency resource in time domain, and/or the second time-frequency resource is lower than the third time domain resource in frequency domain; or
a time interval between the time-domain symbol corresponding to the second time-frequency resource and the demodulation reference signal DMRS symbol of the uplink channel is less than a time interval between a time-domain symbol corresponding to the third time-frequency resource and the DMRS symbol, and/or the second time-frequency resource is lower than the third time-frequency resource in frequency domain.

46. The communications apparatus according to any one of claims 40 to 45, wherein the receiving information from the terminal device on the first time-frequency resource and the second time-frequency resource comprises:
receiving the first uplink information from the terminal device on the first time-frequency resource, and receiving the second uplink information from the terminal device on the second time-frequency resource, wherein
the first uplink information and the second uplink information are mapped to the first time-frequency resource and the second time-frequency resource in a rate matching manner.

47. The communications apparatus according to any one of claims 40 to 45, wherein the receiving information from the terminal device on the first time-frequency resource and the second time-frequency resource comprises:
receiving the first uplink information from the terminal device on the first time-frequency resource, and receiving the second uplink information from the terminal device on a first non-overlapping time-frequency resource, wherein
the first non-overlapping time-frequency resource is a time-frequency resource other than a first overlapping time-frequency resource in the second time-frequency resource, the first overlapping time-frequency resource is an overlapping time-frequency resource of the first time-frequency resource and the second time-frequency resource, the second uplink information is information that is sent on the first non-overlapping time-frequency resource when the terminal device maps the second uplink information to the second time-frequency resource and discards information that is in the second uplink information and that has been mapped to the first overlapping time-frequency resource, and the first uplink information is information that is mapped to the first time-frequency resource when the terminal device discards information that is in the second uplink information and that has been mapped to the first overlapping time-frequency resource.

48. The communications apparatus according to any one of claims 40 to 45, wherein the receiving information from the terminal device on the first time-frequency resource and the second time-frequency resource comprises:
receiving the first uplink information from the terminal device on a second non-overlapping time-frequency resource, and receiving the second uplink information from the terminal device on the second time-frequency resource, wherein
the second non-overlapping time-frequency resource is a time-frequency resource other than a second overlapping time-frequency resource in the first time-frequency resource, the second overlapping time-frequency resource is an overlapping time-frequency resource of the first time-frequency resource and the second time-frequency resource, the first uplink information is information that is sent on the second non-overlapping time-frequency resource when the terminal device maps the first uplink information to the first time-frequency resource and discards information that is in the first uplink information and that has been mapped to the second overlapping time-frequency resource, and the second uplink information is information that is mapped to the second time-frequency resource when the terminal device discards information that is in the first uplink information and that has been mapped to the second overlapping time-frequency resource.

49. The communications apparatus according to any one of claims 40 to 45, wherein the first time-frequency resource is a reserved resource corresponding to the first uplink information, and the first time-frequency resource and the second time-frequency resource do not overlap; and
when the uplink channel carries the first uplink information, the second uplink information is mapped to the second time-frequency resource, and the first uplink information is mapped to the first time-frequency resource, wherein
the receiving information from the terminal device on the first time-frequency resource and the second time-frequency resource comprises:
receiving the first uplink information from the terminal device on the first time-frequency resource, and receiving the second uplink information from the terminal device on the second time-frequency resource; or
when the uplink channel does not carry the first uplink information, the second uplink information is mapped to the second time-frequency resource, fourth uplink information is mapped to the first time-frequency resource, and the fourth uplink information is different from the first uplink information, wherein
the receiving information from the terminal device on the first time-frequency resource and the second time-frequency resource comprises:
receiving the fourth uplink information from the terminal device on the first time-frequency resource, and receiving the second uplink information from the terminal device on the second time-frequency resource.

50. The communications apparatus according to claim 49, wherein
the first time-frequency resource is predefined, or preconfigured by a network device.

51. The communications apparatus according to any one of claims 40 to 45, wherein the second time-frequency resource is a reserved resource corresponding to the second uplink information, and the first time-frequency resource and the second time-frequency resource do not overlap; and
when the uplink channel carries the second uplink information, the first uplink information is mapped to the first time-frequency resource, and the second uplink information is mapped to the second time-frequency resource, wherein
the receiving information from the terminal device on the first time-frequency resource and the second time-frequency resource comprises:
receiving the first uplink information from the terminal device on the first time-frequency resource, and receiving the second uplink information from the terminal device on the second time-frequency resource; or
when the uplink channel does not carry the second uplink information, the first uplink information is mapped to the first time-frequency resource, fifth uplink information is mapped to the second time-frequency resource, and the fifth uplink information is different from the second uplink information, wherein
the receiving information from the terminal device on the first time-frequency resource and the second time-frequency resource comprises:
receiving the first uplink information from the terminal device on the first time-frequency resource, and receiving the fifth uplink information from the terminal device on the second time-frequency resource.

52. The communications apparatus according to claim 51, wherein
the second time-frequency resource is predefined, or preconfigured by a network device.

53. A communications apparatus, comprising a transceiver, a processor, and a memory, wherein the processor is configured to control the transceiver to send and receive a signal, the memory is configured to store a computer program, and the processor is configured to: invoke the computer program from the memory and run the computer program, so that the communications apparatus performs the method according to any one of claims 1 to 13.

54. A communications apparatus, comprising a transceiver, a processor, and a memory, wherein the processor is configured to control the transceiver to send and receive a signal, the memory is configured to store a computer program, and the processor is configured to: invoke the computer program from the memory and run the computer program, so that the communications apparatus performs the method according to any one of claims 14 to 26.

55. A computer-readable storage medium, wherein the computer-readable storage medium stores program instructions, and when the program instructions are run on a processor, the method according to any one of claims 1 to 13 or any one of claims 14 to 26 is performed.
